# EUROPEAN PATENT APPLICATION

(11) **EP 2 151 772 A1**
(43) Date of publication of application: **10.02.2010**
(21) Application number: 09166980.4
(22) Date of filing: 31.07.2009
(51) Int. Cl.: G06F 17/30

(54) **Method and system for using queries for multidimensional databases with databases of other types**

(30) Priority: 01.08.2008 US 85593 P
(71) Applicant: Simba Technologies Inc., Vancouver BC V5Z 1E5 (CA)
(72) Inventor: Johnston, Bruce Patrick, Vancouver British Columbia V6K 2N2 (CA); Seymour, Christopher, Vancouver British Columbia V5Z 1E3 (CA); Chow, Kai Yee, Vancouver British Columbia V5R 2J5 (CA); Cai, Xiaojuan, British Columbia V3K 6C63 (CA); Eckstein, Darryl Jeffry, Vancouver, British Columbia V6G 2G4 (CA)
(74) Representative: Maiwald Patentanwalts GmbH

(57) **Abstract**

The present invention provides a method and system for using queries for multidimensional databases with databases of other types. The method and system determine based on a first query formed in accordance with a first database query language, one or more second queries formed in accordance with a second database query language. The system comprises a decoder for determining if the first query conforms with the first database query language and for providing a first representation of the first query if the first query conforms with the first database query language; an expression optimizer operatively connected to the decoder for optimizing the first representation; a plan builder operatively connected to the expression optimizer for converting the first representation into a second representation; a plan optimizer operatively connected to the plan builder for optimizing the second representation; and a code generation system operatively connected to the plan optimizer for generating the one or more second queries based on the second representation.

## Description

### FIELD OF THE INVENTION

The present invention pertains in general to databases and in particular to aspects of translating multidimensional database queries.

### BACKGROUND

Multidimensional modelling of data and corresponding analysis based on a number of different types of computer databases has gained significant importance over the last decade specifically when seeking to determine valuable information from vast amounts of data, for example in business intelligence applications. This process is often referred to as online analytical processing (OLAP) and has been facilitated by the widespread adoption of multidimensional databases and multidimensional expressions (MDX) database query language. A goal for OLAP with multidimensional databases is scalability. To facilitate extraction of information from the sheer volume of data in a typical database, current solutions focus on generating predetermined summaries of the data stored in the database, store the summaries in a preconfigured "data mart" or "cube" and make the summaries available for further data analysis. This process is often referred to as "aggregation" and the summaries are often referred to as "aggregations" or "aggregates".

Unless the database is multidimensional by nature and supports aggregation, current OLAP solutions need to employ a sufficiently powerful computer or server farm to interface a non-multi-dimensional, for example relational, database that can query the database for data needed to determine the aggregates via batch processes and to host the aggregates in a cube. Batch processing, however, has a number of disadvantages. For example, the computational power needed to perform batch processing increases much faster with increasing amounts of data so that analysis of practically useful amounts of data cannot be performed in a meaningful amount of time and therefore does not scale adequately and cannot be implemented even on a server farm. Furthermore, batch processes often include lengthy sequences of database commands and there may be significant delays between corresponding queries which may have obtained data at different times between which data in the database may have changed. Hence there is no means to ensure aggregates computed based on such queries correspond with data from a predetermined state of the database.

An example of the above approach is Microsoft^{™} Analysis Services (MSAS), which caches information and performs OLAP-related calculations in an OLAP server farm. The server farm typically includes a number of computer servers operatively connected to but separate from the existing database. Although MSAS has a relational OLAP (ROLAP) mode in which it can retrieve data in real-time from an existing relational database, the queries that are generated use simple structured query language (SQL) which only gather raw or simple aggregated data and do not utilize further aspects that may be offered by the relational database. For example, when performing an MDX drill down operation to extract records of detailed data underlying certain summary data in the cube, MSAS itself does the "drilling down" on the records of the relational database.

Therefore there is a need for a solution that overcomes at least one of the deficiencies in the art.

This background information is provided to reveal information believed by the applicant to be of possible relevance to the present invention. No admission is necessarily intended, nor should be construed, that any of the preceding information constitutes prior art against the present invention.

### SUMMARY OF THE INVENTION

An object of the present invention is to provide a method and system for using queries for multidimensional databases with databases of other types.

According to an aspect of the present invention there is provided a system for determining, based on a first query formed in accordance with a first database query language, one or more second queries formed in accordance with a second database query language, the system comprising a decoder for determining if the first query conforms with the first database query language and for providing a first representation of the first query if the first query conforms with the first database query language; an expression optimizer operatively connected to the decoder for optimizing the first representation; a plan builder operatively connected to the expression optimizer for converting the first representation into a second representation; a plan optimizer operatively connected to the plan builder for optimizing the second representation; and a code generation system operatively connected to the plan optimizer for generating the one or more second queries based on the second representation.

According to another aspect of the present invention there is provided a method for determining, based on a first query formed in accordance with a first database query language, one or more second queries formed in accordance with a second database query language, the method comprising determining if the first query conforms with the first database query language and for providing a first representation of the first query if the first query conforms with the first database query language; optimizing the first representation; converting the first representation into a second representation; optimizing the second representation; and generating the one or more second queries based on the second representation.

According to another aspect of the present invention there is provided a computer program product comprising a memory having embodied thereon statements and instructions for execution by a computer, thereby causing the computer to perform a method for forwarding data packets between a first network and a second network, the method comprising the steps of determining if the first query conforms with the first database query language and for providing a first representation of the first query if the first query conforms with the first database query language; optimizing the first representation; converting the first representation into a second representation; optimizing the second representation; and generating the one or more second queries based on the second representation.

### BRIEF DESCRIPTION OF THE FIGURES

Figure 1 illustrates a block diagram of a system according to embodiments of the present invention.

Figure 2 illustrates a block diagram of a decoder according to embodiments of the present invention.

Figure 3 illustrates a class diagram of an expression optimizer according to an embodiment of the present invention.

Figure 4 illustrates an example state machine for use in a system according to an embodiment of the present invention.

Figure 5 illustrates a portion of another example state machine for use in a system according to an embodiment of the present invention.

Figure 6 illustrates a class diagram of software classes for use in optimization rules in a system according to an embodiment of the present invention.

Figure 7 illustrates a block diagram of an explicit pattern matcher for use in a system according to an embodiment of the present invention.

Figure 8 illustrates a subcube of data including empty cells as represented by a multidimensional database query.

Figure 9 illustrates a two-dimensional representation of the empty cells of the subcube illustrated in Figure 8.

Figure 10 illustrates a one-dimensional representation of the empty cells of the subcube illustrated in Figure 8.

Figure 11 illustrates a system for translating MDX queries to SQL queries according to embodiments of the present invention.

Figure 12 illustrates a flowchart of an expression optimization according to an embodiment of the present invention.

Figure 13 illustrates a flowchart for an example expression optimization according to an embodiment of the present invention.

Figure 14A illustrates a state machine for an example expression optimization according to an embodiment of the present invention.

Figure 14B illustrates an explicit pattern matcher for an example expression optimization according to an embodiment of the present invention.

Figure 15 illustrates a flowchart for an expression optimization rule according to an embodiment of the present invention.

Figure 16 illustrates a flowchart for another expression optimization rule according to an embodiment of the present invention.

Figure 17 illustrates a flowchart for another expression optimization rule according to an embodiment of the present invention.

Figure 18 illustrates a state machine for an expression optimization rule according to an embodiment of the present invention.

Figure 19 illustrates a state machine for another expression optimization rule according to an embodiment of the present invention.

Figure 20 illustrates a state machine for another expression optimization rule according to an embodiment of the present invention.

Figure 21 illustrates a flowchart for another expression optimization rule according to an embodiment of the present invention.

Figure 22 illustrates a flowchart for another expression optimization rule according to an embodiment of the present invention.

Figure 23 illustrates a flowchart for another expression optimization rule according to an embodiment of the present invention.

Figure 24A illustrates a state machine for another expression optimization rule according to an embodiment of the present invention.

Figure 24B illustrates an explicit pattern matcher corresponding with the expression optimization rule of Figure 24A.

Figure 25A illustrates a flowchart of another expression optimization rule according to an embodiment of the present invention.

Figure 25B illustrates a flowchart of another expression optimization rule according to an embodiment of the present invention.

Figure 26 illustrates a flowchart of another expression optimization rule according to an embodiment of the present invention.

Figure 27A illustrates a state machine for another expression optimization rule according to an embodiment of the present invention.

Figure 27B illustrates an explicit pattern matcher corresponding with the expression optimization rule of Figure 27A.

Figure 28A illustrates a state machine for another expression optimization rule according to an embodiment of the present invention.

Figure 28B illustrates an explicit pattern matcher corresponding with the expression optimization rule of Figure 28A.

Figure 29A illustrates a flowchart for an optimization according to an embodiment of the present invention.

Figure 29B illustrates a flowchart for another optimization according to an embodiment of the present invention.

Figure 30 illustrates an execution plan for a general MDX MDDataset Non-Non Empty according to an embodiment of the present invention.

Figure 31 illustrates an execution plan for a general MDX MDDataset Non Empty according to an embodiment of the present invention.

Figure 32 illustrates an execution plan for a general MDX Flat Non-Non Empty according to an embodiment of the present invention.

Figure 33 illustrates an execution plan for a general MDX Flat Non Empty according to an embodiment of the present invention.

Figure 34 illustrates an execution plan for a MDX Slicer with WHERE clause according to an embodiment of the present invention.

Figure 35 illustrates an execution plan for a MDX Crossjoin according to an embodiment of the present invention.

Figure 36 illustrates an execution plan for a MDX DrillDownLevel(<set>) according to an embodiment of the present invention.

Figure 37 illustrates an execution plan for a MDX DrillDownLevel(<set>,<level>) according to an embodiment of the present invention.

Figure 38 illustrates an execution plan for a general MDX DrillDownMember according to an embodiment of the present invention.

Figure 39 illustrates an execution plan for a MDX DrillDownLevelTop( <set>, <empty>, <integer>, <measure>) according to an embodiment of the present invention.

Figure 40 illustrates an execution plan for MDX DrillDownLevelTop( <set>, <level>, <integer>, <measure>) according to an embodiment of the present invention.

Figure 41 illustrates an execution plan for a general MDX DrillDownMemberTop according to an embodiment of the present invention.

Figure 42 illustrates an execution plan for a general MDX Except according to an embodiment of the present invention.

Figure 43 illustrates an execution plan for general MDX Hierarchize according to an embodiment of the present invention.

Figure 44 illustrates an execution plan for a general MDX Literal Set according to an embodiment of the present invention.

Figure 45 illustrates an execution plan for an example MDX Literal Set according to an embodiment of the present invention.

Figure 46 illustrates an execution plan for a general MDX TopCount according to an embodiment of the present invention.

Figure 47 illustrates a reduction for a MDX SubQuery on Id(x) according to an embodiment of the present invention.

Figure 48 illustrates a reduction for a MDX Parent SubQuery according to an embodiment of the present invention.

Figure 49 illustrates a reduction for a MDX Union according to an embodiment of the present invention.

Figure 50 illustrates a reduction for a MDX Double Filter according to an embodiment of the present invention.

Figure 51 illustrates a reduction for a MDX SubQuery NOT IN according to an embodiment of the present invention.

Figure 52 illustrates a reduction for a MDX Filter on Union according to an embodiment of the present invention.

Figure 53 illustrates a reduction for a MDX Filter on SubQuery according to an embodiment of the present invention.

Figure 54 illustrates a reduction for a MDX MDDataset NonEmpty according to an embodiment of the present invention.

Figure 55 illustrates a reduction for a MDX Double Project according to an embodiment of the present invention.

Figure 56 illustrates a reduction for a MDX Filter on Project according to an embodiment of the present invention.

Figure 57 illustrates a custom reduction for a MDX Non Empty MDDataset according to an embodiment of the present invention.

Figure 58 illustrates a custom reduction for a MDX Non-Non Empty MDDataset according to an embodiment of the present invention.

Figure 59 illustrates a custom reduction for MDX Non Empty Flattened according to an embodiment of the present invention.

Figure 60 illustrates a custom reduction for MDX Non-Non Empty Flattened according to an embodiment of the present invention.

Figure 61 illustrates a custom reduction for a MDX Slicer according to an embodiment of the present invention.

### DETAILED DESCRIPTION OF THE INVENTION

### Definitions

As used herein, the term "about" refers to a +/- 10% variation from the nominal value. It is to be understood that such a variation is always included in a given value provided herein, whether or not it is specifically referred to.

Unless defined otherwise, all technical and scientific terms used herein have the same meaning as commonly understood by one of ordinary skill in the art to which this invention belongs.

According to an aspect of the present invention there are provided methods and systems for using queries formed according to a first database query language, for example formed for querying a multidimensional database, with databases of other types that can be queried in a second database query language. Methods and systems according to embodiments of the present invention may be configured to determine, based on a first query formed in accordance with a first database query language, one or more second queries formed in accordance with a second database query language. For example, the one or more second queries may be used to extract data from a database that can be queried in the second database query language but not in the first database query language.

According to an aspect of the present invention the one or more second queries are configured to provide data that corresponds to that which could be obtained if the database could be queried with the first query directly. For example, data returned by the first query when executed against a first database includes first data sets, and data returned by the one or more second queries when executed against a second database includes second data sets, and each of the first data sets is included in the second data sets and each of the second data sets is included in the first data sets if the first database and the second database include that data.

A system according to the present invention may comprise a decoder for determining if the first query conforms with the first database query language and for providing a first representation of the first query if the first query conforms with the first database query language; a plan builder operatively connected to the decoder for converting the first representation into a second representation; and a code generation system operatively connected to the plan builder for generating the one or more second queries based on the second representation. A system according to an embodiment of the present invention may be configured to utilize a number of predetermined processing abilities of a database to be able to offload a predetermined amount of processing to the database.

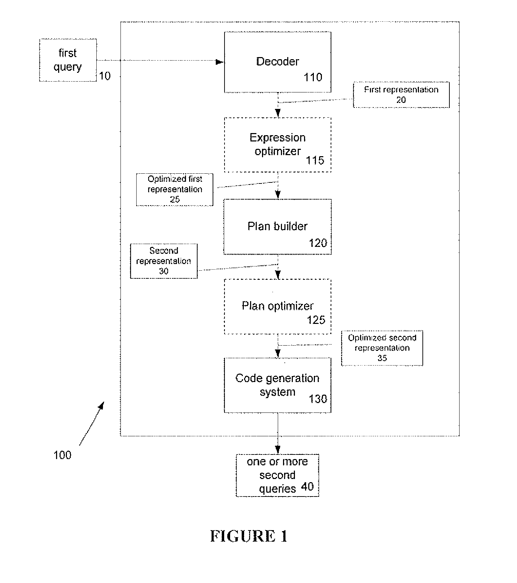

Figure 1 illustrates a block diagram of a system **100** according to an embodiment of the present invention. The system **100** comprises a decoder **110,** a plan builder **120** and a code generation system **130.** The system **100** optionally comprises an expression optimizer **115** and/or a plan optimizer **125.** The system **100** is configured to process each valid first query **10** into one or more second queries **40.** A valid query conforms to the rules of a predetermined first database query language.

The system **100** is configured to receive one or more first queries **10.** The decoder **110** is configured to determine if the first query is a valid query within a predetermined first database query language, for example MDX. The decoder **110** is further configured to provide a first representation **20** of the first query **10** if the first query is valid, that is the first query conforms to the first database query language. If the first query is not valid, the system may be configured to respond in a predetermined way, for example, by generating a predetermined user notification or error message.

The first representation corresponds to a predetermined encoded form of the first query, for example a parse tree or expression tree that can be further manipulated according to predetermined rules by a machine or a computer. Parse or expression trees and their generation would be readily understood by a worker skilled in the art.

The decoder **110** may be operatively connected to plan builder **120** for providing the first representation **20.** An expression optimizer **115** may be provided to operatively interconnect decoder **110** and plan builder **120.** The expression optimizer **115** may be configured to perform a number of predetermined manipulations of the first representation **20** in accordance with one or more predetermined rules and performance metrics associated with the elements of the first representation **20** in order to determine an optimized first representation **25.** The performance metrics may include measures to quantify computational effort or interdependency between elements of the first representation **20** or a number of other aspects as described below, for example.

The plan builder **120** is configured to process the first representation **20** or, optionally, the optimized first representation **25,** into a second representation **30.** According to an embodiment of the present invention, the second representation **30** provides a decomposed form of the first representation **20** or optimized first representation **25** into a second representation comprising predetermined atomic elements (not illustrated), which can be further processed, optimized, and individually transformed into instructions for forming the one or more second queries **40** by the code generation system **130** as further described below. The plan builder **120** is operatively connected to the code generation system **130** directly or optionally through a plan optimizer **125.**

The code generation system **130** is configured to transform the second representation into one or more second queries **40** formed in accordance with a predetermined second database query language, for example queries formed in SQL. The one or more second queries **40** may be executed against a corresponding database in order to extract the information as encoded in the first query.

The plan optimizer **125** may be configured to perform a number of predetermined manipulations of the second representation **30** in accordance with one or more predetermined rules and performance metrics associated with the elements of the second representation **30** in order to determine an optimized second representation **35.** The performance metrics may include measures to quantify computational effort or interdependency between elements of the second representation **30** or a number of other aspects as described below, for example. According to an embodiment of the present invention the plan optimizer **125** may be configured with rules and performance metrics depending on the second database query language.

According to an embodiment of the present invention the plan optimizer **125** may be configured with rules and/or corresponding performance metrics that can specifically employ database query functions only provided by certain dialects of SQL, in order to permit better utilization of the computational capabilities of an underlying database for which the one or more second queries are generated. This can improve the processing capabilities of a system according to an embodiment of the present invention. For example, in a system that converts MDX to SQL queries, SQL queries, including commands, may be generated that can perform large portions of the processing for a MDX DrillDownLevelTop() function in the underlying database. Further, this may enable the operation of a system according to an embodiment of the present invention on a single computer rather than multiple computers in a server farm, for example. Better utilizing an existing database, instead of having to obtain, setup, and maintain a large number of additional servers required to otherwise handle the computational load as well as improving accuracy and responsiveness of queries can provide a significant benefit.

### Decoder

The decoder is configured to determine if the first query is a valid query within a predetermined first database query language, for example MDX. The decoder is further configured to provide a first representation of the first query if the first query is valid, that is the first query conforms to the first database query language. If the first query is not valid, the decoder and/or system may be configured to respond in a predetermined way, for example, by generating a predetermined user notification or error message.

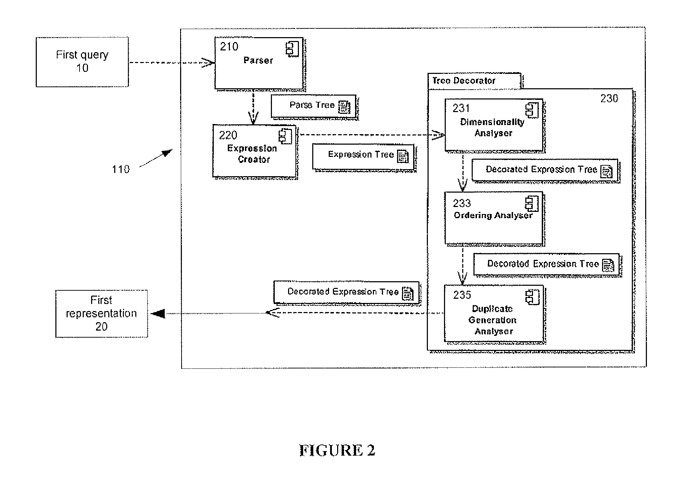

Figure 2 illustrates a block diagram of a decoder **110** according to some embodiments of the present invention. The decoder processes a first query **10** into a first representation **20** and determines if the first query is a valid query. The decoder **110** comprises a parser **210,** an expression creator **220** and a tree decorator **230.** The parser **210** is operatively connected to the expression creator **220** which in turn is operatively connected to the tree decorator **230.** The parser **210,** while parsing the first query **10,** generates a parse tree. The expression creator **220** generates a different form of the parse tree by transforming it into a different format referred to as an expression tree which is suited for further processing. The process of parsing and generating parse trees and expression trees would be readily understood by a person skilled in the art. The decoder **110** may be configured so that a determination whether the first query is valid may be made by the parser **210** or the expression creator **220.**

The expression tree is then provided to the tree decorator **230** which further analyzes the first query **10** in order to determine attributes of the first query that are not encoded in the expression tree but that are relevant for further processing by the plan builder **120** or optionally the expression optimizer **115.** The tree decorator stores the attributes as metadata in the expression tree. This process may be further referred to as tree decoration. Tree decoration may involve a number of processing stages including analyzing the dimensionality, ordering or possible duplicate results generation of the first query within the first database query language. For this purpose the tree decorator **230** may comprise one or more of a dimensionality analyzer **231,** an ordering analyzer **233** and a duplicate generation analyzer **235.** The tree decorator **230** illustrated in Figure 2 comprises all three analyzers and the expression tree is first processed by the dimensionality analyzer **231,** then by the ordering analyzer **233** and subsequently by the duplicate generation analyzer **235.** Other embodiments (not illustrated) may perform these analyses in a different order and/or employ only one or two of the analyzers or utilize additional analyzers. As the expression tree is processed, each analyzer **231, 233** or **235** may further decorate the expression tree. The output of the decoder **110** is the final decorated expression tree or first representation **20.**

According to an embodiment of the present invention, the dimensionality analyzer **231** and duplicate-generation analyzer **235** are configured to decorate the expression tree in one or more passes from the bottom to the top of the expression tree and determine corresponding information and metadata as the respective analyses progresses up the expression tree. According to an embodiment of the present invention, the order analyzer **233** is configured to decorate the expression tree in one or more passes from top to bottom, determining order-preservation requirements that elements that are higher up impose on elements that are lower in the hierarchy of the expression tree.

### Dimensionality Analyzer

According to embodiments of the present invention, the dimensionality analyzer is configured to perform a bottom-up analysis of the expression tree. The dimensionality analyzer may be configured to use domain knowledge about previously analyzed elements of the expression tree to generate information about the hierarchies and levels that may be found in the outputs of elements of the expression tree and save this information as metadata decorations.

According to an embodiment of the present invention the information encoded in the metadata decorations and/or its applicability to elements of the expression tree may depend on the type of the corresponding expression. For example, a level decoration on a set expression indicates that members of that level may be found in the set, whereas a hierarchy decoration on a level expression means that the level is found in the given hierarchy. According to an embodiment of the present invention hierarchy and/or level decorations may be characterized by their "definitiveness" which in turn may be indicated with a corresponding attribute or flag. For example, if, in MDX, a set expression has a hierarchy decoration linking it with the [Product].[product] hierarchy with MAYBE definitiveness, it means that members of that hierarchy might be found in the resulting set. If the decoration were instead marked DEFINITE, it would mean that members of the hierarchy would definitely be found in the resulting set.

According to an embodiment of the present invention, as the dimensionality analyzer works its way up through the expression tree, adding hierarchy and level metadata decorations, it may conduct semantic checks on elements of or the entire expression tree. The semantic checks may be used to identify semantic errors before further processing of the query is performed. Semantic errors may arise from an incorrect first query. Correct semantics may be important, for example, in a system according to an embodiment of the present invention that includes an expression optimizer, which may be configured with optimization rules that may only be performed if the expression tree conforms to predetermined semantics. Furthermore, the optimization rules in the expression optimizer may need to be adequately configured such that they do not generate semantic errors.

Depending on the embodiment of the present invention first queries and/or execution plan forms that are not supported by the system may or may not be marked as semantic errors. First queries that aren't supported by the system may be processed by the system as far as possible before rejecting them. For example, the system may be configured to process a "pre-drilled" form of DrillDown functions down into the planner where it rejects them. Accordingly, the dimensionality analyzer and expression optimizer may be configured to let these constructs go by without raising an error.

### Ordering Analyzer

An ordering analyzer according to embodiments of the present invention may be configured to perform an analysis of the expression tree from top to bottom in a top-down manner, marking elements of the expression tree with decorations indicating whether or not they require preserving ordering. The ordering analyzer may be configured with predetermined rules and how to apply the predetermined rules about ordering preservation requirements imposed by predetermined expressions, functions or methods as expressed in the expression tree and/or the first query. For example, the rules may provide information about inheritance of order requirements among elements of the expression tree in a transitive manner, for example, information regarding how to transfer ordering requirements to expressions that are lower in the expression tree. The ordering analyzer may further be configured to recognize elements of the expression tree that cannot be reordered.

According to an embodiment of the present invention the ordering analyzer may be configured to perform a top-down traversal along each branch of the expression tree. The ordering analyzer may be configured to maintain a suitable stack mechanism for recording information about ordering requirements from elements of the expression tree that are higher up in the tree-hierarchy. For example, the most recent item on the stack may be used to store information about the ordering requirement imposed by the parent expression. At the beginning of an analysis of a branch, the stack may be initialized with data encoding ordering requirements imposed by the expression at the branch node on the child expressions in the branch. The ordering analyzer may then recursively analyze information in the stack about ordering information of the parent expressions during expression tree traversal while also taking into account the position of a child expression among other child expressions. Given a position of an expression in the expression tree, the position of the current expression within its parent, and the ordering required from the parent expression, the ordering analyzer may be configured to determine whether or not the instant expression will generate ordered output. An expression may be required to produce ordered output if ordering is an integral part of the expression, for example Hierarchize() and TopCount() in MDX, if it is an expression that transitively passes on the requirement for ordering from above.

The metadata generated by the ordering analyzer may be utilized by other system components. For example, in a system including an optional expression optimizer for optimizing the expression, the expression optimizer may be configured to modify the expression tree in accordance with the metadata generated by the ordering analyzer. Furthermore, the plan builder may utilize this information.

### Duplicate-Generation Analyzer

According to embodiments of the present invention, the duplicate-generation analyzer is configured to perform a bottom-up analysis of the expression tree. The duplicate-generation analyzer may be configured to determine if output of elements of the expression tree may generate duplicate data, for example duplicate tuples or members in MDX. The duplicate-generation analyzer stores corresponding information as metadata in the expression tree.

Information about what elements of the expression tree may generate duplicates may be relevant for the processing of duplicates by other elements of the expression tree. For example, when a function, method or expression may need to process duplicates in its input in a predetermined way.

The metadata generated by the duplicate-generation analyzer may be utilized by other system components. For example, in a system including an optional expression optimizer for optimizing the expression, the expression optimizer may be configured to modify the expression tree in accordance with the metadata generated by the duplicate-generation analyzer. Furthermore, the plan builder may utilize this information.

### Expression Optimizer

The expression optimizer is configured to attempt to perform a number of predetermined optimizations of the decorated expression tree. As illustrated in Figure 1, in some embodiments the expression optimizer **115** receives a decorated expression tree from the decoder **110** and provides an optimized expression tree to the plan builder **120.** The configuration of the expression optimizer may affect the configuration of the tree decorator and/or the plan builder.

The expression optimizer is used to optimize expression trees. Optimizations may include replacing predetermined function forms with simpler forms, expressing variations of expressions in predetermined generic forms, and combining redundant expressions. Optimizations may loosen ordering restrictions on nested expressions.

According to an embodiment of the present invention, the expression optimizer may be configured with predetermined optimization rules which the optimizer may try to apply against the expression tree. Each optimization rule may include one or more patterns encoding one or more conditions for matching against expressions of elements of the expression tree, and a transformation to be applied on a successful match. Optionally an optimization rule may comprise instructions for generating and adding metadata decorations to modified elements of the expression tree.

The expression optimizer may both be a producer and a consumer of metadata information, for example of "order-preserving" metadata. It may process metadata through optimization rules, and generate and add metadata through corresponding instructions when transforming the expression tree. For example, an MDX axis imposes a requirement of ordered output on the outermost set function. Bubbling up a Hierarchize call to the outermost function on an axis so that it can "cancel out" ordering requirements for nested functions may be useful under certain circumstances. UnOrder, by virtue of the fact that it sometimes has no effect (e.g. -- inside Top/BottomCount) may not be useful as a general-purpose token indicating "not-order-preserving". Expression optimization rules that check for an "enclosing UNORDER" may instead be transformed to check if ordering is required.

The expression optimizer may be configured to apply each of the optimization rules one or more times in a predetermined manner against the expression tree. While processing each rule, if a portion of the expression tree is found that matches the pattern of the rule, the transformation specified in the rule is applied to the portion of the expression tree. The expression optimizer can then progress to applying the next rule. According to an embodiment of the present invention, this process may be repeated, for example recursively, until no more conditions of the optimization rules apply. At this point the expression tree may be referred to as an optimized expression tree.

Optimization rules according to an embodiment of the present invention can be designed such that repeat application of the rules can lead to an optimized expression tree in finite time. Further repeat application of the same optimization rules may not further optimize the expression tree. An expression optimizer according to an embodiment of the present invention can be configured with one or more stop conditions to avoid mutual recursion caused by repeat application of optimization rules. For example, applying one optimization rule may cause a transformation of the expression tree that another optimization rule may reverse, which may lead to an infinite loop.

According to an embodiment of the present invention, a predetermined metric may be used to quantify one or more predetermined aspects of the expression tree as it undergoes optimization. The metric may be used to determine a stop condition, for example, to stop the optimization when the metric no longer decreases. According to some embodiments of the present invention, such a metric may be applied during optimization or in a predetermined manner in order to characterize the potential of a set of optimization rules for mutual recursion. Combinations of optimization rules may then be determined such that the set typically does not lead to mutual recursion. Such combinations of optimization rules may be employed in an embodiment of the present invention, without the expression optimizer having to verify a stop condition during processing.

Furthermore, in some embodiments, optimization rules are configured to preserve correct semantics and not add semantic errors to an optimized expression tree. For example, optimization rules may not be allowed to violate semantic constraints imposed by metadata originating from the dimensionality analyzer. An optimization rule that is incapable of introducing semantic errors, and is also incapable of leading to mutual recursion alone or in conjunction with other rules being implemented, may further be referred to as correct.

According to an embodiment of the present invention an expression optimizer may be configured to transform order-preserving elements of the expression tree into non-order-preserving expressions while preserving the function of the expression tree. Order-preserving variants may require the plan builder to generate more complex second representations.

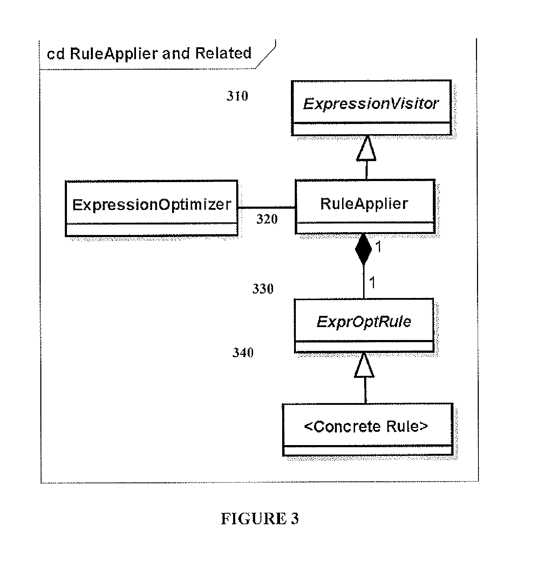

Figure 3 illustrates a class diagram of the expression optimizer. The ExpressionOptimizer provides a loop for visiting the expression tree for each optimization rule, and also holds the logic for stopping the visits when all of the rules have been completed. The ExprOptRule is an abstract class **330** encompassing substantially all of the expression optimization rules. Each specific optimization rule will be implemented in a subclass of ExprOptRule. The <Concrete Rule> component **340** marks an example subclass. The RuleApplier **320** is an ExpressionVisitor **310** that holds an ExprOptRule. A RuleApplier will visit the whole expression tree, searching for a node that is the root of a subtree that matches its ExprOptRule's pattern. When a successful match is found, the RuleApplier instructs the ExprOptRule to mutate the tree, and then the RuleApplier's visit is complete. After the visit is finished, the ExpressionOptimizer should be able to get information from the RuleApplier about whether or not the ExprOptRule has been applied.

According to an embodiment of the present invention an ExprOptRule may not be able to conduct mutations by itself. For example, if the mutation that's to be done involves substituting the root node of the matched subtree with a new expression, since the ExprOptRule doesn't know about the parent node of the root of its matched subtree, it may not be able to conduct the substitution. An ExprOptRule according to an embodiment of the present invention may be configured to pass the new expression and the node that needs to be substituted or a reference thereto to a RuleApplier. The RuleApplier may be configured to perform the corresponding substitution subsequently.

New and/or modified expression nodes that may be the result of a mutation typically hold accurate metadata decorations. Accordingly, optimization rules according to the present invention may include instructions describing how to generate corresponding metadata decorations for new and/or modified nodes, for example, based on information from the original nodes. A system according to the present invention may be configured to maintain the metadata of nodes included in the mutated form but not listed in the description of metadata decoration changes for an optimization. Furthermore, level and/or hierarchy decorations between nodes may need to maintain "definitiveness". Rules that require introducing new level and hierarchy decorations may include "DEFINITE" or "NON-DEFINITE" information.

According to an embodiment of the present invention one or more optimization rules may be implemented in software code explicitly rather than through a software framework that applies rules stored in a predetermined manner. A software framework may be implemented using a state machine or by explicitly matching patterns of optimization rules.

### Expression Optimization State Machine

A state machine may comprise one or more state machines. Each state machine may be configured to check expressions included in the expression tree, function names and function types and optional conditional tests based on metadata decorations.

According to an embodiment of the present invention a state machine may be configured assuming that expressions in the expression tree are well formed. According to another embodiment of the present invention a predetermined number of checks for possible error conditions in state machines may be performed. State machines according to some embodiments of the present invention may be configured to consider a number of possible input tokens for transitions out of a given state. State machines according to some embodiments of the present invention may be configured so erroneous groups of tokens exit in an "Error" state.

When employing a state machine an optimization rule is applied and the expression tree is transformed accordingly only when the state machine reaches an "accept" state for the optimization rule. A state machine according to an embodiment of the present invention may be fed input tokens from a process performing a pre-order traversal of an expression subtree. This process may feed tokens corresponding to function names or method names for function or method invocation nodes, flags for flag nodes, and expression types, for example ConstantValueExpression and LiteralSetExpression in MDX, or other expressions.

The input to a state machine according to an embodiment of the present invention begins with a token corresponding to a "proposed root node". If there's a matched pattern, it will be rooted at this node. As the state machine progresses, each labelled transition coming out of a state in the state machine corresponds to consuming a token. There is one special token that may be given as input to a state machine according to an embodiment of the present invention: "NoMoreChildren". This token indicates that a group of children has been exhausted. After visiting all of the children of a given node and their subtrees, the "NoMoreChildren" token will be produced as traversal moves back up the expression tree. Even if a node has no children, a "NoMoreChildren" token will still be produced to let the state machine know that traversal has gone up. This token lets the state machine keep track how low the expression tree traversal is in the tree.

### State Transitions

Transitions out of states in the state machine correspond to consuming tokens. Transitions are labelled with "x" or "x/y" notation, indicating that the transition should be undertaken if the next input token matches the "x" pattern. The "x" pattern may indicate an expression type, for example ConstantValueExpression, LiteralSetExpression, a function or method, for example Hierarchize, .Members, or a flag, for example, POST, RECURSIVE. It may also indicate the special token "NoMoreChildren". To encompass broad classes of nodes, patterns may include the logical operators "OR" and "NOT", and parentheses for grouping. For example, the pattern "NOT( NoMoreChildren OR LiteralSetExpression)" may match against tokens that are neither a NoMoreChildren token nor a literal set expression. The special pattern "any" may be used to match an input token.

According to an embodiment of the present invention each state machine may be configured so that each state is characterized by only one outbound transition for each possible input token. That is, for a given state and input token, there should be one and only one feasible way to exit the state.

The "y" part of an "x/y" transition indicates actions that should be performed on a successful match against the "x" pattern. These actions may include saving nodes or other information in variables. For example, a "POST / hasPost = true" transition is proceeded along when a POST flag is consumed, and has the side effect of setting the "hasPost" variable to "true". This "hasPost" variable may be referred to later in the machine. Multiple actions can be assigned to a transition, separated by commas. The token consumed in making the transition may be saved as the first action in a transition. For example, "Hierarchize / save in arg0, DST" describes saving the Hierarchize node in the variable arg0 and sending a "SkipChildren" message. The SkipChildren message is discussed in the next section.

According to an embodiment of the present invention an assertion may be performed. The action "assert <x>" may lead to an error state if "<x>" is not true. If an assertion is the first action in a transition, it can refer to the token being consumed implicitly. For example, the transition "any /assert type = SET" may correspond to consuming any token, but checking to make sure that the entity type for the token is SET. If the token is NoMoreChildren, or some non-set expression like ".Levels(i)", then an error should result.

### Skipping Child Nodes

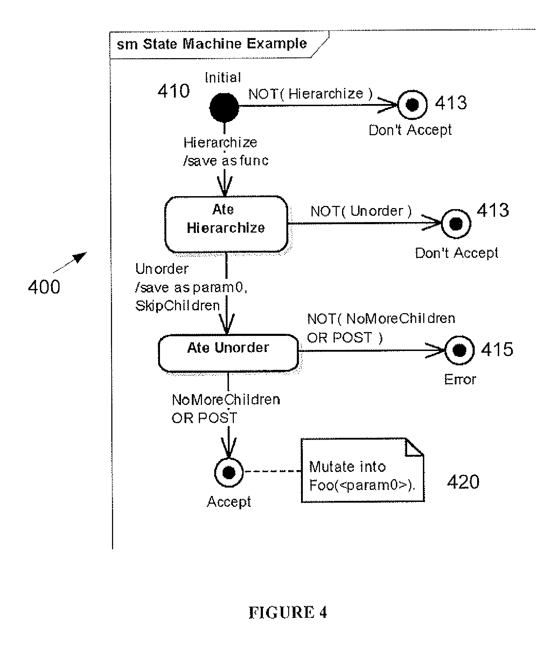

According to some embodiments, once a node has been processed, it may not be necessary to have to process all its children. Figure 4 illustrates an example of corresponding state machine **400.** The state machine **400** processes a rule that involving matching the pattern "Hierarchize(Unorder(...)[, POST])" and convert it into "Foo(Unorder(...))" **420,** using the Unorder node in the input.

The initial state **410** of the state machine is indicated by a black dot and labelled "Initial". The end states of the state machine are marked by circled dots and are labelled "Accept" **411,** "Don't Accept" **413,** or "Error" **415.** An "Accept" state marks that the pattern has been matched and that the associated mutation can be undertaken. A "Don't Accept" state marks a failure to match the optimization rule's pattern. An "Error" state signifies that there is something wrong with the input tokens, for example the token is not properly formed.

For this specific example, when matching the pattern, parameters of the Unorder node may not need to be considered. Accordingly, a system according to an embodiment of the present invention may be configured to instruct the component that feeds input to the state machine that no further descendents of the Unorder node need to be provided. This may be accomplished by sending a "SkipChildren" message back to that component. After sending a SkipChildren message, the next input token may be the next sibling of the node, or a "NoMoreChildren" indicating that there are no more family member nodes in the respective root node. In the example illustrated in Figure 4, the next input token after sending the SkipChildren message may be a "POST" node or "NoMoreChildren", for example.

It is noted that sending a "SkipChildren" message may negate the "NoMoreChildren" which may be returned after returning from traversing a node's children. In this example "NoMoreChildren" may be expected at the end because Unorder is the last child of the Hierarchize. This does not necessarily indicate that no more Unorder children exist.

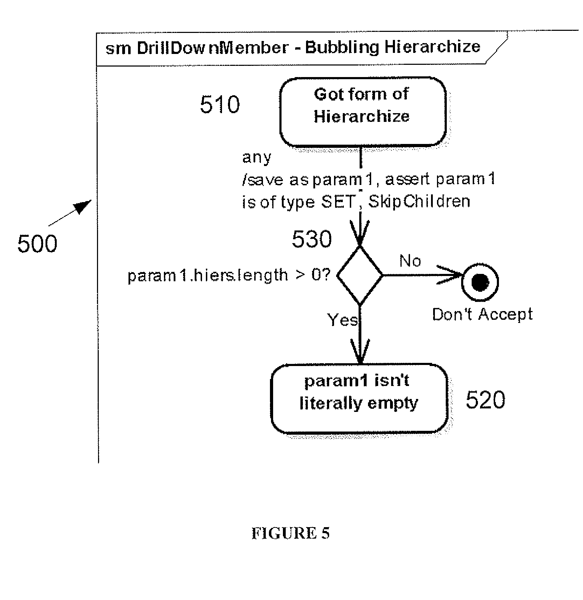

In some embodiments, besides state-to-state transitions predicated on input tokens, a state machine may also include transitions to and from alternatives referred to as "choices". Figure 5 illustrates a fragment of an example state machine **500** including states **510** and **520,** and a choice **530.** The choice **530** is associated with some a condition based on information about nodes that have been previously been saved. In general there are two transitions from a choice: a "Yes" transition and a "No" transition, which mark the paths to take based on the response to the condition. Each transition may be associated with an action which may be indicated in "x/y" notation. The input to a choice can be a transition from a state or a transition from another choice.

The example state machine **500** can proceed from the "Got form of Hierarchize" state **510** along to the choice **530** based on an input token. The input token may be saved as "param1". If, for example, the input token is an MDX node of type SET, traversal may be skipped into its descendants. The condition associated with the choice is "param1.hiers.length > 0?". If true, the state machine **500** proceeds along the "Yes" transition to the "param1 isn't literally empty" state. Otherwise, the state machine **500** proceeds along the "No" transition to a "Don't Accept" terminal state.

It is noted that for certain expression optimization rules that require analyzing a single node only and do not involve visiting respective child nodes, corresponding state machines may be configured to include one or more choices but one terminal state only. Such state machines may be referred to as flowcharts. Flowcharts and state machines for other optimization rules may be embodied in the present invention in different ways. For example, state machines for complex rules may require a sub-system for feeding input tokens into generic state machines. Flowcharts, on the other hand, may be embodied directly in software code that can manipulate a single expression node.

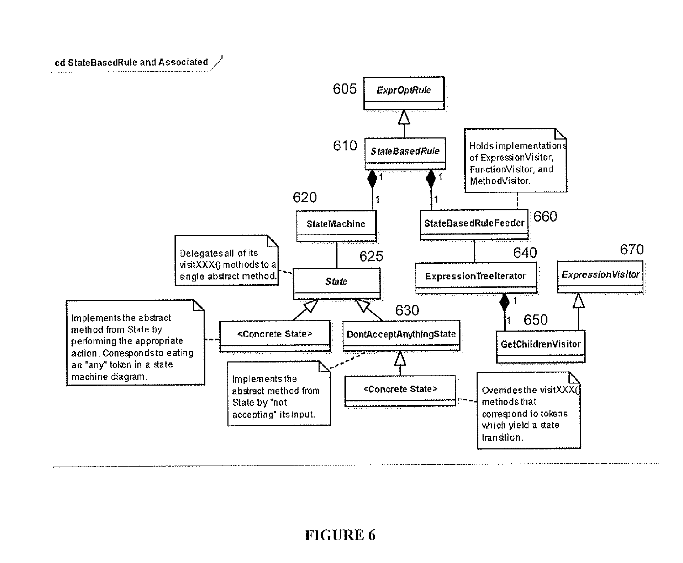

Figure 6 illustrates a class diagram of a software class ExprOptRule **605** and its subclasses and/or instances for use in building expression optimization rules with state machines according to an embodiment of the present invention. The StateBasedRule **610** which provides an abstract subclass of ExprOptRule **605** that may be used to implement the common logic for optimization rules in a state machine. A StateBasedRule **610** may be associated with a StateBasedRuleFeeder **660** that provides tokens. Tokens may include expressions and predetermined functions or methods, as well as flags and the special "NoMoreChildren" token. The "NoMoreChildren" token is discussed in greater detail later in this document.

Each StateBasedRule **610** instance is tied to a StateMachine **620.** When the rule is fed a new token through a visitXXX() method, it redirects the input to its StateMachine. The StateMachine handles pattern matching and condition checking for the optimization rule. After processing a sequence of tokens, it will eventually return a "don't accept", "accept", or "error" message. The StateBasedRule will check this return value and take appropriate action, either by telling the RuleApplier that the pattern did or didn't match or by raising an exception.

The StateMachine will implement the "State" **625** design pattern. A StateMachine instance holds a reference to a specific State. When the StateMachine is fed new input, it will delegate this input to its State. Based on the input, the State **625** may then tell the StateMachine to transition to a different State. States will implement visitXXX() methods for all of the possible tokens that a State can take in. The base class State will redirect all of its visitXXX() methods to delegate to a single abstract method, called "visitAny()". Subclasses will implement this method in order to provide a default mechanism for dealing with inputs that don't fit any of the visitXXX() methods they override.

The DontAcceptAnyState **630** is a concrete subclass of State. It implements the visitAny() method as always resulting in a "don't accept" message. Subclasses of DontAcceptAnyState will use this implementation of visitAny() to deal with inputs that result in transition to a "don't accept" state. Such a subclass will override visitXXX() methods for transitions that lead to a non-"don't accept" state.

The ExpressionTreeIterator **640** is a component that can be used to blindly iterate through an Expression Tree in a depth-first pre-order fashion. We say "blindly" here because the ExpressionTreeIterator doesn't know anything about the expressions it visits, they're all just of the "Expression" type. ExpressionTreeIterator does not subclass Expression Visitor **670.** Instead, it keeps some sort of stack of the ancestor expressions it's visited so far and uses a GetChildrenVisitor **650** to retrieve the children of a given expression. GetChildrenVisitor subclasses Expression Visitor and contains the domain-specific logic for retrieving the children, in a well-defined order, of instance of any of the Expression subtypes.

The StateBasedRuleFeeder **660** holds components that implement the ExpressionVisitor, FunctionVisitor, and MethodVisitor interfaces. It is also associated with an ExpressionTreeIterator, which it uses to traverse the Expression Tree. A StateBasedRuleFeeder translates Expression Tree traversal information into tokens suitable for consumption by a StateMachine. When the ExpressionTreeIterator visits new Expressions, the ExpressionVisitor implementation will be used to send a visitXXX() method to the StateMachine. When a function/method is visited, the ExpressionVisitor implementation will redirect to the FunctionVisitor/MethodVisitor implementation, which will then call the suitable visitXXX() method on the StateMachine. When the ExpressionVisitor() encounters a flag, it will redirect to a suitable visitXXX() method on the StateMachine as well (such as visitAllFlag() and visitRecursiveFlag()). When the ExpressionTreeIterator goes back up an Expression Tree to a node that's already been visited, the StateBasedRuleFeeder will send a "NoMoreChildren" token to the StateMachine to indicate that traversal has popped up a level. More information on "NoMorechildren" is given later in this document. Note that StateBasedRuleFeeder is not meant to be subclassed. All StateBasedRule subclasses will use instances of this exact class. More information on "NoMoreChildren" is provided herein.

Certain optimizations require that pieces of data and expressions be saved during progression through the state machine, so that they can be used in transforming the expression tree after the state machine has found a match. This storage mechanism may be implemented in rule-specific subclasses of StateMachine. States may be configured to tell the StateMachine to store specific pieces of data. Alternatively, States may save this information directly in instances of associated StateBasedRule subclasses.

A state machine for optimizing an expression tree may make use of a message that may be sent from the state machine to its feeder. Such a message may be used to indicate that the children of the last token should be skipped in the feeder's traversal through the expression subtree. According to an embodiment of the present invention support for this message may be implemented by having the StateMachine return a boolean value after processing an input token. The boolean value would indicate whether or not children of the last token should be skipped.

### Expression Optimization Explicit Pattern Matcher

According to embodiments of the present invention an explicit pattern matcher may comprise trees of nodes that correspond with portions of the expression tree. Each node may match an expression, function, method, or flag a node directly by name, for example ConstantValueExpression, Hierarchize, or POST if the first query is in MDX. The optimization may utilize a predetermined matcher node that can be used to match a node in the expression. This process may be referred to as "rooting". An expression node that matches a placeholder node may have none, or one or more child nodes.

Each matcher node may be associated with a "saving" or "pushing into a queue" action. Nodes may be linked with normal 1:1 links or links with multiplicities: "?" (0 or 1), "*" (0 or more), or "<n>+" (n or more). Each node may also be associated with a series of boolean conditions. To consider a node matched, all checked conditions may need to be "true". Pattern matchers may also include a group of multi-node conditions that must be evaluated after each individual node is matched. All of these conditions may need to be true to deem a pattern match successful.

An explicit pattern matcher according to the present invention may be implemented using a base class/interface for all of the "matcher nodes". There may be a subclass for placeholder nodes. Separate classes for expression-, function-, method- and flag-matching nodes may be used. Matcher nodes may store links to their child nodes which each may include multiplicity information. Single-node checks may be implemented as functors attached to nodes. The matcher node tree may be stored along with a functor encompassing all the multi-node checks in an instance of a "pattern matcher" class which may be a subclass off of ExprOptRule, and may be activated by the RuleApplier along with other optimization rules.

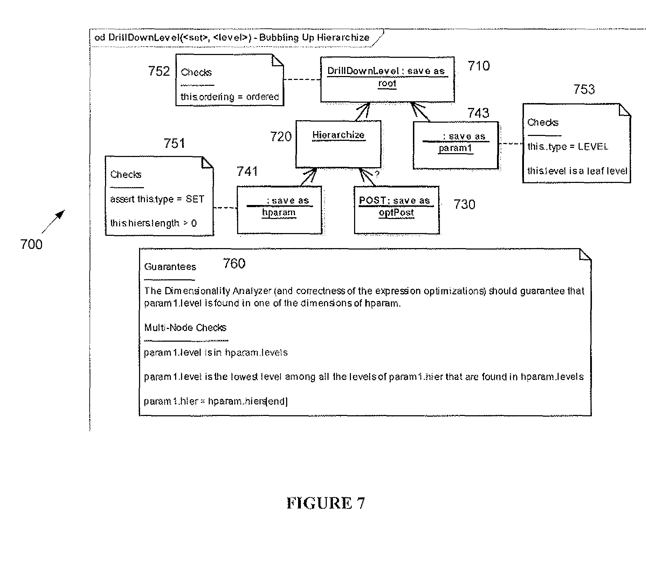

Figure 7 illustrates a block diagram of an example matcher **700** including a few MDX expressions according to an embodiment of the present invention. In general, a matcher has a tree structure similar to an expression tree but additionally includes a number of conditions. The matcher tree can be compared against a portion of or an entire expression tree. If each node in the matcher tree matches has a corresponding node in the corresponding portion of the expression tree and all conditions in the matcher tree are "true" when applied, then the pattern match is deemed successful.

The example matcher **700** includes a DrillDownLevel node **710** and a Hierarchize node **720** that can be matched against corresponding function invocation nodes in an expression tree. The matcher **700** further includes a POST node **730,** which can be matched against a corresponding POST flag node in an expression tree. The nodes **741** and **743** indicated by three underscores "_" are placeholders, which can be matched against adequate arbitrary portions of an expression tree in the corresponding locations. As indicated in Figure 7 by "save as <variable name>", matcher nodes may save matched expression nodes in a corresponding variable that may be manipulated subsequently, for example, when conducting multi-node checks and/or during tree transformation.

Links between nodes in the example matcher **700** that are not annotated mark 1:1 parent:child relationships. The POST node **730,** which is marked with a "?" indicates that the child node is optional. The child node in the example matcher **700** is a POST which indicates that the matcher can match against an expression like "DrillDownLevel(Hierarchize(_), _)" or an expression like "DrillDownLevel(Hierarchize(_, POST), _)". The POST matcher node may save the matched expression node in the "optPost" variable. The optPost variable will be set to "NULL" if the corresponding portion of the expression tree does not include a POST.

In addition to the "?" multiplicity, node links may also be marked as "*" and "<number>+" (the latter are not illustrated). A "*" multiplicity can indicate that none or more child nodes of the given type may occur in the given relative position. The "<number>+" multiplicity allows for <number> or more of this sort of child node in this relative position. According to an embodiment of the present invention, when saving nodes under "*" or "<number>+" links, a "push into queue <queue variable name>" may be used instead of "save as <variable name>", so that multiple children can be saved in the same data structure.

In a successful pattern match, every expression node must be accounted for by the matcher. The only matcher node that may encompass an arbitrary expression subtree is the placeholder _ node. For example, the example matcher **700** only matches a Hierarchize() call with 1 or 2 children but not a Hierarchize() call with 3 children, for example. A matched POST node, furthermore, can have no children. On the other hand, expression nodes that match against the _ matcher nodes for param1 and hparam may have any number of children.

Some nodes of the example matcher **700** are associated with notes **751, 753** and **755** marked "Checks" which are Boolean checks or conditions that need to be true as part of a successful pattern match. Checks may refer to the corresponding matched expression node as "this". For example, our _ node at the bottom has a check "this.hiers.length > 0". If a node in the expression tree doesn't meet the corresponding condition, the pattern is not a match. According to some embodiments of the present invention, some checks may involve assertions. For example, node **741** is associated with note **751** which includes a check "assert this.type = SET". If the entity type of the matched node is SET, the check returns true, otherwise, it reports an error.

Note **760** includes guarantees made by the dimensionality analyzer and also includes a number of checks involving multiple nodes referred to as "Multi-Node Checks". Different embodiments may perform the multiple node checks before or after the single node checks. Multi-node checks must be met before declaring a pattern match successful.

### Expression Optimization Rules

Expression optimization rules may comprise a pattern matching element, a transformation which may be also referred to as a mutation, and instructions for generating metadata decorations for new and modified nodes of the expression tree. According to an embodiment of the present invention optimization rules may be implemented using state machines and/or explicit pattern matching.

Optimization rules involve traversing and examining expression tree nodes. The notation used herein for describing the manipulation of these expression tree nodes may be as described below. It is noted that there a limited amount of information may be determined about a child node without actually processing the corresponding part of the expression tree, for example in a state machine or an explicit pattern matcher.

According to an embodiment of the present invention, expression nodes may be stored in named variables, for example "x" and "param1". The following information may be provided using "<element>.<accessor>" notation. For example, an expression entity type is denoted as <node>.type, which covers the entity type for the expression. For example, in MDX, a "Hierarchize" node may be characterized by type SET. A literal level may be characterized by type LEVEL. Parameter nodes are denoted as <node>.params. This notation refers to all parameters for function or method invocations. For methods, the callee will be given as the first parameter. Furthermore, the count or number of parameter nodes may be denoted as <node>.params.length. A specific parameter node may be denoted as <node>.params[i]. This notation refers the i-th parameter node for a function or method invocation. For methods, the callee will be indicated by the first parameter. The type of a specific parameter node is denoted by <node>.params[i].type. Furthermore accessors for metadata decorations are discussed elsewhere herein. Metadata decorations may be accessed both on a node and on its parameters.

A state machine as well as an explicit pattern matcher both assumes that information about the type of an expression may be retrieved. The type of expression does not need to refer to an entity type, for example (SET, LEVEL) in MDX, but rather the type of expression indicating whether the expression is a LiteralSetExpression or a ContsntValueExpression.

Accessing parameter nodes using the <node>.params notation may be specifically useful when retrieving information about the count and types of parameter nodes. When generating mutations, this notation may be used to plug parameters into the mutated expression forms. In order to retrieve more detailed information about a parameter node, like the name of the function invoked, if any, the parameter node itself may need to be visited.

Mutations may be denoted using "<element>" notation. For example, a mutation note "Mutate root into Crossjoin(<param0>, <func.params[1]>)" indicates that the new expression is a Crossjoin with the saved node "param0" as its first argument and the element "func.params[1]" as its second argument and the root expression is to be substituted with the new expression.

### Expression Tree Optimization and Expression Tree Metadata

The interpretation of metadata decorations during expression tree optimization may depend on the type of expression involved. For set expressions, the level and hierarchy decorations may indicate which hierarchies and levels the resulting set's members may belong to, while the ordering and duplicate-generation decorations may indicate whether the expression needs to be order-preserving and/or duplicate-handling. For a level expression, there may be exactly one hierarchy and one level decoration, which may describe definitive knowledge about the level and the hierarchy in which it is found.

With reference to optimization rules operations involving metadata of expression nodes may be denoted as follows. Hierarchy decorations are denoted as <node>.hiers. This notation refers to all of the hierarchy decorations associated with the node and may be provided in nesting order. The most nested hierarchy of a node "x" may be determined using x.hiers[end]. For example, if the MDX expression "{([Customers].[Customer Geography]. [Country].&[USA], [Products]. [Products]. [Category].&[Bikes], [Measures]. [Unit Sales]),([Customers].[CustomerGeography].[Country].&[Canada],Products].[Products]. [Sub Category].&[Fast Bikes], [Measures].[Store Sales]) }", is held in node "y", y.hiers[0] will yield the [Customers].[Customer Geography] hierarchy, y.hiers[1] will yield the [Products].[Products] hierarchy, and y.hiers[2] will yield the [Measures] hierarchy.

Furthermore, specific hierarchy decoration is denoted as <node>.hiers[i]. This notation refers to the i-th outermost hierarchy associated with the expression node. The special notation <node>.hier[end] can retrieve the innermost hierarchy associated with the expression node. The count of hierarchy decorations is denoted as <node>.hiers.length and the hierarchy decoration is denoted as <node>.hier. This notation provides the single hierarchy associated with the expression node. It may be necessary to ascertain that a node only has one associated hierarchy, either by checking the length of <node>.hiers or by acquiring relevant domain knowledge about the expression node, for example an expression node holding a level expression will only be associated with a single hierarchy.

The level decorations are denoted by <node>.levels. This notation provides all of the level decorations associated with the node. The level decorations may be provided in arbitrary order.

The specific level decoration is denoted by <node>.levels[i]. This notation provides the i-th level decoration associated with the node. The order may provide no information. Accessing level decorations in this way may be specifically useful when iterating through all the level decorations for a given node.

The level decoration is denoted by <node>.level. This notation provides the single level associated with the expression node. It may be necessary to ascertain that the node only has one associated level, either by checking the length of <node>.levels or by acquiring further information about the expression node.

The level decorations for a specific hierarchy are denoted as <node>.hiers[i].levels. This notation refers to all of the levels associated with the node that are from the i-th outermost hierarchy associated with the node. These levels are returned in ascending index order. For example, given a node "x", x.hiers[i].levels[0] refers to the top-most level associated with x from the i-th outermost hierarchy associated with x, while x.hiers[i].levels[end] refers to the bottom-most level associated with x from the i-th outermost hierarchy associated with x.

A specific level decoration for a specific hierarchy is denoted as <node>.hiers[i].levels[j]. This notation refers to a level associated with the node, found in the i-th outermost hierarchy associated with the node. This level has the j-th smallest index among all levels that are found in the hierarchy and associated with the node.

The hierarchy tied to a level decoration is denoted by <level decoration>.hier. This notation refers to the hierarchy to which the given level belongs.

The definitiveness of a level/hierarchy decoration is denoted by <level/hierarchy decoration>.isDefinite. This notation refers to a Boolean value, indicating whether the knowledge about the decoration is definitive or not.

The ordering decoration is denoted by <node>.ordering. This notation provides a value of "ordered" for an expression that must preserve ordering information, or "not ordered" for an expression that does not have to preserve ordering information. For certain types of expressions, for example "levels", this decoration may provide no information.

A duplicate-generation decoration may be denoted by <node>.canGenerateDuplicates. This notation may refer to a value of "yes" or "no". If "yes", it may indicate that the expression may be able to generate duplicate tuples. If "no", the expression cannot generate duplicate tuples. For certain types of expressions, for example levels, this decoration may provide no information.

### Plan Builder and Plan Optimizer

The plan builder is configured to transform the first representation into the second representation. According to an embodiment of the present invention, the first representation corresponds to the optimized expression tree. In the following description the second representation corresponds to an execution plan. It is noted that certain aspects of the execution plan may depend on the first database query language.

The execution plan corresponds to a transformed version of the optimized expression tree and also comprises nodes. According to an embodiment of the present invention the second representation may be configured to include nodes of simple complexity. An execution plan may be used to identify common patterns of plan nodes that may be reduced to simpler forms which may require less computational effort when executed. Such aspects may be identified in two or more plan nodes.

According to an embodiment of the present invention, an execution plan is not used directly to execute an MDX query rather the execution plan corresponds an intermediate form used to prepare an execution tree which can then be translated into queries and/or commands of the second database query language.

According to an embodiment of the present invention, the plan builder may be configured to plan order-preserving variant plan fragments for a plurality of expressions including literal sets of "definite" members, for example, for literal set expressions holding only measures) and Crossjoin() invocations.

According to an embodiment of the present invention the plan builder may generate different plan representations for expressions depending on whether they might generate duplicates or not. In some cases, given a specific function, the equivalent plan fragment which handles duplicate generation will be much more complex than the equivalent plan fragment which does not handle duplicate generation. According to an embodiment of the present invention optimization rules are preferred that reduce the number of expressions that must handle duplicates.

The plan builder will use information from the Order Analyzer in choosing node configurations to use for modeling different expressions. Some MDX functions like TopCount() are inherently order-preserving. Other expressions like DrillDownLevel() may be found in order-preserving and non-order-preserving varieties. There may be different plan node configurations possible for order-preserving and non-order-preserving versions of the same expression or function.

According to an embodiment of the present invention execution plans may be based on a conceptual framework of properties, tuples and members which are used to refer to important aspects of multidimensional databases. It is noted that the terms "tuple" has a predetermined definition in MDX that may differ in various aspects from how it is used with reference to execution plans. It is noted that with reference to execution plans, the term tuple is used to refer to a more mathematical definition and should not be confused with the term tuple as defined within MDX, for example. The idea is that streams of tuples pass through execution plan nodes, which work to filter and combine them in various ways. The link between two execution plan nodes can always be thought of as a tuple stream. Each value in a tuple corresponds to a value for a "property". Each tuple in a tuple stream will hold values for the same set of properties. Therefore, execution plan nodes must refer to properties in a way that maintains this consistency at the conceptual level.

Properties in tuple streams may herein be referred to by name, such as "rank". Macros may be used to represent a set of properties which can be resolved to fully specify an expression when the execution plan is built. For example, the macro "MemberProperties(Customer)" may refer to the properties fully describing members of the "Customer" hierarchy. Properties may be configured to share similarities with columns of a table and tuples with rows of the table. For According to an embodiment of the present invention predetermined properties may be computed in software instead of coming directly from columns. For example, member unique names may be constructed dynamically based on values from multiple columns.

Links between execution plan nodes describe tuple streams that may flow in the corresponding execution tree. The operations described by certain plan nodes may involve pooling input tuples to find relationships between them. For example, the behavior described by a Rank node may require ordering tuples according to their values for certain properties, which in turn may require pooling. Other nodes may describe behavior that requires the partial pooling of input, for example a SubQuery node, and some nodes describe behavior that can be completely streaming, for example a Filter node.

Pooling is used to refer to sorting of certain elements of a tuple or tuple stream. For example when iterating over one tuple stream for each tuple of another stream, and those that deliver the same output tuple stream to two or more "parent" nodes. Pooling is not dealt with explicitly in execution plan diagrams.

When constructing the execution plan, metadata decorations from the expression tree may need to be imported into the execution plan. The metadata decorations may include information about the levels, hierarchies, and dimensions for which members are output from MDX expressions, for example. Metadata decorations in execution plan nodes may include further information, for example information regarding properties which may be used when optimizing the execution plan and during conversion to the second database query language, for example SQL. Metadata decorations may include hierarchies and associated levels for which member descriptions may be provided in the tuple stream output by the node, and collection of properties included in the tuple stream output by the node, for example.

### Macros

Macros may be used to predefine sets of properties for application to a specific execution plan. When constructing an execution plan, each macro may be expanded into a concrete set of properties. According to an embodiment of the present invention a number of macros may be employed as follows. It is noted that certain macros may produce ordered sets.

Hierarchy-Agnostic macros include LevelBelow(<L: a level>) which refers to the level below the given level. if L is a leaf level, this gives no level, and LevelsBelow(<L: levels>) which is used to refer to the levels below the levels in L. if a level "w" in L is already the lowest in its hierarchy, then there will be no counterpart "lower level" for w in LevelsBelow(L).

Single-Hierarchy macro include Hier(<W: tuple stream>) which, assuming W could only potentially describe members from a single hierarchy, gives that hierarchy. It also includes Level(<W: tuple stream>, <H: a single hierarchy>) which, assuming W could only potentially describe members from a single level of H, gives that level. Levels(<W: tuple stream>, <H: a single hierarchy>) refers to the levels of hierarchy H from which W could potentially describe members. KeyProp(<H: a single hierarchy>, <L: a single level>) refers to the key property used to hold the key for members of level L from hierarchy H. MemberProps(<H: a single hierarchy>) refers to the set of properties used to fully describe members of hierarchy H. HierProps(<H: a single hierarchy>) refers to the ordered set of properties which can be used to order members of hierarchy H hierarchically. LevNum(<H: a single hierarchy>) refers to the property that gives the level number of the members described from hierarchy H.

Multiple-Hierarchy macros include Hiers(<A: axis>) which refers to the ordered set of hierarchies for whom axis A may include descriptions of MDX tuples. Furthermore it includes MultiHierProps(<H: set of hierarchies>) which refers to the ordered set made up of the ordered properties used to hierarchize each hierarchy H[i].

Ordering macros may also include ASC/DESC flags, but they can be fully expanded while constructing the execution plan. Ordering macros include Ordering(<W: tuple stream>), which refers to the ordering associated with the tuple stream W (an ordered sets of properties and ASC/DESC flags), and DefaultOrdering(<H: hierarchy>), which refers to the default ordering associated with a hierarchy (an ordered sets of properties and ASC/DESC flags)

### Symbols

Symbols are similar to macros but may not be fully expanded statically and may involve dynamically choosing values from different properties for different tuples. Symbols may be used similar to a special symbol interpreted by an SQL generator. When multiple levels may potentially be included, key selections may be translated into MDX CASE columns. If only one level may be included, a single key may be selected.

For example, an execution plan optimizer may remove predetermined Id and PId from an execution plan before the conversion to the second database query language. An Id(<H: hierarchy>) refers to the dynamic subtuple (level number, member key) corresponding to members from H in a tuple stream. A PId(<H: hierarchy>) refers to the dynamic subtuple (level number -1, parent member key) corresponding to members from H in a tuple stream.

A plan optimizer according to an embodiment of the present invention may be configured to perform reductions. Reductions refer to predetermined optimizations, which may comprise functions and be denoted by reduction diagrams. The reduction diagrams may include functions used on filters and sets of levels to produce new filters and sets of levels for the reduced plans. For example EnsureLevelNum(<H: hierarchy>, <L: levels>) may be used to produce a filter that checks to make sure that a tuple holds the description of a member from hierarchy H in one of the levels in L. Another function, LevelNumsDown(<F: filter>), may be used to produce a modified version of F that adds 1 to any "levelNum" conditions. Furthermore, Intersect(<A: levels>, <B: levels>) & Union(<A: levels>, <B: levels>), may be used to perform set operations. ReplaceWithLiteralNulls(<F:filter>, <P: properties>) may be used to produce a modified filter where all the references made to the properties in P have been replaced with literal nulls.

### Code Generation System

The code generation system transforms the optimized execution plan into one or more second database queries in the second database query language. The second database queries may include commands that may not be strict queries. Generally, with respect to the first database query language there may be one or more basic structures of the second database query language. The second database query language may be characterized by a number of aspects provided by one or more dialects of SQL. While these dialects may have different characteristics, a number of basic commonalities exist. A code generation system according to an embodiment of the present invention may employ one or more of the following aspects.

According to an embodiment of the present invention with respect to MDX four basic SQL structures may be used, which correspond to different combinations of non-empty/non non-empty and MDDataset/flattened MDX queries. Elements of a particular optimized execution plan, may correspond with one or more of the four basic structures. According to an embodiment of the present invention, this may be determined by examining some of the nodes at the top of the plan.

The four basic SQL structures share a number of common aspects. They all start with a WITH clause defining a SELECT called "EvaluatedData". EvaluatedData contains a star join between the pre-axes and the fact table. This is used in later parts of the query to extract the NON EMPTY axes, and/or when fetching data.

The queries may be ordered first by "mdxGroup", and then by each axis ordinal. This form of ordering permits streaming through the result sets when constructing the equivalent MDDataset or flattened data set. The MDDataset SQL returns each of the axis definitions in the first mdxGroups, and finishes with the data group. This matches the order of information included in MDDatasets.

The flattened SQL returns the axis definition for the first axis in mdxGroup 0, followed by the data group in mdxGroup 1. During processing, the first axis definition may be cached while the data group is streamed through. This can enable inserting missing axis 0 members as necessary and is further discussed with respect to optimizations for flattened datasets. This may enable caching an SQL result set while processing in the whole system while being configured to require a predetermined amount of memory.

It is noted that a basic structure may be modified in the case where a measures hierarchy is included on an axis.

### Non-Empty Basic Structures

"Non Empty" MDX queries are those that have a "NON EMPTY" clause on every axis. A "NON EMPTY" indicates that only tuples for which there is at least one intersection in the resultset with a data value are included in the results.

### Non-Empty MDDataset query

According to an embodiment of the present invention a non-empty MDDataset query may be translated into SQL as follows:

```
 WITH EvaluatedData( ..., <axis 1 columns>, <axis 0 columns>, measure_value )AS
 (
 SELECT ..., <axis 1 columns>, <axis 0 columns>, measure_value FROM
 (
 <inner data SELECT>
 ) mdxData
 JOIN
 (
 <axis 0 pre-axis SELECT, with ∼s>
 ) mdxAxis0 ON <JOIN condition with mdxData on mdxAxis0's key columns> JOIN (
 <axis 1 "pre-axis" SELECT, with ∼s> ) mdxAxis1 ON <JOIN condition with mdxData on
 mdxAxis1's key columns> ...
 )
 SELECT <num axes + 1> AS mdxGroup, <axis columns from EvaluatedData>,
 EvaluatedData.measure_value, <higher axis ordinals>, mdxAxis1.axis1, mdxAxis0.axis0
 FROM EvaluatedData
 JOIN (<SELECT axis 0 columns and RANK for axis0 ordinal FROM
 EvaluatedData>)mdxAxis0 // RANK uses NULLIFs to convert -s back to NULLs ON
 <JOIN condition with EvaluatedData on axis 0's key columns> JOIN (<SELECT axis 1
 columns and RANK for axis1 ordinal FROM EvaluatedData>)
 mdxAxis1 // RANK uses NULLIFs to convert -s back to NULLs ON <JOIN condition with
 EvaluatedData on axis 1's key columns> ...
 UNION ALL
 ... <higher axis extractors> ...
 UNION ALL
 SELECT 1 AS mdxGroup, <higher axis columns cast to NULL>, <axis 1 columns>, <lower
 axis columns cast to NULL>, <higher axis ordinals cast to NULL>,
 <RANK for axis1 ordinal>, // RANK uses NULLIFs to convert -s back to
 NULLs
 <lower axis ordinals cast to NULL>
 FROM EvaluatedData
 GROUP BY <axis 1 key columns>
 UNION ALL
 SELECT 0 AS mdxGroup,
 <higher axis columns cast to NULL>,
 <axis 0 columns>,
 <higher axis ordinals cast to NULL>,
 <RANK for axis0 ordinal>, // RANK uses NULLIFs to convert -s back to
 NULLs FROM EvaluatedData GROUP BY <axis 0 key columns>
 ORDER BY 1, <axis ordinal column indices>
```

### Flattened Non Empty query

According to an embodiment of the present invention a flattened non-empty query may be translated into SQL as follows:

```
 WITH EvaluatedData( ..., <axis 1 columns>, <axis 0 columns>, measure_value )AS (
 SELECT ..., <axis 1 columns>, <axis 0 columns>, measure_value FROM ( <inner data
 SELECT> ) mdxData ... <JOINs with higher pre-axes> ... JOIN ( <axis 1 pre-axis SELECT,
 with ∼s> ) mdxAxis1 ON <JOIN condition between mdxData and mdxAxis1's key columns>
 JOIN ( <axis 0 pre-axis SELECT, with ∼s> ) mdxAxis0 ON <JOIN condition between
 mdxData and mdxAxis0's key columns>
 )
 SELECT 1 AS mdxGroup, <higher axis columns from axis selects>, <axis 1 columns from
 mdxAxis1>, <axis 0 columns from mdxDataAndAxis0>, mdxDataAndAxis0.measure_value,
 <higher axis ordinals from axis selects>, mdxAxis1.axis1, mdxDataAndAxis0.axis0
 FROM ... <CROSS JOINed higher axis selects> [CROSS JOIN] (
 SELECT <axis 1 columns>, RANK() OVER ( ORDER BY <NULLIF(<col>, '∼') for each
 axis 1 key column>
 ) AS axis1 FROM EvaluatedData GROUP BY <axis 1 key columns>
 ) mdxAxis1 LEFT JOIN (
 SELECT <higher axis key columns from mdxData>, <axis 1 key columns from mdxData>,
 <axis 0 key columns from mdxAxis0>, mdxData.measure_value,
 mdxAxis0.axis0 FROM ( SELECT <axis0 columns from EvaluatedData>, RANK() OVER(
 ORDER BY <NULLIF(<col>, '∼') for each axis 0 key column>
 ) AS axis0 FROM EvaluatedData GROUP BY <axis 0 key columns>
 ) mdxAxis0 JOIN
 ( // the "inner data SELECT" is simple and can be pulled out ofEvaluatedData SELECT
 <axis key columns>, measure_value FROM EvaluatedData ) mdxData ON <JOIN condition
 on axis 0 key columns> ) mdxDataAndAxis0 ON <JOIN condition on axis 1 and higher axis
 key columns>
 UNION ALL
 SELECT 0 AS mdxGroup, <higher axis columns cast to NULL>, <axis 1 columns cast to
 NULL>, <axis 0 columns from EvaluatedData>, <measure_value cast to NULL>, <higher
 axis ordinals cast to NULL>, <axis1 cast to NULL>, RANK() OVER ( ORDER BY
 <NULLIF(<col>, '∼') for each axis 0 key column>
 ) AS axis0 FROM EvaluatedData GROUP BY <axis 0 key columns>
 ORDER BY 1, <axis ordinal column indices, highest axis first>
```

### Non-Non Empty Basic Structures

"Non-Non Empty" MDX queries have no "NON EMPTY" clauses. Lacking a "NON EMPTY" means that all of the tuples described for the axes are included in the results, even if some of the tuples yield no data points at intersections in the result set. This means that when we need the axes, either just for reporting them as output, or for retrieving ordinals to JOIN in for the data section, we need to re-use the "pre-axis" SQL, so we include "empty" tuples that aren't included in EvaluatedData.

### Non Non-Empy MDDataset

According to an embodiment of the present invention a MDDataset Non-Non Empty query may be translated into SQL as indicated below. It is noted that translation is similar to the translation of the non-empty MDDataset.

```
 WITH EvaluatedData( ..., <axis 1 columns>, <axis 0 columns>, measure_value )AS (
 SELECT ..., <axis 1 columns>, <axis 0 columns>, measure_value FROM ( <inner data
 SELECT> ) mdxData JOIN ( <axis 0 "pre-axis" SELECT, with ∼s> ) mdxAxis0 ON <JOIN
 condition with mdxData on mdxAxis0's key columns> JOIN ( <axis 1 "pre-axis" SELECT,
 with ∼s> ) mdxAxis1 ON <JOIN condition with mdxData on mdxAxis1's key columns> ... )
 SELECT <num axes + 1> AS mdxGroup, <axis columns from EvaluatedData>,
 EvaluatedData.measure_value, <higher axis ordinals>, mdxAxis1.axis1, mdxAxis0.axis0
 FROM EvaluatedData JOIN (
 <axis 0 pre-axis SELECT, with -s and ordinal>
 ) mdxAxis0 ON <JOIN condition with EvaluatedData on axis 0's key columns> JOIN (
 <axis 1 pre-axis SELECT, including -s and ordinal>
 ) mdxAxis1 ON <JOIN condition with EvaluatedData on axis 1's key columns> ...
 UNION ALL
 ... <higher axis extractors> ...
 UNION ALL
 SELECT 1 AS mdxGroup,
 <higher axis columns cast to NULL>,
 <axis 1 columns>,
 <lower axis columns cast to NULL>,
 <higher axis ordinals cast to NULL>,
 <RANK for axis1 ordinal>, // may or may not need NULLIFs, depending on
 whether -s are around
 <lower axis ordinals cast to NULL> FROM
 <inside of axis 1 pre-axis SELECT. doesn't necessarily need ∼s. doesn't need ordinal. may
 be a CROSS JOIN of SELECTs for different hierarchies. if it is aCROSS JOIN, the
 "_grouping" columns aren't needed because -s aren't being generated.>
 UNION ALL
 SELECT 0 AS mdxGroup,
 <higher axis columns cast to NULL>,
 <axis 0 columns>,
 <higher axis ordinals cast to NULL>,
 <RANK for axis0 ordinal>, // may or may not need NULLIFs, depending on
 whether -s are around
 FROM
 <inside of axis 0 pre-axis SELECT. doesn't necessarily need ∼s. doesn't need ordinal. may
 be a CROSS JOIN of SELECTs for different hierarchies. if it isa CROSS JOIN, the
 "_grouping" columns aren't needed because -s aren't being generated.>
 ORDER BY 1, <axis ordinal column indices>
```

### Flattened Non-Non Empty query

A Flattened Non-Non Empty query may be translated into SQL as indicated below. It is noted that translation is similar to the translation of the Flattened Non-Empty query.

```
 WITH EvaluatedData( ..., <axis 1 columns>, <axis 0 columns>, measure_value )AS (
 SELECT ..., <axis 1 columns>, <axis 0 columns>, measure_value FROM ( <inner data
 SELECT> ) mdxData ... <JOINs with higher pre-axes> ... JOIN ( <axis 1 pre-axis SELECT>
 ) mdxAxis1 ON <JOIN condition between mdxData andmdxAxis1's key columns> JOIN (
 <axis 0 pre-axis SELECT> ) mdxAxis0 ON <JOIN condition between mdxData and
 mdxAxis0's key columns> )
 SELECT 1 AS mdxGroup, <higher axis columns from axis selects>, <axis 1 columns from
 mdxAxis1>, <axis 0 columns from mdxDataAndAxis0>, mdxDataAndAxis0.measure_value,
 <higher axis ordinals from axis selects>, mdxAxis1.axis1, mdxDataAndAxis0.axis0
 FROM ... <CROSS JOINed higher axis selects> [CROSS JOIN] (
 <axis 1 pre-axis SELECT, with -s and ordinal>
 ) mdxAxis 1
 LEFT JOIN (
 SELECT <higher axis key columns from mdxData>, <axis 1 key columns from mdxData>,
 <axis 0 key columns from mdxAxis0>, mdxData.measure_value,
 mdxAxis0.axis0 FROM (
 <axis 0 pre-axis SELECT, with -s and ordinal>
 ) mdxAxis0 JOIN ( // the "inner data SELECT" is simple and can be pulled out of
 EvaluatedData SELECT <axes' key columns>, measure_value
 FROM EvaluatedData ) mdxData ON <JOIN condition on axis 0 key columns>
 ) mdxDataAndAxis0 ON <JOIN condition on axis 1 and higher axis key columns>
 UNION ALL
 SELECT 0 AS mdxGroup, <higher axis columns cast to NULL>, <axis 1 columns cast to
 NULL>, <axis 0 columns>, <measure_value cast to NULL>, <higher axis ordinals cast to
 NULL>, <axis1 cast to NULL>, RANK() OVER ( ORDER BY
 <each axis 0 key column> // may or may not need NULLIFs, depending on whether -s are
 around
 ) AS axis0 FROM
 <inside of axis 0 pre-axis SELECT. doesn't necessarily need ∼s. doesn't need ordinal. may
 be a CROSS JOIN of SELECTs for different hierarchies. if it is aCROSS JOIN, the
 "_grouping" columns aren't needed because -s aren't being generated.>
 ORDER BY 1, <axis ordinal column indices, highest axis first>
```

### Pre-Axis SELECTs

According to an embodiment of the present invention parts in the basic skeletons may be marked for filling with "pre-axis" SQL. Pre-axis SQL corresponds to the SQL for the branch in the execution plan that describes an entire axis. The pre-axis SQL may be configured to fetch the entire set of tuples specified for an axis, without worrying about whether the resulting tuples are actually be excluded from the result set due to NON EMPTY semantics.

In the non-NON EMPTY cases, the pre-axis SELECTs are used to compute ordinals. Since these cases are empty-preserving, even "empty" tuples need to be accounted for when assigning ordinals. In the NON EMPTY cases ordinals may be computed after extracting the "NON EMPTY" versions of the axes (the "post-axes") from EvaluatedData. This enables computation of ordinals for only the non-empty tuples.

The following discusses grouped NULLs and ∼. Variations of the "pre-axis" SQLs that are used in the four basic SQL skeletons will be discusses subsequently.

### Inner Data SELECT

An EvaluatedData uses an "inner data SELECT" to fetch the data from the fact table before joining to the axes. The "inner data SELECT" must join the fact table to all of the required dimension tables, and may also optimize by doing GROUP BYs to roll up to the required levels on the hierarchies in use. It may also be optimized with a HAVING that matches HAVINGs from the pre-axes. This may be hard to do in some cases, for example for a DrillDownMemberTop it is not desirable to use HAVING for an equivalent DrillDownMember.

### Slicer

According to an embodiment of the present invention a slicer subtree, for example found under the top-level Evaluate in the plan that feeds into the (Flat)DataOut, may be translated into a SQL WHERE clause in the inner data SELECT. For "regular" (non-calculated) members in the slicer (somehow extracted from the slicer subtree, the corresponding WHERE may be some equality condition based on keys. Multiple members may refer to multiple conditions of an inclusive Boolean AND condition. The dimension tables required to join in the members should be included in the star join.

Calculated members in the slicer may be extracted from the slicer subtree and may be formed as Aggregates as generated by Excel^{™}, for example. It is noted that the correct dimension tables need to be joined which correspond to the dimension tables that provide the members included in the Aggregate invocations. The condition created for a single calculated member may be OR'd together equality conditions on keys for each constituent member. It is noted again that compound keys need to be members of an inclusive Boolean AND condition.

### Grouped NULLs and "∼"

When rolling members up, either using GROUPING SETs or ROLLUPs, the fact that a certain level has been rolled up is indicated by NULL in its key column(s). When a star join is performed between the pre-axis SQLs and the fact table in the EvaluatedData section, the join is performed on key columns. Both the inner data SELECT and the pre-axis SQLs include roll-up mechanisms, but a basic SQL JOIN does not join when keys two tables are both NULL. It may be necessary to have a custom JOIN condition including "<inner data>.<hier 1 key> IS NULL AND <pre axis>.<hier 1 key> IS NULL". Alternatively, instead of generating complex join conditions, the grouping NULLs may be converted into -s before the JOIN. While a NULL isn't joined on by a regular JOIN, - is.

In the pre-axis SQL chunks used inside the definition of EvaluatedData, the conversion is usually done in the outermost SELECT by using a "CASE WHEN GROUPING(<key col>) = 1 THEN'∼' ELSE <key col> END AS <key col>" for each of the possibly-rolled up levels. Note that the only case where you don't have to do this is for non-"all" top levels, which should never be rolled up (similar to the top-level members 1997 and 1998 from the Foodmart "time" dimension). If the pre-axis SQL includes members from multiple hierarchies CROSS JOINed together, then the outermost SELECT also does a "CASE WHEN/THEN/ELSE END" but it's based on "_grouping" columns constructed for each of the columns in question in the SELECTs inside the CROSS JOIN. In the CROSS JOINed case, GROUPing may be performed inside the sub-SELECTs as an optimization. At this time the grouping information may be retrieved and stored into columns for later usage.

It is noted that using - for grouping NULLs may only work in the case where the keys are strings. Alternatively, other special values may have to be use, for example -1 if the keys are signed but negative keys aren't allowed. If a special value can't be identified, JOIN conditions with "IS NULL" may be used instead.

### Compound Key Issues

When multiple keys for a hierarchy share columns (like if the "state" level's key is a compound key that includes the "country" level's key column), the rolling-up-to-∼/NULL mechanism may be complex. A row may have a ∼/NULL in one of the key columns for a compound key but not in another column. This may be mitigated by the basic rule: for a given level to be considered "not rolled up" in a row, ALL of the columns in its key must be non-NULL.

### Constructing Axis Ordinals in NON EMPTY Data SELECTs

When constructing axis ordinals in the SELECT for retrieving data (the last mdxGroup in a query) in the NON EMPTY case, we extract axis information from EvaluatedData. This axis information includes -s for rolled-up keys. The character "∼", however, is ordered before the regular alphanumeric characters in SQL, so it needs to be converted back to NULL in order to get the RANK used to compute the ordinal to work properly. This may be performed by using "NULLIF(<col>, '∼')" in place of just "<col>" inside the RANK formula.

### Pre-Axis Variants

Different parts of different skeletons may use different variations of the "pre-axis" SQLs. The hearts of these SQL chunks will remain constant. For example, in the EvaluatedData definition, the pre-axis SELECT is joined to the fact table which indicates that a conversion of grouped NULLs to - s may need to be performed but no axis ordinals may be needed. In non-NON EMPTY Data SELECTs a SELECT used for constructing the data description in a non-NON EMPTY query and axis ordinals need to be included. These axis ordinals must be computed with the inclusion of "empty" tuples, so they can be generated using a modified "pre-axis" SQL. The pre-axis SQL needs to convert grouped NULLs to -s because it is subsequently joined to data from EvaluatedData. The axis ordinal may be constructed in the outer SELECT of the pre-axis SQL. Since the -s can also be generated in the outer SELECT, NULLIF()s are not needed in the RANK calculation because when the RANK is calculated, no -s exist yet. Since -s are being generated in this case, we will need "_grouping" columns in the sub-SELECTs under the CROSS JOIN if the axis contains multiple hierarchies.
Furthermore in non-NON EMPTY Axis SELECTs, a SELECT is used for constructing an axis description in a non-NON EMPTY query that includes the inner part of the "pre-axis" SELECT. The outer part is sort of morphed into the outer SELECT that includes the mdxGroup column and NULL'd out columns for other axes' keys and measure_value. Conversion of rolled up NULLs to -s may not be necessary because no JOIN is done to the fact table. This means that "_grouping" columns can be left out if the pre-axis includes a cross-hierarchy CROSS JOIN. The axis SELECT will include an axis ordinal RANK, but NULLIF()s are unnecessary because there are no -s around to convert back to NULLs.

### Flattening Optimizations

The two-dimensional structure of flattened datasets allows performing certain optimizations on the data group that's returned in a SQL result set. Certain null values may be skipped whose presence can be ascertained and values can be filled in by the processor. As well, some groups of null values can be compressed into a single resultset row. These optimizations allow reducing the size of the SQL result set and expressing the query in a way that exploits the different JOIN types available in SQL instead of making our own complex constructs to do similar work.

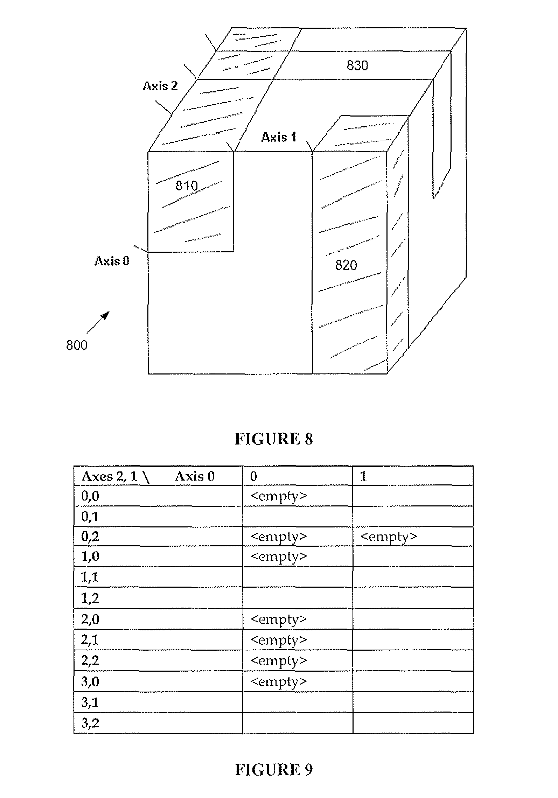

Optimizations may be explained in terms of a three-axis model. Figure 8 illustrates the space formed by a data subcube **800** having three axes. Hatching indicates chunks **810, 820** and **830** of empty data in a subcube.

There are two tuples in axis 0, three tuples in axis 1, and four tuples in axis 2. Each hatched block **810, 820** and **830** corresponds to a chunk of empties of sized 1 in 2 of the dimensions and runs the full extent of the other dimension - further referred to as one-dimensional runs. The origin of the subcube is the upper left corner on the front.

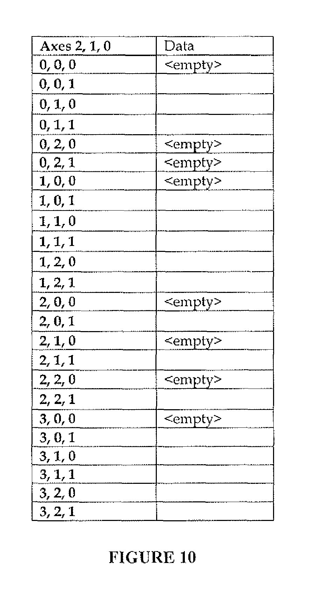

A flattened dataset representation of the subcube **800** may be generated using a two-dimensional representation as illustrated in the table in Figure 9. The top header indicates axis 0 coordinates and the left header indicates axis 2 and axis 1 coordinates. The empties contributed by the hatched chunks **810, 820** and **830** are indicated. A possible one-dimensional query result of the subcube **800** is illustrated in the table in Figure 10.

### Skipping Empties and Empty Compression

As discussed with reference to basic SQL Structures, the first axis' metadata may be cached when processing flattened data results from SQL. As indicated by the one-dimensional data representation of subcube **800,** with the cached knowledge of axis 0, it may possible to "fill in the blanks" for some of the empty cells and exclude them from the SQL result set.

If the empties **810** weren't included in the resultset, the first cell that is not empty is 0, 0, 1. Since the 0-axis is at "1", it can be inferred that the first cell in the subcube **800** was skipped. When the axis-0 metadata is cached it is possible to construct and the system may be configured to output the empty 0, 0, 0 cell on its own. This applies similarly to other cells **810.** In each case, it is possible to skip to x, 0, 1 after dealing with tuples at the previous axis 2 tuple. Based on information "0" tuple of the 0-axis, it is possible to infer that the skipped cells are empty.

For the **820** empties it is possible to fill in the blanks in a similar way as for the 810 empties because similarly the (axis 2, axis 1) coordinates for at least one of the axis 0 coordinates are hit. It is then possible to infer the existence of that particular (axis 2, axis 1) set of partial coordinates in the resultset, and can reconstruct the empties for all of the missing axis 0 coordinates.

The **830** empties the (axis 2, axis 1) partial coordinates (0, 2) occur across all the axis 0 coordinates. If these were left out of our resultset, the coordinates (0, 1, 1) followed by (1, 0, 1) would be returned. As noted before (1, 0, 0) can be reconstructed. If no information about (0, 2, 0) or (0, 2, 1) was available, however, a SQL resultset that skips all empties except for "1-dimensional" runs of empties may not provide sufficient metadata to reconstruct the missing cells during streaming. Accordingly, a FlatDataOut execution plan node according to the presenting invention is permitted to skip the allowable empties if the system is adequately configured.

In SQL terms, removing all the empties in a star join can be done by using a JOIN. This removes ALL the empties though, including runs all the way across axis 0. To make sure runs of empties across axis 0 are included in the SQL result set, a LEFT JOIN may be used to join all of the non-0 axes (CROSS JOINed together) into a JOIN between axis 0 and the fact table. The SQL structure for the modified star join may be formed as:
( ... CROSS JOIN <pre-axis 2> CROSS JOIN <pre-axis 1>) LEFT JOIN(<pre-axis 0> JOIN <fact table>)

The LEFT JOIN ensures that any combination of the non-0 axes for which there is no axis 0 coordinate that has data can be represented in the resultset with NULL information about axis 0. This only gives one row for the missing run of empty cells. This is feasible when the special row with NULL axis 0 information is available to reconstruct the entire run, because we have all the information about axis 0 cached. Expanding a row with NULL information about axis 0 into a run of empty cells all the way across 0 may also be performed. Compressing empties across axis 0 may be permitted by the definition of FlatDataOut.

### Converting Axis Branches

Converting axis branches refers to transform nodes and groups of nodes found in the axis branches of execution plans. The axis branches define the "pre-axis SQL" chunks that are inserted into the basic skeletons.

General Concepts in some cases include taht the execution plan resulting from applying optimizations may be relatively small and simple to convert. For example, when MDX Top and/or MDX Bottom functions are not used, the axis branches may be small. In other cases, the execution plan optimization may provide limited use and a large number of execution plan nodes may need to be converted into SQL equivalents. An axis branch is may be converted into SQL in a top-down fashion.

Some nodes may be translated in conjunction with child nodes or other child-generation nodes. For example, converting a SubQuery node may involve checking for a Project node as its right child and looking at the node below that. Child nodes may be "skipped" if they've already been adequately processed.

As further described a node translation may occur when a SELECT already exists that needs to be filled in. Some nodes may prompt the creation of new SELECTs which are filled in by translating child nodes.

One of the tenets of converting axis branches into SQL is to try to make the SQL constructs closely resemble the plan nodes. For example, a Crossjoin plan node may be converted into a CROSS JOIN in SQL. A number of optimizations may be feasible while certain plan nodes may not be directly translated. The overall goal is to be able to convert execution plans to SQL in a general and systematic fashion. Complex MDX queries may be optimized in an explicit exception that details otherwise manual optimization that may make the corresponding SQL less bulky and/or more efficient. Some manual optimizations can be implemented within the present system using rules about when they can and cannot be applied, for example. For this and other purposes the following may be employed in systems according to some embodiments of the present invention.

A LevelSource includes hierarchy and level parameters, which enable to pick out which columns are required from which dimension tables as a source for a SELECT. It is noted that a complete set of ancestor key properties may need to be provided for which corresponding dimension tables may need to be provided.

The SELECT should include all columns necessary to "fully describe" members from the requested levels. "Fully describe" refers to providing columns that are sufficient to extract all the dimension properties. Values for key columns may be NULL to indicate that the member found in a row for the given hierarchy is located on a level above the level in question which may be created by using extended GROUP BY mechanisms.

The FROM clause may join all of the dimension tables required to get information about each of the levels in the hierarchy down to the lowest one requested.

The code generation system may use GROUP BY GROUPING SETS to roll up the required levels. There may be one grouping set for each required level. The grouping set for a level may include the key columns for that level and all higher levels. If only a single grouping set is needed, a regular GROUP BY may be used instead, for example, when a level's compound key shares a column with the level above. If an "all" level is included in a LevelSource, the grouping set "()" can be used to get a row that's rolled up in all keys for the hierarchy.

Furthermore, when rolling up a LevelSource that includes an "All" level a GROUP BY ROLLUP() may be used on key columns for the lowest level up to the level below "all". It is noted that GROUP BY ROLLUP() performs rollup column-by-column and may provide redundant rows if a level key includes multiple columns. A HAVING clause may be used to remove levels that are included by the ROLLUP but aren't actually included in the LevelSrc.

Crossjoins may occur in two places in execution plans. They may occur in slicers which are described herein, or they may occur at the top of an axis branch. Crossjoins can arise from the use of the Crossjoin() function in MDX to combine multiple hierarchies in an axis. Use of the expression equivalence rules described herein can ensure that Crossjoins are bubbled to the outside of an axis definition.

In SQL terms, a Crossjoin node may be translated into a SQL CROSS JOIN that may be used as the source for a corresponding SELECT. It is noted that a SELECT around a CROSS JOIN can pick columns out of SELECTs inside the CROSS JOIN. SELECTs inside a CROSS JOIN can be filled by recursion on the child nodes.

A SubQuery with an IN operator may be mapped to a JOIN of two SELECTs that may form the source for the current SELECT. The SQL inner JOIN only passes items that occur in both sides. The columns that JOIN can operate on are indicated by the properties in the SubQuery node (for the left) and the properties in the right-hand child Project node (for the right). Recursion on the left side may fill in the new left SELECT, and recursion on the node under the right Project will fill in the right SELECT.

A SubQuery with a NOT IN operator may be mapped to a WHERE condition, which may be AND'd onto any pre-existing WHERE clause in a corresponding SELECT. This type of SubQuery may be generated during translation of the execution plan and optimizations for an MDX Except() invocation. The Except() invocations used by Excel may have a literal set in their second parameter (corresponding to a Filter on a LevelSource in the execution plan). Filter + LevelSource may be translated from the right side under the Project child into a set of literal values. Using the correspondence between right-child Project properties and properties in the SubQuery for the left side, literals can be compared against the appropriate columns or combinations of columns in a WHERE condition.

A Filter node corresponds to one of the filtering clauses in SQL: WHERE, QUALIFY, or HAVING. Filter nodes do not need to appear above Unions or SubQueries. They can be removed during plan or translation optimizations. A Filter may appear above a Filter if one involves a rank and the other doesn't. These two Filters may be mapped to different SQL constructs (QUALIFY and HAVING, respectively). A Filter may occur over a Crossjoin in a slicer. Slicers may attract special treatment as discussed herein. Filter expressions generated after reductions may be complex and may be simplified.

### Basic Filter Condition Translation

Components of Filter expressions can be converted into SQL as follows. The "AND", "NOT", and "OR" connectors, and the use of parentheses for grouping be literally translated into SQL. Checking the "level number" property for a hierarchy can be performed depending on the level metadata decorations on the execution plan. When the tuple stream coming into a Filter includes members from a single level, a level number check can be statically translated as either "1=1" (for "true", where the provided level matches the required one) or "1=0" (for "false", where the levels don't match). If multiple levels are coming up, Translation of level number conditions on a tuple stream with multiple levels included may depend on the context of a Filter and will be discussed in later sections. Furthermore, in a hierarchy with an "all" level, a restrictions such as "x.key(0) = <w>" can be statically translated to either "1=1" (where the <w> is the "all" member's name) or "1=0" (where <w> isn't the "all" member's name).

### General Filter

A general filter may be implemented as a WHERE clause in the current SELECT in combination with second SELECT in a FROM clause. Recursion into the child node of the Filter can fill in the second SELECT. The WHERE clause may hold the translated conditional expression from the Filter. Level number restrictions may be mapped to checking for NULLs (or -s) in key columns. For example, assuming single-column keys, if members from level 2 needed to be determined the subclause "(<level 2 key> IS NOT NULL) AND (<level 3 key> IS NULL)" or "(<level 2 key> <> '∼') AND (<level 3 key> = '∼')" may be used. In other words "the level 2 key is not null but the level 3 keys is null". It is noted that saying only "the level 2 key is not null" does not guarantee that a member is on level 2, just that it's on level 2 or some level below.

It is further noted that Filters may occur over certain nodes in a plan. For example above a LevelSource, above a Rank (where the Fitler only looks at the "rank" property generated by the Rank), or above another Filter (where the lower Filter only looks at the "rank" property generated by a Rank below it). A Filter + LevelSource may deal with the measures hierarchy is a special case, as described herein.

A Filter above a LevelSource indicates that the conditional expression can be coded as a HAVING clause including the conditional expresssion. When a LevelSource has already contributed a HAVING clause the present condition can be combined using AND with already existing conditions in HAVING. Level number restrictions may be translated into expressions based on GROUPING, since the HAVING occurs in the SELECT that groups up the members. For example, a restriction like "x.levelNum = 2" may be translated into "GROUPING(<level 2 key>) <> 1 AND GROUPING(<level 3 key>) = 1". As in the general case, both the level the member needs to be at needs to be checked for a non-NULL key and the level below for a NULL key to ensure only members from that specific level are retrieved. Possible recursion should go into the child LevelSource using the current SELECT.

A Filter may be used over another Filter in an optimized plan when the lower Filter compares against a rank property generated by its child Rank node. An ISMOptimizationControl method may be used for this purpose, for example when the two Filters need to be combined.

The upper Filter may be translated as if it was a Filter over a LevelSource, with a HAVING clause in the current SELECT. A new SELECT may then be created for the FROM of the current SELECT. The new SELECT may be used for recursion into the child Filter. Performing HAVING and the RANK + QUALIFY in separate SELECTs may prevent the HAVING from messing up the rankings

A Filter above a Rank may be looking at the new property created by the Rank. The Top/Bottom function translations described herein may be the only MDX functions that create Ranks, and they always include a Filter above their Rank. It may not be possible to remove such Filters during optimization. Comparisons between the rank property and a specific value found in such a Filter may be translated into a SQL QUALIFY clause for the current SELECT. Recursion into the child node can be done using the current SELECT.

It is noted that a rank column that is compared against may need to be generated for a SELECT. If necessary, it should be inserted into the SELECT with an empty formula that will be filled in when code translator processes the child Rank node.

A Union may prompt generation of a SELECT for each child node. These SELECTs may be joined using SQL UNION ALLs and used as the FROM for the current SELECT. Recursion into the child nodes may make use of the new UNION ALLed SELECTs.

The SELECTs created for recursion may take into account the levels provided by the child nodes. If a given child does not include members from levels all the way down to a level provided by some other node, NULLed out key columns may be included in the SELECT for that node. The extra columns generated may be required for the different SELECTs to be compatible for a UNION ALL.

It is noted that ordering of SELECTs in the UNION ALL(s) may be important. For example, SELECTs with lower down levels may need to go earlier, so that they establish the correct widths for varchar columns. Making sure varchar columns are wide enough may generally be important when UNION ALLing SELECTs together.

A Rank node may be translated into a new "RANK() OVER ( ORDER BY <ordering columns> ASC/DESC [PARTITION BY <partition columns>]) AS <rank name>" column formula in the current SELECT. If the Rank has partition properties specified, they may be included in a "PARTITION BY".

When a Rank is performed with partitioning on the "key(0)" column of a hierarchy with an "all" level, that part of the partition may be ignored, as all members in a hierarchy guarantee to have the same ancestor on level 0.

An Evaluate found in an axis branch of an execution plan generated, for example for an Excel^{™} query, may only have two input streams including certain arbitrary continuation of the axis branch which provides members of a single hierarchy, and a Filter on a Crossjoin for the slicer. These sorts of Evaluate may be used to implement Top/Bottom MDX functions. The code generation system may be configured to allow "empty" tuples to pass through, which may require a LEFT JOIN onto the fact table data to create these empty tuples, for example. Correspondingly, the code generation system may generate a new SELECT when processing the non-slicer input. The SELECT may be LEFT JOINed onto a JOIN between the fact table and any dimension tables necessary to write a WHERE for the slicer. The LEFT JOIN may be used as the FROM for the current SELECT.

According to an embodiment of the present invention, a Project specifies properties that should be included from a stream. The properties may be found underneath both sides of a Union node, where they may make sure the same properties are coming in from both sides. It is noted that "keys" that need to be included from both sides in Project may need to be specified exactly. If a Project specifies extra key properties for levels below the levels provided by a tuple stream, the columns for those keys need to be included cast to NULL. If the tuple stream includes extra properties that aren't to be included in the Union, they can be dropped. This is done by adding another level of SELECT which only selects out the properties that are needed and, if adequate, adds the NULLs.

The invention will now be described with reference to a specific example. It will be understood that the following examples are intended to describe embodiments of the invention and are not intended to limit the invention in any way.

### EXAMPLE

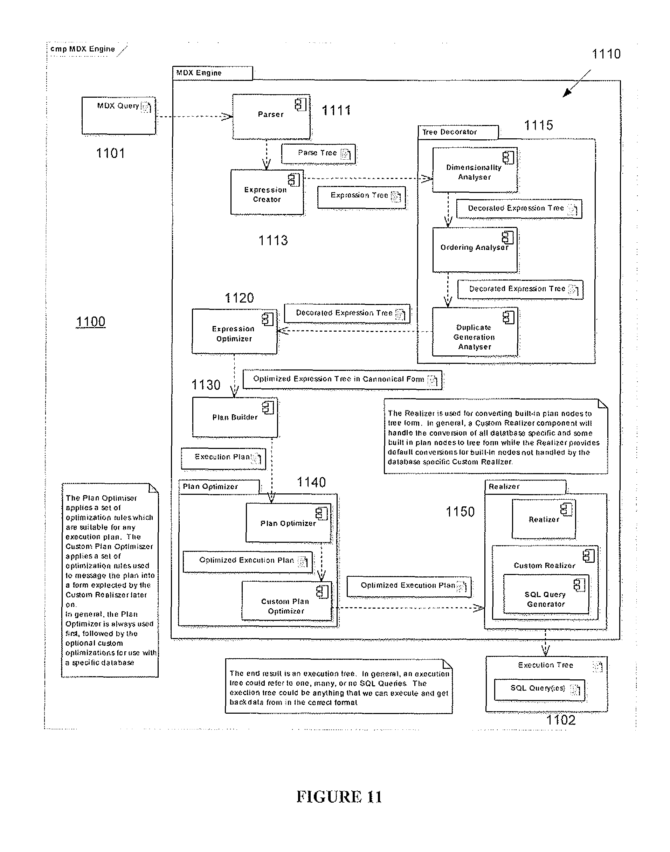

An example system for translating an MDX query into one or more SQL queries according to an embodiment of the present invention is illustrated in Figure 11. The system comprises a decoder **1110** comprising a parser **1111,** an expression creator **1113** and a tree decorator **1115.** The system further comprises an expression optimizer **1120,** a plan builder **1130,** a plan optimizer **1140,** and a code generation system referred to as realizer **1150.**

The parser **1111** is operatively connected to the input for receiving the MDX query and processes the query into a parse tree which is transformed by the expression creator into another form referred to as an expression tree. The parser **1111** and/or the expression creator are configured to determined if the MDX query is valid. They may be configured to stop further processing if the MDX query is malformed and cannot be further processed by the system **1100.**

The tree decorator is operatively connected to the expression creator for receiving the expressing tree. The tree decorator processes the expression tree into a decorated expression tree by adding metadata that encodes information about predetermined aspects of the query that are required for further processing of the expression tree. The tree decorator **1115** comprises a dimensionality analyzer, an ordering analyzer and a duplicate generation analyzer, which are operatively interconnected as indicated in Figure 11. Each analyzer performs predetermined analysis and can add corresponding metadata to the expression tree. Detailed aspects of the tree decorator and the analyzers are described above.

The tree decorator **1115** is operatively connected to the expression optimizer **1120,** which further processes the decorated expression tree into an optimized expression tree using predetermined methods and metadata included in decorated expression tree as described above.

The expression optimizer **1120** is operatively connected to the plan builder **1130** which can transform the optimized expression tree into an execution plan. The execution plan refers to a different representation of the expression tree that shares an increased number of common elements with the target language SQL for the SQL query that the system is able to generate.

The plan builder **1130** is operatively connected to the plan optimizer **1140** which can process the execution plan into an optimized execution plan. The plan optimizer **1140** may optionally comprise and optional custom plan optimizer. The custom plan optimizer may be used to optimize the execution plan to account for predetermined aspects of predetermined SQL dialects which are not provided by a predetermined standard of SQL.

The plan optimizer **1140** is operatively connected to the realizer **1150,** which can transform the optimized execution plan into one or more SQL queries. Each of the one or more SQL queries may be encoded in form of an execution tree which can be read by a machine, for example a computer, similar to a reverse parse process in order to generate the SQL queries. The realizer **1150** may optionally comprise a custom realizer. The custom realizer may be used to process elements of the optimized execution plan arising from the custom plan optimizer in the plan optimizer **1140,** into SQL queries and/or statements of a predetermined SQL dialect.

### Dimensionality Analyzer

Further to the information provided herein, the dimensionality analyzer of system 1100 is configured to perform a bottom-up analysis of the expression tree. The dimensionality analyzer gathers and may subsequently use information during processing of elements of the expression tree and levels that may be found in the outputs of elements of the expression tree and save this information as metadata decorations.

The information encoded in the metadata decorations and/or its applicability to elements of the expression tree may depend on the type of the corresponding expression. For example, a level decoration on a set expression indicates that members of that level may be found in the set, whereas a hierarchy decoration on a level expression means that the level is found in the given hierarchy. Hierarchy and/or level decorations may be characterized by their "definitiveness" which in turn may be indicated with a corresponding attribute or flag. For example, if, in MDX, a set expression has a hierarchy decoration linking it with the [Product].[product] hierarchy with MAYBE definitiveness, it means that members of that hierarchy might be found in the resulting set. If the decoration were instead marked DEFINITE, it would mean that members of the hierarchy would definitely be found in the resulting set.

The dimensionality analyzer works its way up through the expression tree, adding hierarchy and level metadata decorations, it may conduct semantic checks on elements of or the entire expression tree. The semantic checks may be used to identify semantic errors before further processing of the query is performed. Semantic errors may arise from an incorrect first query. Correct semantics may be important, for example, in a system according to an embodiment of the present invention that includes an expression optimizer, which may be configured with optimization rules that may only be performed if the expression tree conforms to predetermined semantics. Furthermore, the optimization rules in the expression optimizer may need to be adequately configured such that they do not generate semantic errors.

The dimensionality analyzer may be configured to perform a number of semantic checks including: DrillDownLevel( <set>, <level> ) which generates an ERROR if <set> is not literally empty and <level> does not belong to any of the dimensions in <set>. DrillDownMember( set1>, <set2> [, RECURSIVE] ) which generates an ERROR if <set2> has a dimensionality > 1, or an ERROR if neither set is empty and the hierarchy in <set2> is not included in <set1>. Except( set1>, <set2>[, ALL] ) which generates an ERROR if <set1> and <set2> have different dimensionalities. <dimension>.Members, which generates an ERROR if <dimension> has more than one hierarchy. Literal Set Expression, which generates an ERROR if there are any duplicate tuples, or an ERROR if any of the tuples are not literal tuple expressions.

### Ordering Analyzer

Further to the information provided herein, the ordering analyzer is configured to perform an analysis of the expression tree from top to bottom in a top-down manner, marking elements of the expression tree with decorations indicating whether or not they require preserving ordering. The ordering analyzer is configured with predetermined rules and how to apply the predetermined rules about ordering preservation requirements imposed by predetermined expressions, functions or methods as expressed in the expression tree and/or the first query. The rules provide information about inheritance of order requirements among elements of the expression tree in a transitive manner, for example, how to transfer ordering requirements to expressions which are lower in the expression tree. The ordering analyzer is further configured to recognize elements of the expression tree that cannot be reordered.

The ordering analyzer is configured to perform a top-down traversal along each branch of the expression tree and to maintain a suitable stack mechanism for recording information about ordering requirements from elements of the expression tree that are higher up in the tree-hierarchy. For example, the most recent item on the stack may be used to store information about the ordering requirement imposed by the parent expression. At the beginning of an analysis of a branch, the stack may be initialized with data encoding ordering requirements imposed by the expression at the branch node on the child expressions in the branch. The ordering analyzer can recursively analyze information in the stack about ordering information of the parent expressions during traversal expression tree traversal while also taking into account the position of a child expression among other child expressions. Given a position of an expression in the expression tree, the position of the current expression within its parent, and the ordering required from the parent expression, the ordering analyzer may be configured to determine whether or not the instant expression will generate ordered output. An expression may be required to produce ordered output if ordering is an integral part of the expression, for example Hierarchize() and TopCount() in MDX, if it is an expression that transitively passes on the requirement for ordering from above.

The metadata generated by the ordering analyzer can be utilized by other components of system **1100,** for example in the expression optimizer **1120.** The expression optimizer **1120** can transform the expression tree in accordance with predetermined rules and metadata generated by the ordering analyzer. Furthermore, the plan builder may utilize this information.

Ordering properties of MDX Functions with respect to functions or methods may include whether a function or method referred to by the expression tree can return different results depending on the order of its input set and how may this be affected by an immediately enclosing UnOrder in those cases. Furthermore, if the condition BottomCount«set>, <count>, <expression» => Head(Order<set>, <expression>, BASC), <count> ) is met discriminate between (1) because even though it sorts <set>, it sorts based on <expression> only. It still needs the original input ordering because it is a stable sort; (2) all cases; and (3) UnOrder has no effect, except that there is no expectation for the output to be ordered and the same tuples are returned.

Further ordering properties of MDX functions may refer to CrossJoin( <set1>, <set2> ) for both <set1> and <set2>. CrossJoin is supposed to be order-preserving in the case where a function outside of CrossJoin depends on a well-ordered input; UnOrder explicitly does not require well-ordered input, so the CrossJoin need not be order-preserving.

Further ordering properties of MDX functions may refer to DrilldownLevel(<set>). Order determines which tuples are "pre-drilled"; AND because DrilldownLevel is supposed to be order-preserving; when <set> contain "pre-drilled" tuples; OR in the case where a function outside of DrilldownLevel depends on a well-ordered input; UnOrder has no effect in the "pre-drilled" case. It has the same effect as it does on Cross Join in all other cases.

Further ordering properties of MDX functions may refer to DrilldownLevelTop(set>, <count>, <expression>). Similar considerations as for DrilldownLevel apply. The ranking ("Top/Bottom") aspect may not matter since the items being ranked are new and therefore not found in the input set. Same considerations as DrilldownLevel apply. Same cases as DrilldownLevel.

Further ordering properties of MDX functions may refer to DriIldownLevelBottom(set>, <count>, <expression) including reasons for DrilldownLevelTop.

Further ordering properties of MDX functions may refer to DrilldownMember(<set1>, <set2>). Ordering properties are not relevant for <set2> but <set1>. <set2> may be used for existence checks only. Its order never matters. This may be reflected by injecting an UnOrder around it; For <set1>, same reasons as for DrilldownLevel. Furthermore <set2>, all cases; <set1>, same cases as DrilldownLevel. Moreover, <set2> implies UnOrder, so an external UnOrder has no effect; <set1>, same cases as DrilldownLevel.

Further ordering properties of MDX functions may refer to DriIldownMemberTop(<set1>, <set2>, <count>, <expression>). Ordering properties are not relevant for <set2> but for <set1>. Same reasons as DrilldownMember. The ranking ("Top/Bottom") aspect may not matter for the same reasons as for DrilldownLevelTop. Same cases as DrilldownMember

Further ordering properties of MDX functions may refer to DriIldownMemberBottom( <set1>, <set2>, <count>, <expression> ). Ordering properties are not relevant for <set2> but <set1>. Sometimes ame reasons as DrilldownMemberTop apply.

Further ordering properties of MDX functions may refer to Except( <set1>, <set2> [, ALL]). Note: The Expression Optimizer can optimize Except( <set1>, <set2> ) into Except( <set1>, <set2>, ALL). Ordering properties are not relevant for <set2> but <set1>. Sometimes <set2> is used for existence checks only. Its order never matters. This may be reflected by injecting an UnOrder around it; For <set1>, same reason as CrossJoin; <set2>, all cases; <set1>, same case as CrossJoin; <set2> implies UnOrder, so an external UnOrder has no effect; <set1>, same case as CrossJoin.

Ordering properties of MDX functions applying to Hierarchize( <set> ) include that Hierarchize implies a total ordering on its input set, so the original order of that input set doesn't matter because there are no opportunities for "ties" in the sorting. In other words, Hierarchize is trivially a stable sort because it sorts on every aspect of its input set that matters. This could be reflected by injecting an UnOrder around <set>. In no cases does input ordering matter. UnOrder implies that there is no need for Hierarchize in the first place. It suggests that the Hierarchize should be optimized out of the expression tree.

Further ordering properties of MDX functions may refer to TopCount( <set>, <count>, <expression> => Head(Order(<set>, <expression>, BDESC),<count>)) including same reason and case as for BottomCount.

Further ordering properties of MDX functions may refer to UnOrder(<set>). Sometimes if the function enclosing UnOrder depends on the order of its input set, for example for itself or some function higher up, then the UnOrder has no effect and should be removed. Case same as Cross Join. Two combined UnOrders are redundant and one can be removed.

The order information can be used by the plan builder **1130.** The plan builder **1130** can use this information to determine whether to generate order-preserving or nonorder-preserving versions of CrossJoin, DrilldownLevel, DrilldownLevelTop, DrilldownLevelBottom, DrilldownMember, DrilldownMemberTop, DrilldownMemberBottom or Except.

The system **110** is configured to generate order-preserving literal set expressions using the Map node which may be useful in combination with, for example Excel^{™}, which can use ordered literal set expressions for selecting multiple measures. Additionally, the plan builder may use this information when generating functions that handle input sets with "pre-drilled" tuples including DrilldownLevel, DrilldownLevelTop, DrilldownLevelBottom, DrilldownMember, DrilldownMemberTop or DrilldownMemberBottom, for example.

### Duplicate-Generation Analyzer

Further to the information provided herein, the duplicate-generation analyzer is configured to perform a bottom-up analysis of the expression tree. The duplicate-generation analyzer determines if output of elements of the expression tree may generate duplicate data, for example duplicate tuples or members in MDX. The duplicate-generation analyzer stores corresponding information as metadata in the expression tree.

Information about what elements of the expression tree may generate duplicates is relevant for the processing of duplicates by other elements of the expression tree. For example, when a function, method or expression may need to process duplicates in its input in a predetermined way.

The metadata generated by the duplicate-generation analyzer may be utilized by other system components. For example, in a system including an optional expression optimizer for optimizing the expression, the expression optimizer may be configured to modify the expression tree in accordance with the metadata generated by the duplicate-generation analyzer. Furthermore, the plan builder may utilize this information.

The duplicate-generation analyzer component determines information about the potential for duplicate-generation of expressions as metadata decorations on the expression tree. The corresponding metadata can be used by the expression optimizer to transform calls to Except() with a first input that can't contain duplicates and without an ALL flag into the form with an ALL flag, to avoid using Distinct() and/or a Distinct execution plan node. Such decorations will be used by the plan builder **1130** to guarantee that the first parameter to a Drilldown* is distinct, so that we don't need special duplicate-injecting semantics, for example when checking for "pre-drilled" cases.

The duplicate generation analyzer takes into account that literal set expressions can have duplicates in any case, depending on how they're formed. Further more it takes into account if the condition BottomCount( <set>, <count>, <expression> ) => Head(Order(<set>, <expression>, BASC), <count>) is met and can sort deals with duplicates automatically.

With respect to Cross Join( <set1>, <set2> ), duplicate generation can also take into account if either set parameter of CrossJoin has more than one tuple, then it will introduce duplicate members of at least one hierarchy, for example, CrossJoin( {m}, beer.children) will repeat the member "m" for each child of "beer". Furthermore, CrossJoin may combine duplicates.

For DrilldownLevel( <set>, <level> ) duplicates are only possible in cases that look like but do not correspond to the "pre-drilled" case, for example DrilldownLevel( {CA, USA}, [Store Country]), or when there are already duplicates, for example when duplicate children of duplicate parents will be introduced such as in DrilldownLevel( {USA, USA} ). New tuples may be inserted into the execution plan once. Furthermore, when duplicate tuples exist in the input would need to be treated specially; duplicate members (not from duplicate tuples) can be handled with our current execution plans. For example, consider DrilidownLevel( {(USA, M), (USA, F)}, [Store Country]) =>{(USA, M), (CA, M), (OR, M), (WA, M), (USA, F), (CA, F), (OR, F), (WA, F)} ). The drilling down part of this invocation can be done with a subquery whose left side is a filtered cross join selecting all possible [Store State]/[Gender] pairs. The right side would be the original set parameter. The subquery condition would be a PKey-MKey test for Store and an MKey-MKey test for Gender. This would work as long as it is not required to be order-preserving, but this is a separate issue. Moreover, knowing that the input is distinct helps in all cases except for when the input looks pre-drilled, for example when level metadata indicates that it might be pre-drilled. The pre-drilled may be processed in a predetermined manner. If the input is distinct permits use of the current plan nodes up to the point of orderpreserving-ness.

Duplicate generation conditions for DrilldownLevelTop( <set>, <count>, <expression> ) are the same as DrilldownLevel. Those for DrilldownLevelBottom( <set>, <count>, <expression> ) are the same as for DrilldownLevel.

For DrilldownMember( <set1>, <set2> ), duplicates are possible in the same cases as DrilldownLevel, with the additional requirement that certain members need to be selected for drilling in <set2>. Note that it doesn't matter if <set2> is distinct or not. In fact, DrilldownMember implies a Distinct around <set2>.

Duplicate generation conditions for DrilldownMemberTop( <set1>, <set2>, <count>, <expression> ), are the same as DrilldownMember. Those for DrilldownMemberBottom( <set1>, <set2>, <count>, <expression> ) are the same as for DrilldownMember.

For Except( <set1>, <set2> ) duplicates may not be generated if the ALL flag is not used. In fact, Except implies Distinct around both <set1> and <set2>, and its result will be distinct. The expression optimizer may include a corresponding optimization rule that o modifies Except() calls without ALL flags where <set1> cannot include duplicates in Except() calls with ALL flags. This may apply to Except() generated by Excel^{™}, for example, and may further save generating a Distinct node for execution plans.

For Except( <set1>, <set2>, ALL) duplicate tuples or members present in <set1> may be included in the result set. Except doesn't care about whether it's dealing with duplicates or not.

For Hierarchize( <set> ) sorting works the same regardless of duplicates.

No duplicate generation aspects may need to be applied for <level> .Members

TopCount( <set>, <count>, <expression> ) => Head(Order«set>, <expression>, BDESC),<count>)) has the same duplicate generation characteristics as BottomCount.

In summary duplicate members not in duplicate tuples (e.g. (USA, M), (USA, F)) do not matter and function implementations in system **1100** can handle this case. Metadata information about duplicate generation is used by the plan builder **1130** to determine wheter to generate the duplicate-preserving or non-duplicate-preserving versions of DrilldownLevel, DrilldownLevelTop, DrilldownLevelBottom, DrilldownMember, DrilldownMemberTop or DrilldownMemberBottom. The plan builder can be configured to generate duplicate-preserving versions of these functions.

Additionally, metadata information may be used by the plan builder **1130** to determine whether it is producing these functions for "pre-drilled" tuples. It is noted that if, for example, the inputs to a drill down do not have "pre-drilled" members or duplicates, then the drilldown itself does not need to be duplicate-preserving. When generating plan nodes for Except, the plan builder needs to know if the first input is distinct. It is further noted that "pre-drilled" data from a drilldown can be determined locally, for example by inspecting the Drilldown and the metadata decorations of its children.

Information about distinctness can only be obtained bottom-up, which is exactly the opposite of order preserving information, which can only be obtained top-down. The base case of interest is a literal set expression. These can be directly inspected to determine if they contain duplicate tuples. The plan builder **1130** can be configured to use dimensionality information to test for the "pre-drilled" cases and throw an exception if needed.

### Expression Optimizer

The expression optimizer **1120** is configured to attempt to perform a number of predetermined optimizations of the decorated expression tree. The expression optimizer receives a decorated expression tree from the decoder and provides an optimized expression tree to the plan builder. Certain aspects of the expression optimizer may in part be determined by the configuration of the tree decorator and/or the plan builder.

The expression optimizer **1120** is used to optimize expression trees. Optimizations include replacing predetermined function forms with simpler forms, expressing variations of expressions in predetermined generic forms, and combining redundant expressions. Optimizations may help loosen ordering restrictions on nested expressions.

The expression optimizer may be configured with predetermined optimization rules which the optimizer may try to apply against the expression tree. Each optimization rule includes one or more patterns encoding one or more conditions for matching against expressions of elements of the expression tree, a transformation to be applied on a successful match. Optionally an optimization rule may comprise instructions for generating and adding metadata decorations to modified elements of the expression tree.

The expression optimizer may be configured to apply each of the optimization rules one or more times in a predetermined manner against the expression tree. While processing each rule, if a portion of the expression tree is found that matches the pattern of the rule, the transformation specified in the rule is applied to the portion of the expression tree. The expression optimizer can then progress to applying next rule. According to an embodiment of the present invention, this process may be repeated, for example recursively, until no more conditions of the optimization rules apply. At this point the expression tree may be referred to as an optimized expression tree.

Optimization rules used in the expression optimizer **1120** are configured so that repeat application of the rules leads to an optimized expression tree in finite time and further repeat application of the same optimization rules may no further optimize the expression. The expression optimizer **1120** is configured with one or more stop conditions to avoid mutual recursion caused by repeat application of optimization rules. For example, applying one optimization rule may cause a transformation of the expression tree that another optimization rule may reverse, which may lead to an infinite loop.

The expression optimizer includes a predetermined metric that may be used to quantify one or more predetermined aspects of the expression tree as it undergoes optimization. The metric may be used to determine a stop condition, for example, to stop the optimization when the metric no longer decreases. The metric is applied during optimization or in a predetermined manner in order to characterize the potential of a set of optimization rules for mutual recursion.

The expression optimizer **1120** is configured to transform order-preserving elements of the expression tree into non-order-preserving expressions while preserving the function of the expression tree. Order-preserving variants may require the plan builder to generate more complex second representations.

The expression optimizer **1120** can use Hierarchize(). The Hierarchize() function imposes a total ordering on its input. No matter what permutation of a set is given as input to a Hierarchize(), the output is the same. A Hierarchize() invocation does not care what order its input comes in. If a Hierarchize()'s input is a nested series of functions/expressions that, like DrillDownLevel(), only need to preserve order if that order is required from above, then these expressions can all be planned in non-order-preserving form.

The expression optimizer can bubble up Hierarchize() calls from the inside to the outside of expressions which can push Hierarchize() calls as far outside as possible, allowing to change expressions from order preserving form into non-order-preserving form. The expression optimizer may not use Hierarchize() for literal sets of measures when ordering is important, for example in pivot tables.

For example, invocations of the Except() function may generate duplicates unless the ALL flag is used. But for a non-ALL call to Except(), if the first input set can't have duplicates then neither can the output. An expression optimization that adds the ALL flag to Except() calls if the first input set is guaranteed to lack duplicates. This may be necessary for certain applications of the present system when using the ALL flag, but the plan builder will only know how to plan the non-duplicate handling version of Except(), for example the ALL variant.

### Expression optimization rules

Expression optimization rules are employed in the expression optimizer in one or more of the forms described generally herein. The expression optimizer can use the following optimization rules.

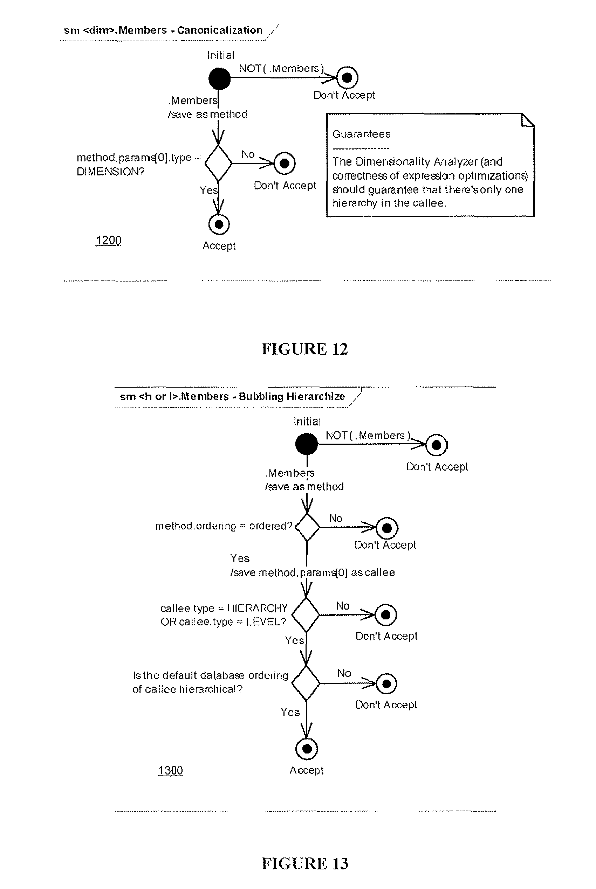

When the method's Callee is visited before its parameters a .Members optimization can be used. Corresponding .Members rules take into account that the next token after the Callee would be EndOfSiblings, because there should be no parameters in .Members calls. Anywhere where there is an expected list of items, EndOfSiblings should be returned at the end of the list, even if it's empty. A <dimension>.Members can be transformed to <hierarchy>.Members. Figure 12 illustrates a flowchart of the corresponding optimization **1200** which mutates method into <method.params[0].hier>.Members and generates metadata <method.params[0].hier>.Members by copying hierarchy, level, and ordering decorations from method and sets duplicate-generation decoration to "no", which should be same in method.

A bubbling up of a Hierarchize() function may be performed as illustrated in the flowchart **1300** of Figure 13. The optimization mutates method into Hierarchize(<method>) and generates the following metadata: method for ordering decoration: "not ordered" - hierarchy, level, and duplicate-generation decorations: unchanged. Hierarchize() for - ordering decoration: "ordered" -hierarchy, level, and duplicate-generation decorations: copy from method.

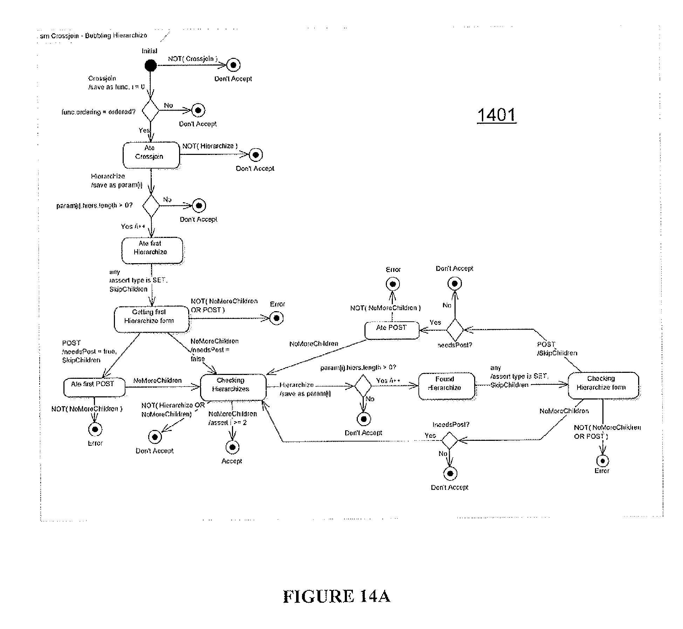

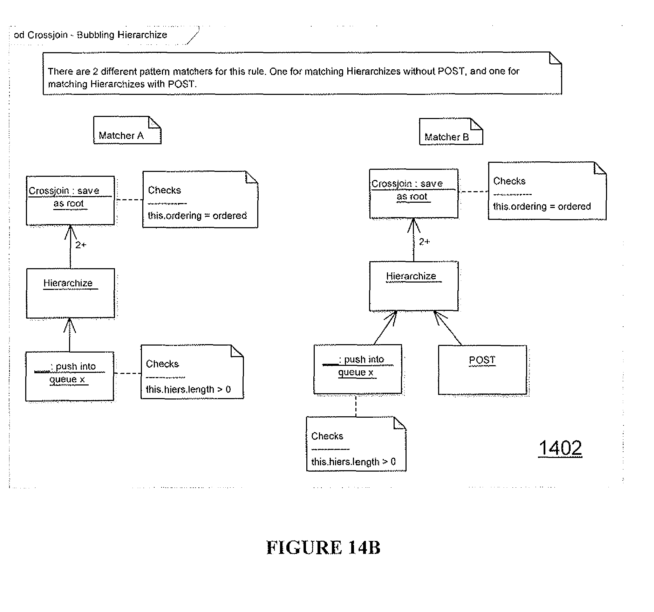

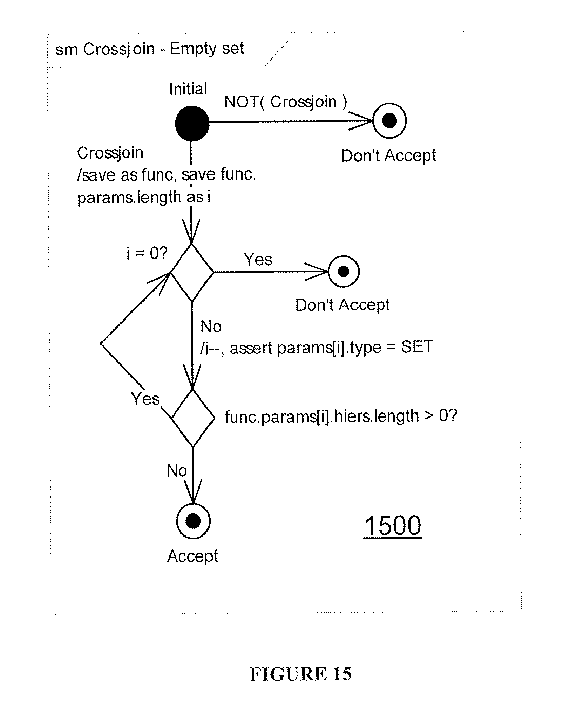

The expression optimizer is configured with two Crossjoin optimizations, one for bubbling up Hierarchize() and another for handling empty sets. Bubbling up Hierarchize() may be implemented using a state machine **1401** as illustrated in Figure 14A or an explicit pattern matcher **1402** as illustrated in Figure 14B. A flowchart **1500** for handling empty sets with Crossjoin is illustrated in Figure 15.

The optimization rule of state machine **1401** for bubbling up Hierarchize() of Figure 14A is configured to Mutate func into Hierarchize( Crossjoin( <param[0]>.params[0], <param[1]>.params[0] [, <param[i]>.params[0] ... ]) [if needsPost: , POST] ). The rule generates metadata for func including ordering decoration: "not ordered", and level, hierarchy, and duplicate-generation decorations: unchanged. The rule also generates metadata for Hierarchize() including ordering decoration: "ordered" -level, hierarchy and duplicate-generation decorations: copy from func. The plan builder is configured accordingly to be able to generate ordered and unordered versions of Crossjoin. It is noted that the unordered version may be simpler.

The explicit patter matcher **1402** is illustrated in Figure 14B and can mutate root into Hierarchize (( Crossjoin( x[0], x[1], ... ) ) or root into Hierarchize( Crossjoin( x[0], x[1], ... ), POST ). Metadata generation of Hierarchize() includes ordering decoration: "ordered" and for level, hierarchy, and duplicate-generation decorations: copy from root. Metadata generation for Crossjoin() includes ordering decoration: "not ordered" -level, hierarchy, and duplicate-generation decorations: copy from root.

A flowchart for the optimization rule of an Empty set **1500** involving Crossjoin is illustrated in Figure 15. The optimization rule **1500** mutates func into {} and generates metadata by using hierarchy and level decorations: none, ordering decoration: copy from func and duplicate-generation decoration: "no".

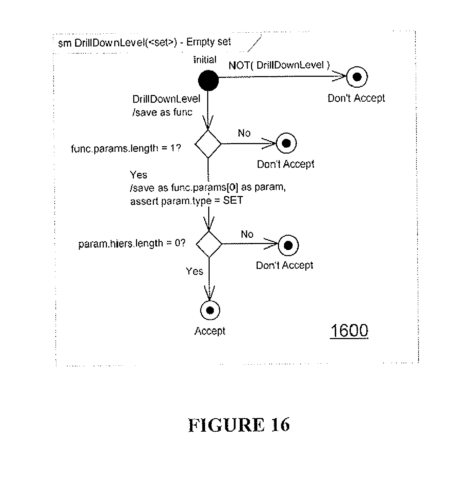

The expression optimizer **1120** includes a number of DrillDownLevel optimizations. A flowchart of an optimization rule **1600** for DrillDownLevel(<set>) on an Empty Set is illustrated in Figure 16. The optimization rule mutates func into {} and adds metadata {} and includes hierarchy and level decorations: none, ordering decoration: copy from func and duplicate-generation decoration: "no".

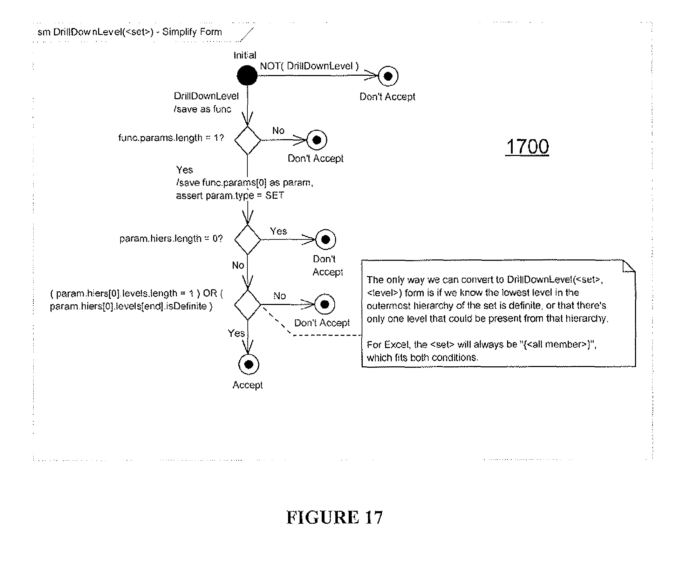

A flowchart of another optimization rule **1700** for a DrillDownLevel is illustrated in Figure 17. The optimization rule **1700** mutates func into DrillDownLevel(<param>, <param.hiers[0].levels[end]>). It generates metadata for DrillDownLevel(<set>, <level>) including hierarchy, level, ordering, and duplicate-generation decorations: copy from func. It also generates metadata for <param.hiers[0].levels[end]> including hierarchy decoration: the hierarchy that the level belongs to (DEFINITE), level decoration: the level itself (DEFINITE), ordering decoration: "not ordered" (irrelevant for levels), and duplicate-generation decoration: "no" (irrelevant for levels).

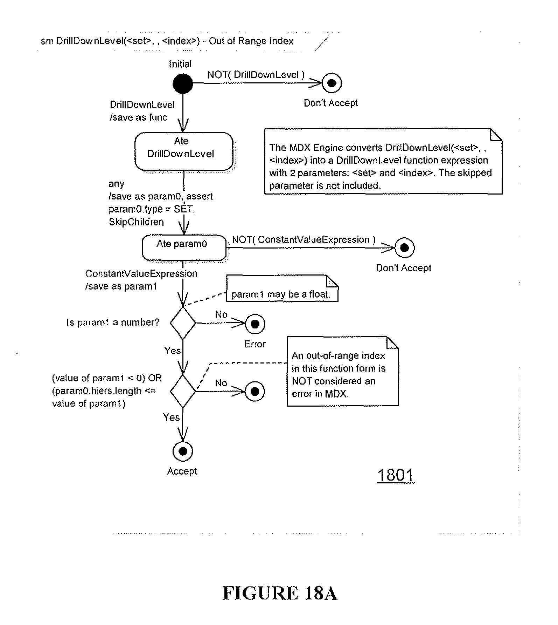

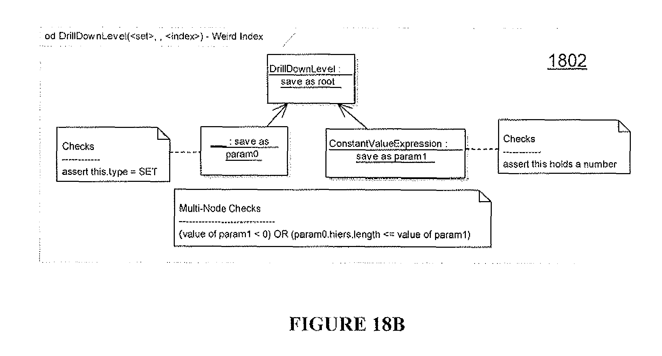

A state machine **1801** of another optimization rule for a DrillDownLevel is illustrated in Figure 18A. The state machine **1801** mutates func into <param0> but does not change metadata. A corresponding explicit pattern matcher **1802** is illustrated in Figure 18B. The pattern matcher **1802** mutates root into <param0> and correspondingly does not change metadata.

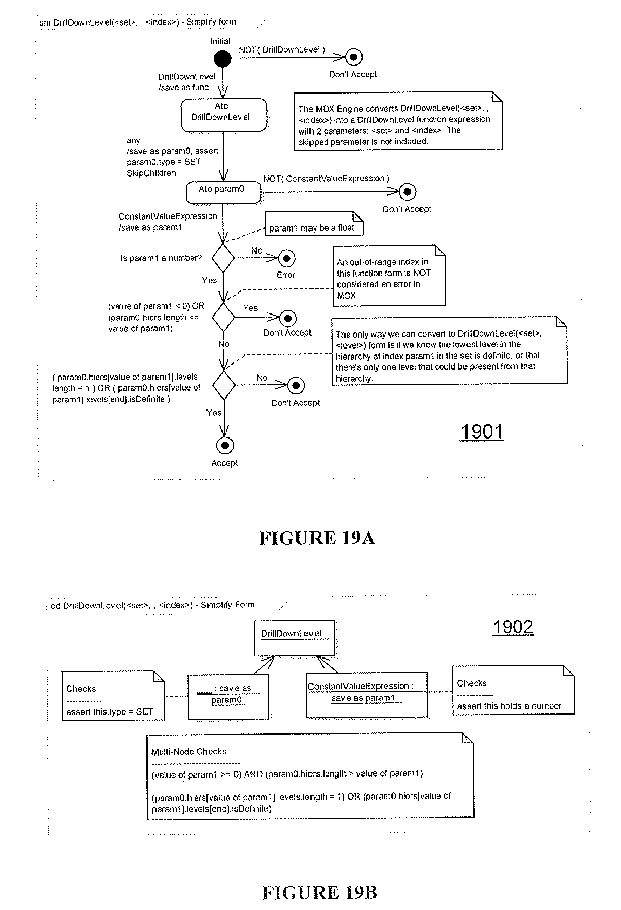

A state machine **1901** of a further optimization rule for a DrillDownLevel is illustrated in Figure 19A. The state machine **1901** simplifies DrillDownLevel(<set>, , <index>) into DrillDownLevel(<set>, <level>) by mutating param1 into <param0.hiers[value of paraml].levels[end]>. The state machine **1901** generates metadata for <param0.hiers[value of paraml].levels[end]> including hierarchy decoration: the hierarchy that the level belongs to (DEFINITE), level decoration: the level itself (DEFINITE), ordering decoration: "not ordered" (irrelevant for levels), and duplicate-generation decoration: "no" (irrelevant for levels). A corresponding explicit pattern matcher **1902** is illustrated in Figure 19B. The pattern matcher **1902** performs corresponding mutation and metadata generation as the state machine **1901.**

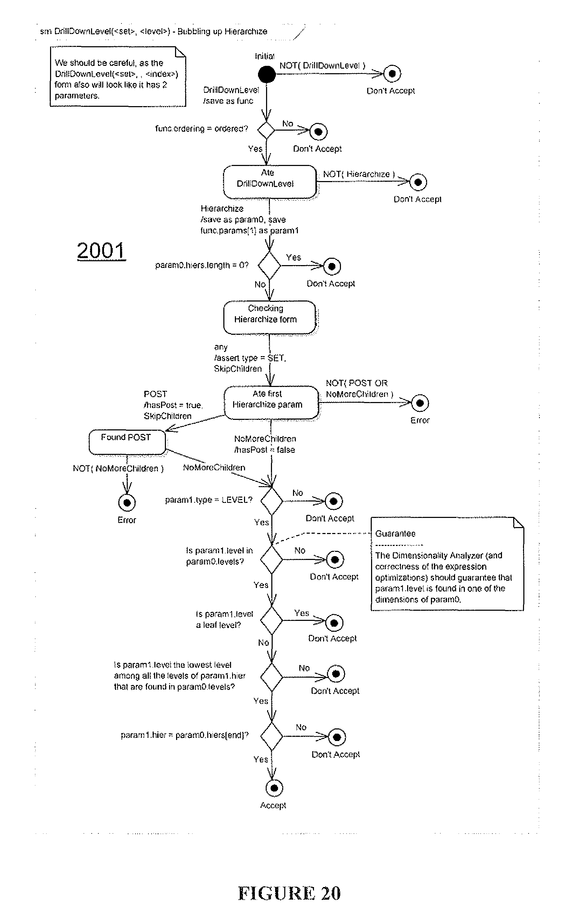

A state machine **2001** of a further optimization rule for a DrillDownLevel is illustrated in Figure 20. The state machine **2001** uses DrillDownLevel(<set>, <level>) for bubbling up Hierarchize() by mutating func into Hierarchize( DrillDownLevel( <param0>.params[0], <param1>) [if hasPost: ,POST] ). The state machine **2001** generates metadata for Hierarchize() including hierarchy, level, and duplicate-generation decorations: copy from func, and ordering decoration: "ordered". It generates metadata for DrillDownLevel() including hierarchy, level and duplicate-generation decorations: copy from func; and ordering decoration: "not ordered". A corresponding explicit pattern matcher **700** is illustrated in Figure 7 which is also described elsewhere herein. The pattern matcher **700** mutates root into Hierarchize(DrillDownLevel(hparam, param1) [if optPost != null: , POST]), and generates metadata for Hierarchize() including hierarchy, level and duplicate-generation decorations: copy from root, and ordering decoration: "ordered", as well as metadata for DrillDownLevel() including hierarchy, level and duplicate-generation decorations: copy from root, and ordering decoration: "not ordered".

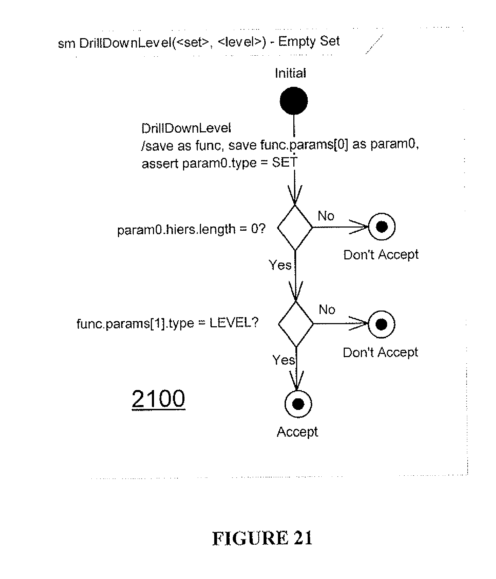

A flowchart of another optimization rule **2100** for a DrillDownLevel(<set>,<level>) with an Empty set is illustrated in Figure 21. The optimization rule **2100** mutates func into {}. It generates metadata for {} including hierarchy and level decorations: none, ordering decoration: copy from func, and duplicate-generation decoration: "no".

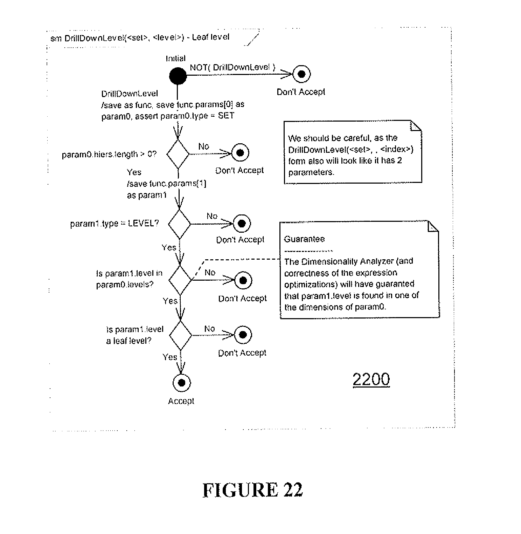

A flowchart of another optimization rule **2200** for a DrillDownLevel(<set>,<level>) at Leaf level is illustrated in Figure 22. The optimization rule 2200 mutates func into <param0> but does not change corresponding metadata.

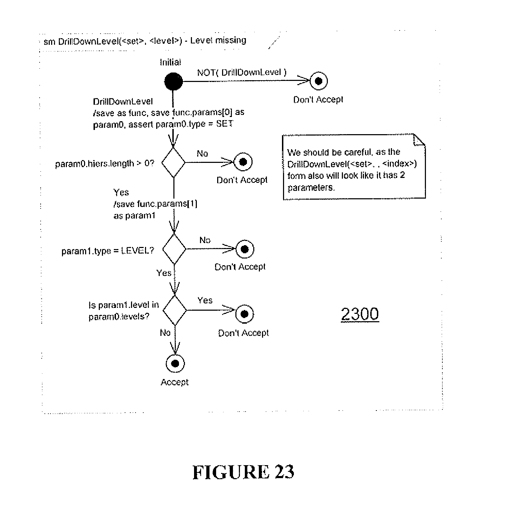

A flowchart of another optimization rule **2300** for a DrillDownLevel(<set>,<level>) with Level missing is illustrated in Figure 23. The optimization rule **2300** mutates func into <param0> but does not change corresponding metadata.

The expression optimizer **1120** further includes a number of DrillDownMember optimizations.

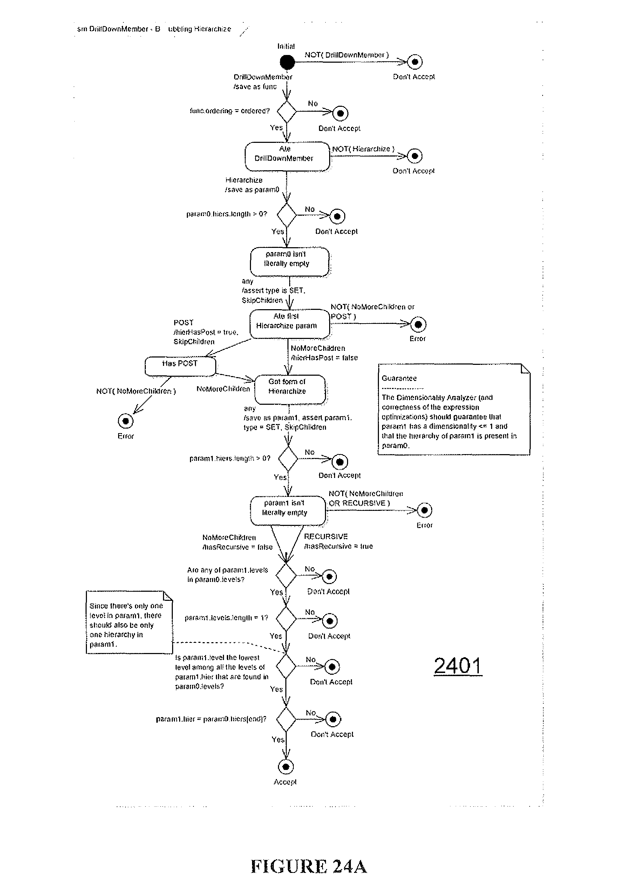

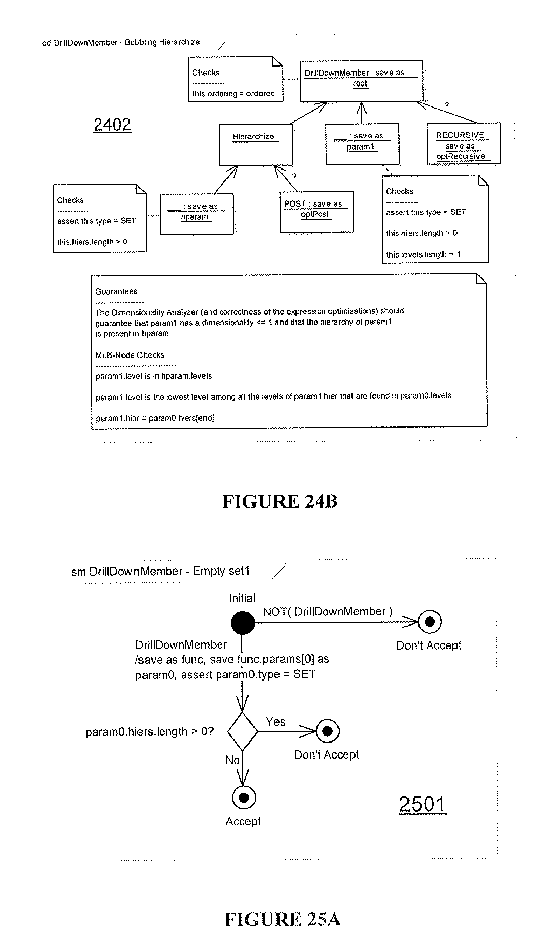

A state machine **2401** of an optimization rule for a DrillDownMember is illustrated in Figure 24A. The state machine **2401** uses DrillDownMember for bubbling up Hierarchize() by mutating func into Hierarchize( DrillDownMember( <param0>.params[0], <param1>[if hasRecursive: , RECURSIVE]) [if hasPost: , POST]). The state machine **2401** generates metadata for Hierarchize() including hierarchy, level and duplicate-generation decorations: copy from func -ordering decoration: "ordered". It generates metadata for DrillDownMember() including hierarchy, level and duplicate-generation decorations: copy from func, and ordering decoration: "unordered". A corresponding explicit pattern matcher **2402** is illustrated in Figure 24B. The pattern matcher **2402** mutates root into Hierarchize(DrillDownMember(hparam, param1 [if optRecursive != null: , RECURSIVE]) [if optPost != null: , POST]) and generates metadata for Hierarchize() including hierarchy, level and duplicate-generation decorations: copy from root, and ordering decoration: "ordered". It also generates metadata for DrillDownMember() including hierarchy, level and duplicate-generation decorations: copy from root, and ordering decoration: "unordered".

A flowchart of another optimization rule **2501** for a DrillDownMember with Empty set1 is illustrated in Figure 25A. The optimization rule **2501** mutates func into {} and generates metadata for {} including hierarchy and level decorations: none, ordering decoration: copy from func, and duplicate-generation decoration: "no".

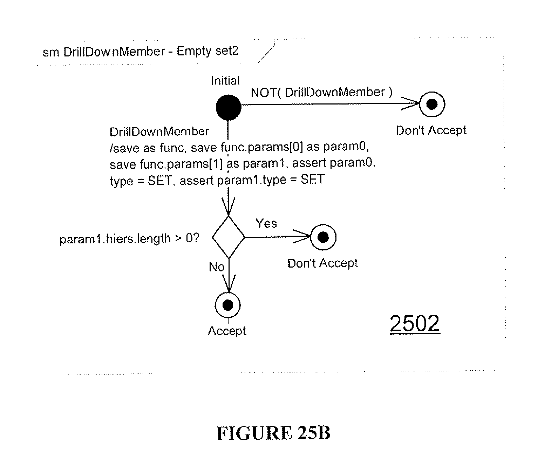

A flowchart of another optimization rule **2502** for a DrillDownMember with Empty set2 is illustrated in Figure 25B. The optimization rule **2502** mutates func into <param0> and changes no metadata.

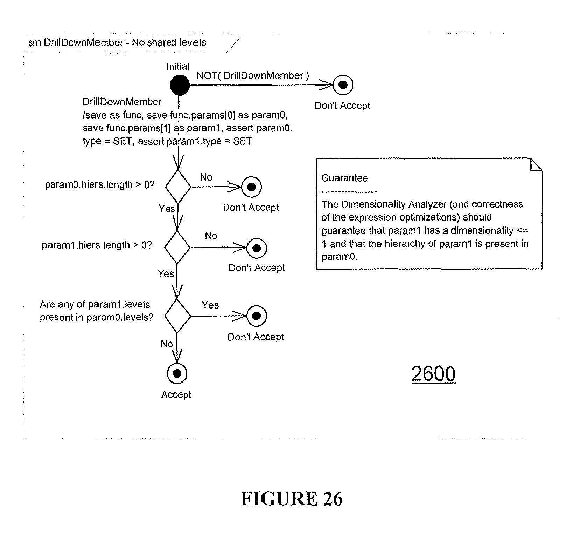

A flowchart of another optimization rule **2600** for a DrillDownMember with no shared levels is illustrated in Figure 26. The optimization rule **2600** mutates func into <param0> and changes no metadata.

The expression optimizer **1120** includes a number of Except optimizations.

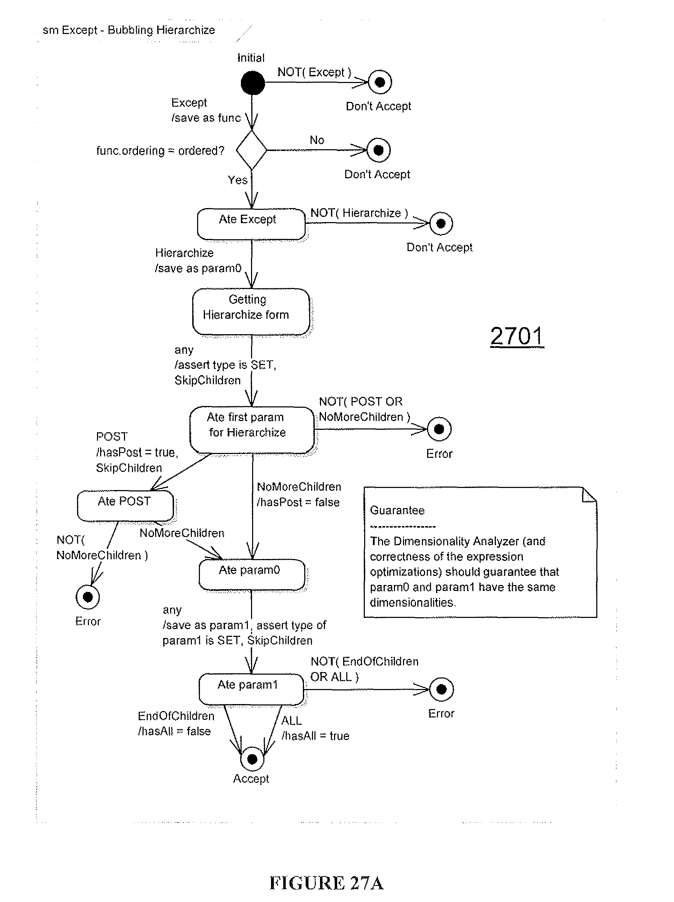

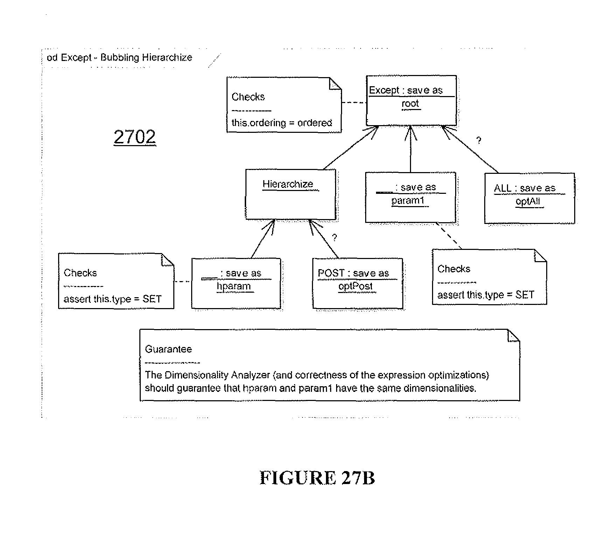

A state machine **2701** of an optimization rule for Except is illustrated in Figure 27A. The state machine **2701** uses Except for bubbling up Hierarchize() by mutating func into Hierarchize( Except( <param0>.params[0], <param1>[if hasALL: , ALL]) [if hasPost: , POST]). The state machine **2701** generates metadata for Hierarchize() including hierarchy, level and duplicate-generation decorations: copy from func, and ordering decoration: "ordered", as well as for Except() including hierarchy, level and duplicate-generation decorations: copy from func, and ordering decoration: "not ordered". A corresponding explicit pattern matcher **2702** is illustrated in Figure 27B. The pattern matcher **2702** mutates root into Hierarchize(Except(hparam, param1 [if optAll != null: , optAll]) [if optPost != null: , optPost]). The pattern matcher **2702** generates metadata for Hierarchize() including hierarchy, level and duplicate-generation decorations: copy from root, and ordering decoration: "ordered". It also generates metadata for Except() including hierarchy, level and duplicate-generation decorations: copy from root, and ordering decoration: "unordered".

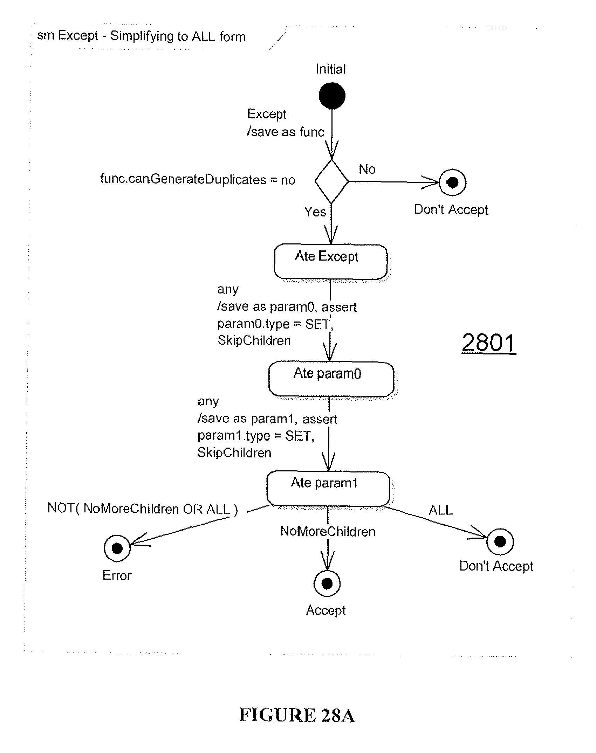

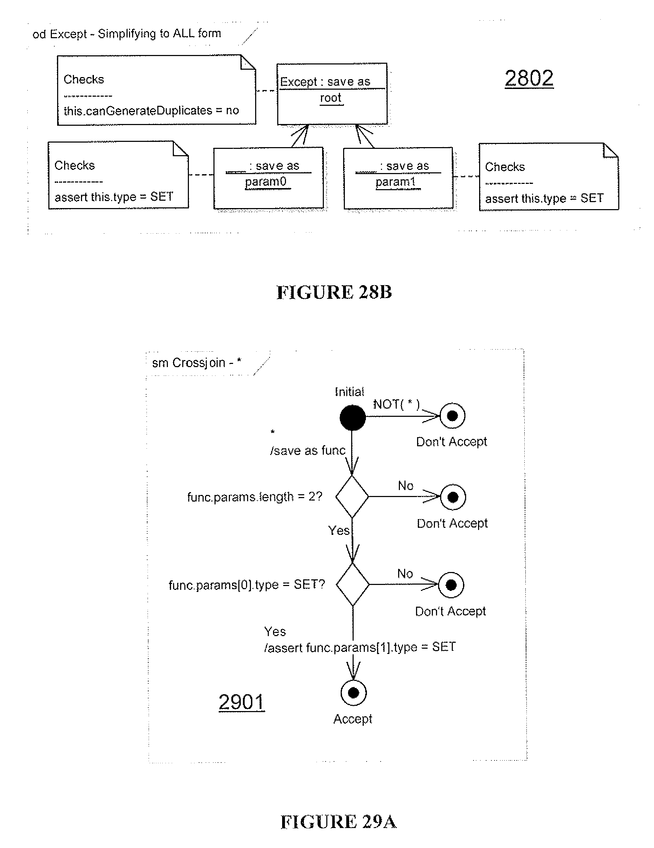

A state machine **2801** of an optimization rule for simplifying Except(<set>, <set>) into Except(<set>, <set>, ALL) is illustrated in Figure 28A. The state machine **2801** mutates func into Except(<param0>, <param1>, ALL) and generates metadata for Except(<param0>, <param1>, ALL) including hierarchy, level and ordering decorations: copy from func, and duplicate-generation decoration: "no". A corresponding explicit pattern matcher **2802** is illustrated in Figure 28B. The pattern matcher **2802** mutates root into Except(<param0>, <param1>, ALL) and generates metadata for Except(<param0>, <param1>, ALL) including hierarchy, level, ordering and distinctness decorations: copy from root, and duplicate-generation decoration: "no".

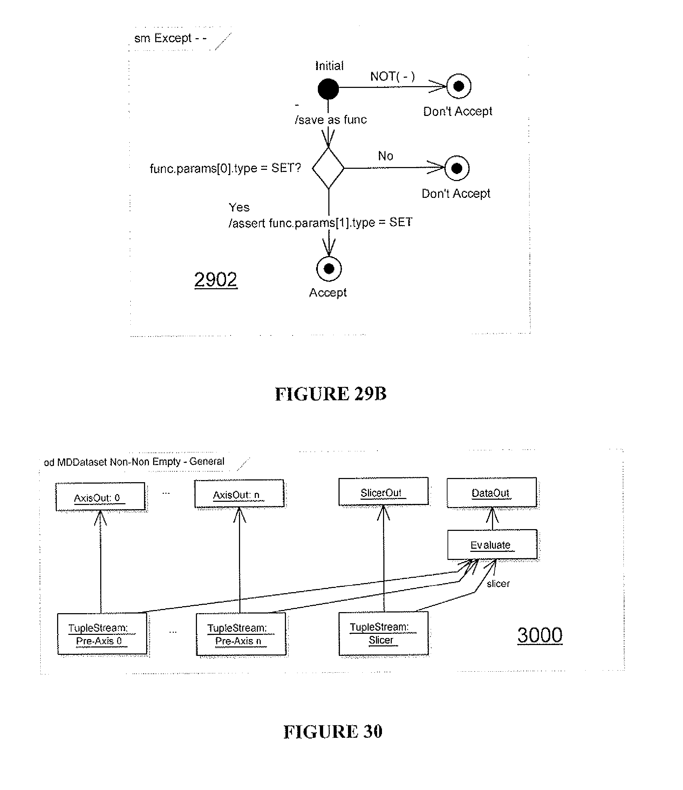

The expression optimizer **1120** or the expression creator **1113** may be configured to replace predetermined alternative forms of predetermined expressions with their respective canonical forms. With respect to expressions the term canonical form refers to a predetermined form of an expression similar to resolving aliases. For example, in MDX "*" can refer to Crossjoin, or "-" can refer to Except. A flowchart **2901** for replacing "*" with Crossjoin and a flowchart **2902** for replacing "-" with Except **2902** are illustrated in Figure 29A and Figure 29B. No metadata needs to be changed in the two cases. This transformation may be performed early in the expression creator **1113,** which can simplify configuration and/or performance of the tree decorator, or it can be performed in the expression optimizer **1120.** Canonicalizing forms early can be useful because this can simplify the tree decorator, expression optimizer, and plan builder.

### Plan Builder and Plan Optimizer

The plan builder **1130** is configured to transform the optimized expression tree into an execution plan. The execution plan corresponds to a transformed version of the optimized expression tree. The execution plan is used to identify common patterns of plan nodes that may be reduced to simpler, optimized forms which may require less computational effort when executed. Such aspects may be identified in two or more plan nodes.

The execution plan is not used directly to execute an MDX query rather the execution plan corresponds an intermediate form used to prepare an execution tree which is subsequently translated into SQL queries and/or commands.

The plan builder is configured to plan order-preserving variant plan fragments for a plurality of expressions including literal sets of "definite" members, for example, for literal set expressions holding only measures) and Crossjoin() invocations.

The plan builder is configured to be able to generate different plan representations for expressions depending on whether they might generate duplicates or not. In some cases, given a specific function, the equivalent plan fragment which handles duplicate generation will be much more complex than the equivalent plan fragment which does not handle duplicate generation. According to an embodiment of the present invention optimization rules are preferred that reduce the number of expressions that must handle duplicates.

The plan builder uses information from the order analyzer in choosing node configurations to use for modeling different expressions. Some MDX functions like TopCount() are inherently order-preserving. Other expressions like DrillDownLevel() may be found in order-preserving and non-order-preserving varieties. There may be different plan node configurations possible for order-preserving and non-order-preserving versions of the same expression or function.

The generated execution plans is based on a conceptual framework of properties, tuples and members which are used to refer to important aspects of multidimensional databases. It is noted that the terms "tuple" has a predetermined definition in MDX that may differ in various aspects from how it is used with reference to execution plans. It is noted that with reference to execution plans, the term tuple is used to refer to a more mathematical definition and should not be confused with the term tuple as defined within MDX, for example. The idea is that streams of tuples pass through execution plan nodes, which work to filter and combine them in various ways. The link between two execution plan nodes can always be thought of as a tuple stream. Each value in a tuple corresponds to a value for a "property". Each tuple in a tuple stream will hold values for the same set of properties. Therefore, execution plan nodes must refer to properties in a way that maintains this consistency at the conceptual level.

Properties in tuple streams are herein referred to by name, such as "rank". Also a macros may be used to represent a set of properties that cannot be fully specified until the execution plan is built. For example, the macro "MemberProperties(Customer)" would refer to the properties fully describing members of the "Customer" hierarchy. Properties may be configured to share similarities with columns of a table and tuples with rows of the table. For According to an embodiment of the present invention predetermined properties may be computed in software instead of coming directly from columns. For example, member unique names may be constructed dynamically based on values from multiple columns.

Links between execution plan nodes describe tuple streams that may flow in the corresponding execution tree. The operations described by certain plan nodes may involve pooling input tuples to find relationships between them. For example, the behavior described by a Rank node may require ordering tuples according to their values for certain properties, which in turn may require pooling. Other nodes may describe behavior that requires the partial pooling of input, for example a SubQuery node, and some nodes describe behavior that can be completely streaming, for example a Filter node.

The plan builder **1130** may employ a number of or all general aspects according to different embodiments of a general plan builder or system as described herein. Further to these aspects, the plan builder **1130** is configured to account for a number of aspects that are special to MDX including, for example MDX member properties and MDX specific properties regarding execution plan nodes.

### MDX Member properties

According to an embodiment of the present invention groups of properties in a tuple stream may be used to store descriptions of MDX members in MDX hierarchies. The set of properties that can be used to uniquely describe members in a specific hierarchy and generate all the dimension properties specified by an MDX query is called the "member properties" for that hierarchy. Member properties may include levelNumber, key(0), key(1) ...key(N). The key properties are member keys indexed by level number. For a given tuple that describes a member at level "m", the values of properties "key(0)" through "key(m-1)" give the keys of the member's ancestors on the indicated levels. "key(m)" would give the member's own key. "key(m+1)" through "key(N)" should be NULL. Keys below the member's level will be NULL.

A tuple stream need not include properties for keys for which all of the tuples have NULLs. For example, if the lowest level whose members are described in a tuple stream is level 3, then the key(4) property is unnecessary. These NULLed out keys may need to be added later on in order to make two tuple streams compatible for a Union.

Member properties describing members from a hierarchy, for example "h", may be selected using macros, for example "MemberProps(h)". Furthermore "hierarchization properties" for a hierarchy "h" are the properties that can be used to derive a hierarchical ordering of a tuple stream, in order. Hierarchization properties may be selected using "HierProps(h)" and are a subset of the member properties, for example. With reference to execution plans, MemberProps and HierProps may include keys certain or all levels in the hierarchy. Key properties that have no effect may be ignored in a particular stream. MDX tuples are described by tuple streams describing members from multiple hierarchies. Tuples may also contain values for extra properties which are not part of member descriptions, similar to ranks.

### Execution Plan Nodes

A plan builder according to an embodiment of the present invention may comprise a predetermined number of plan nodes. Execution plan nodes may have input tuple streams coming from other nodes. An input tuple stream may be referred to by using a corresponding name. According to an embodiment of the present invention nodes may have parameters.

A plan node according to an embodiment of the present invention may be a LevelSource node having no inputs but parameters including hierarchy and levels. LevelSources produces the main streams of tuples that are pumped through an execution plan and supplies tuples which describe members of a set of levels in a hierarchy.

A plan node may further be a DefaultMembers node having no inputs but hierarchies as parameters. A DefaultMembers node produces a single tuple that describes a single MDX tuple. The members included in the MDX tuple are the "default" members from each of the given hierarchies.

A plan node may be a Crossjoin node having one or more tuple streams as inputs. A CrossJoin node produces a single tuple stream made up of the Cartesian product of the tuples from its input streams. All of the properties from each input stream will be included. A Crossjoin node may be used to combine the representations of, for example, MDX tuples from different sets of hierarchies, similar to how the MDX Crossjoin() function works. Properties with the same names from multiple streams will have to be distinguished somehow. Member-related properties can be distinguished based on hierarchy name.

A plan node may be a SubQuery node having two named tuple streams as inputs. A "Left" stream supplies the tuples that will be filtered for output and a "Right" stream supplies the nodes that are used for comparison. A SubQuery node may have parameters including IN / NOT IN flag, set of properties to be used from the Left input for comparison. A SubQuery provides filtered output from the Left input stream. For each tuple from the Left, a subtuple made up of the values of the specified properties is extracted. When the IN flag is used, only the tuples from the Left for which this subtuple matches a tuple from the Right are passed through as output. When the NOT IN flag is used, only the tuples from the Left for which this subtuple does not match a tuple from the Right are passed through as output.

A node may be a Filter node having one tuple stream as input and may have parameters including predetermined conditions based on property values. A Filter only streams out those tuples from its input that pass a conditional test based on property values. Filters only deal with tuples one at a time. A Filter can't make comparisons between multiple tuples in a stream.

A Union node has one or more tuple streams inputs that must originate from nodes that have the same set of properties. A Union node ties different tuple streams together into one. It is assumed that the input tuple streams are property-compatible. This means that they all have the exact same set of properties. In execution plans, Project nodes will generally be used for the Union inputs to make sure that the input property sets match.

A Project node has one tuple stream as input and corresponding properties as parameters. A Project node specifies the exact set of properties that should be output from the input stream. Properties that are present in the input tuple stream but that are not found in the given set of properties should be dropped. Any extra properties are added as constant NULLs. Generally, extra properties will only be added to fill in key properties for levels below the lowest level for which a tuple stream could potentially describe members of a given hierarchy.

A plan node may further be a LowestLevelOnly node including one tuple stream as input, which includes descriptions of members from the given hierarchy and the hierarchy as parameters. A LowestLevelOnly node can scan through its input stream to find the lowest level of the given hierarchy for which there are actually members included in the stream. The LowestLevelOnly will only outputs those tuples that include descriptions of members from this level. Unlike other nodes, the behavior described by this node includes checking for the levels for which there are ACTUALLY member in the stream, not just checking for the levels for which the stream could POTENTIALLY contain members.

A Rank node has one tuple stream as input and parameters including rank property name, ordering specification (sets of properties separated by ASC/DESC flags), and optional ordered set of properties for partitioning. A Rank node adds a new rank property to a tuple stream, calculating it based on an "ordering" of existing properties in the input tuples. The "ordering specification" holds multiple groups of properties, each associated with an ASC or DESC flag for "ascending" or "descending". The new rank property is derived by ordering the tuples according to the ordering specification and then ranking the results. Partitioning is used if specified. Ranks are assigned starting with "1". A Rank node may require pooling tuples in order to do inter-tuple calculation.

An example Rank node may require an order specification such as "Customer.key(0), Customer.key(1), ASC, Customer.levNum DESC". There is no partition specified, and the property name is "theRank". This means that the outermost ordering should be based on Customer.key(0) in ascending order. Then the next tie-breaking ordering (more "inner" ordering) should be on Customer.key(1) in ascending order. The "innermost" ordering should be on Customer.levNum in descending order. Ranks are assigned to the property theRank based on this order.

An Evaluate node has one or more tuple streams as input that supply member properties for one or more hierarchies and one named "slicer" tuple stream that supplies member properties for the left-over hierarchies. An Evaluate node has a precondition including that the totality of hierarchies whose members are described in each of the input tuple streams should cover all of the hierarchies found in the cube, with no hierarchy's members described more than once.

An Evaluate crossjoins its input tuple streams together to get a stream that fully specifies members from each hierarchy in order to get exact specifications of cells in the cube. Then a property named "value" is appended to each tuple. This property holds the data values associated with each of the fully-specified cube cells. Member properties for members from the slicer tuple stream do not need to be included in the Evaluate output. An Evaluate may not perform NULL removal. For example, "Null" data values may be included when generating cells for which an MDX cube is missing data.

A NonEmpty node has the same inputs and preconditions as an Evaluate node. The parameters of a NonEmpty node include an ordered set of hierarchies for which tuples describing "non empty" MDX tuples should be output. A NonEmpty node returns the set of tuples from the given hierarchies for which there exists some data when all of the inputs are crossjoined together and data values are retrieved. A NonEmpty node acts similar to an Evaluate node by crossjoining its input streams and retrieving data values for the corresponding cube cells. The tuple stream, however, that is output is the set of tuples on the specified hierarchies for which at least one of the combinations with the other hierarchies resulted in a cell for which data was present.

An AxisOut node has one tuple stream as input and parameters including axis index, a set of hierarchies, boolean indicating whether the axis is the slicer. An AxisOut node may have a number of preconditions including member properties are included in the tuple stream for all of the given hierarchies, as is a "tupleOrdinal" property used for ordering. The AxisOut node marks one of multiple roots of the execution plan. The AxisOut stream provides tuples that describe MDX tuples, holding member property values for all of the hierarchies included on a specific axis. The tuple stream coming into an AxisOut should also provide a "TupleOrdinal" property used for ordering the MDX tuples.

A DataOut node has one tuple stream as input and a precondition including that properties are included that uniquely identify members from all of the non-slicer axes in a query, as well as a "value" property, which may take on NULL values. The DataOut node marks the root of an execution plan that provides tuples describing data in the result set. DataOut nodes are only used in plans representing queries for MDDatasets. The tuples in the input stream to a DataOut include properties describing members for each hierarchy included on a non-slicer axis of an MDX query. The entire set of member properties for each hierarchy need not be included, just including properties that uniquely specify members is enough. The "value" property will give values associated with the MDX tuples.

A FlatDataOut node has one tuple stream as input and a precondition including that properties should fully describe members from all non-slicer axes in the query, except for axis 0 for which they only have to uniquely identify members. The FlatDataOut node marks the root of an execution plan that provides tuples describing data and metadata in the result set. FlatDataOut nodes are only used in plans representing queries for flattened datasets. The tuples in the input stream to a FlatDataOut include member properties for members from each hierarchy found on a non-slicer axis in an MDX query.

Unlike the DataOut node, the complete MemberProperties(h) set must be included for each hierarchy "h" that is found in a non-slicer, non-0 axis. Members from the 0 axis only need to be uniquely specified. The "value" property gives values associated with the MDX tuples. FlatDataOut allows for special treatment of collapsing multiple NULLs and skipping over some NULLs.

An AxisSource node may be similar to an AxisOut node, however, the AxisSource node may not have another node to provide it a true "tuple stream" as input. Instead, the input tuple stream is derived from the results of an associated SQL query, for example.

A DataSource node may be similar to a DataOut node, however, it may not have another node to provide it a true "tuple stream" as input. Instead, the input tuple stream is derived from the results of an associated SQL query.

A FlatDataSource node may be similar to a FlatDataOut node, however, it may not have another node to provide it a true "tuple stream" as input. Instead, the input tuple stream is derived from the results of an associated SQL query.

### MDX plan nodes

Figures 30 to 46 illustrate execution plans for MDX queries, commands and/or constructs supported by the plan builder **1130** and/or plan optimizer **1140.** The execution plans provide abstract descriptions for different types of queries, structures for MDX chunks like literal sets and slicers, and structures for representing MDX function calls. The plan builder 1130 translates an MDX function call into a corresponding portion of the execution plan which may also be referred to as a subtree. The plan builder **1130** may be configured to translate MDX function calls in "canonical form" as discussed herein. Nodes that are referred to as "Tuple Stream" in the diagram are placeholders for arbitrary execution plan subtrees.

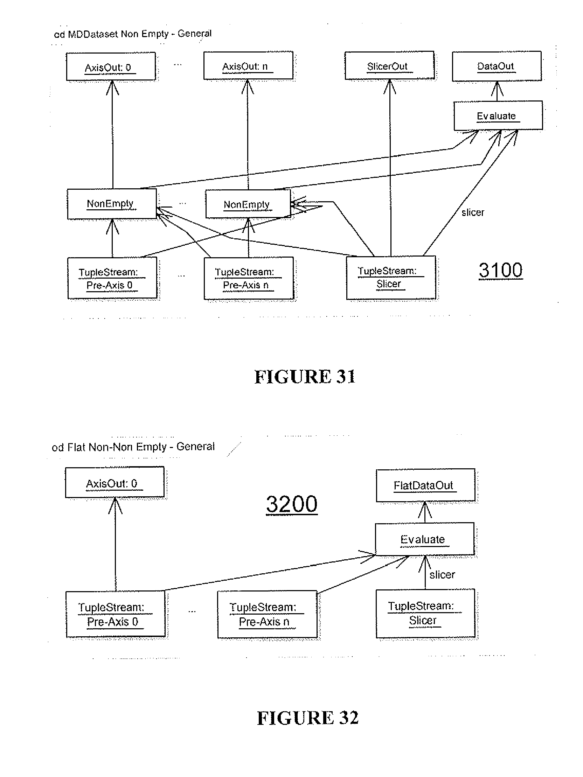

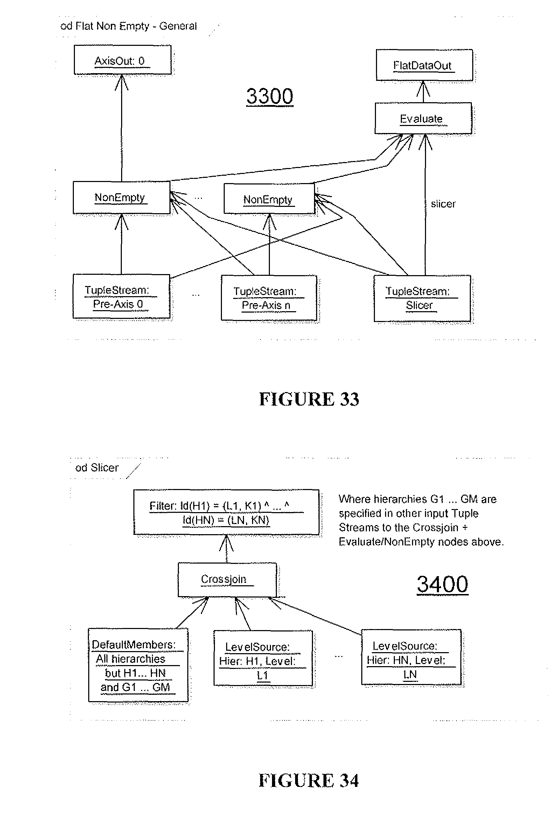

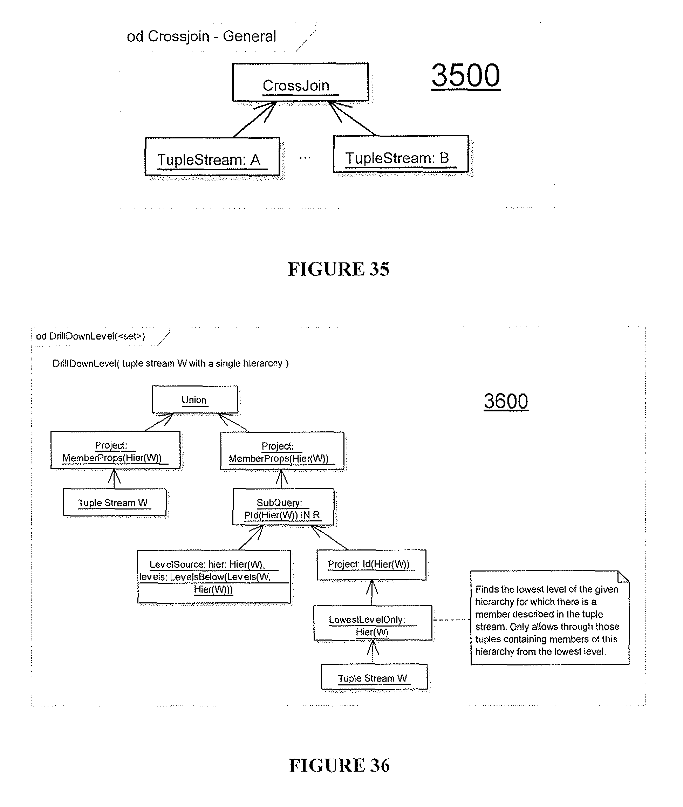

Figure 30 illustrates an execution plan **3000** for a general MDDataset Non-Non Empty. Figure 31 illustrates an execution plan **3100** for a general MDDataset Non Empty. Figure 32 illustrates an execution plan **3200** for a general Flat Non-Non Empty. Figure 33 illustrates an execution plan **3300** for a general Flat Non Empty. Figure 34 illustrates an execution plan **3400** for a MDX Slicer with WHERE clause. Figure 35 illustrates an execution plan **3500** for a Crossjoin.

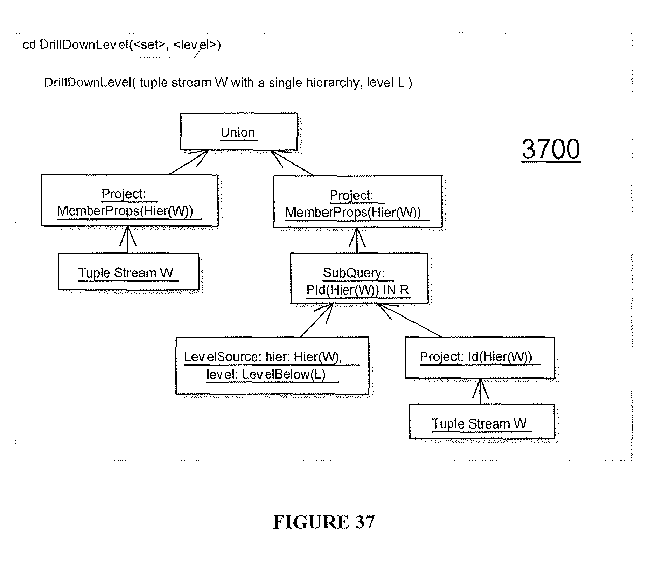

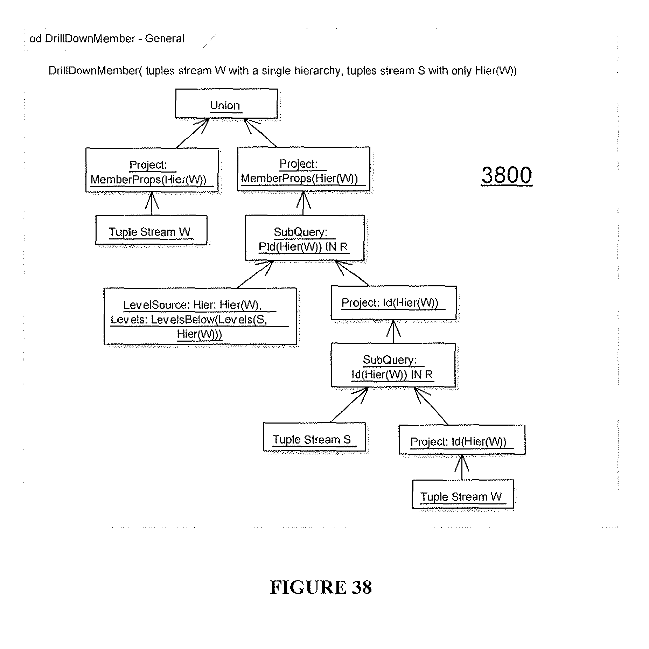

Figure 36 illustrates an execution plan **3600** for a DrillDownLevel(<set>). The plan builder **1130** and/or plan optimizer **1140** may be configured to translate DrillDownLevel(<set>) into DrillDownLevel(<set>,<level>). Figure 37 illustrates an execution plan **3700** for a DrillDownLevel(<set>,<level>). Figure 38 illustrates an execution plan **3800** for a general DrillDownMember.

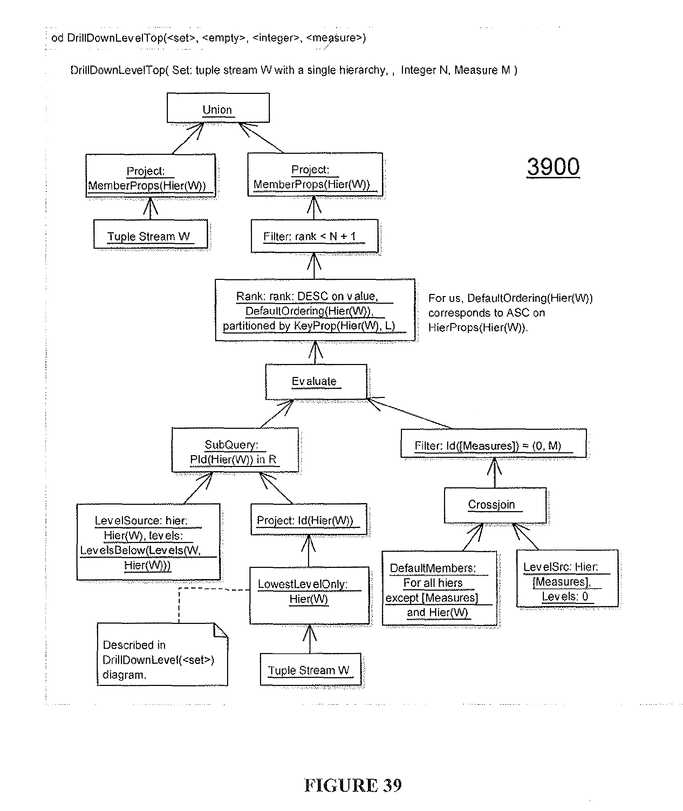

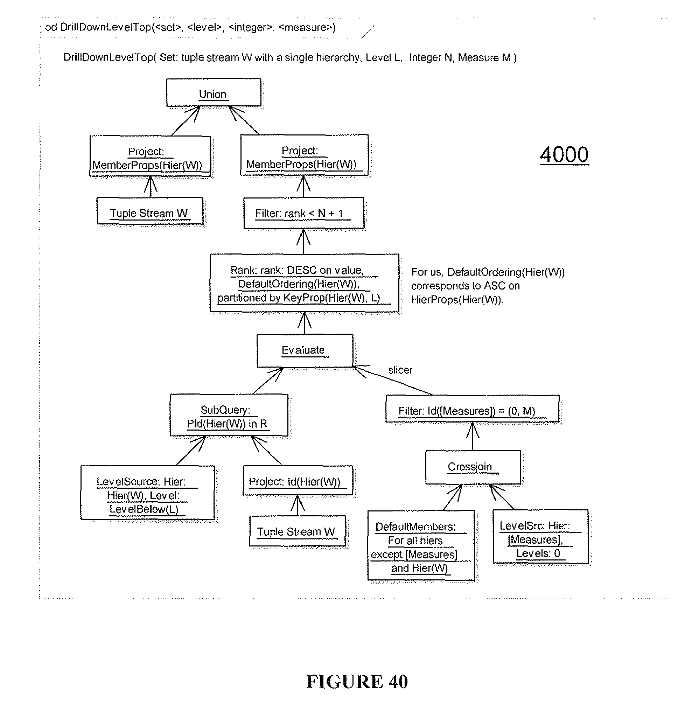

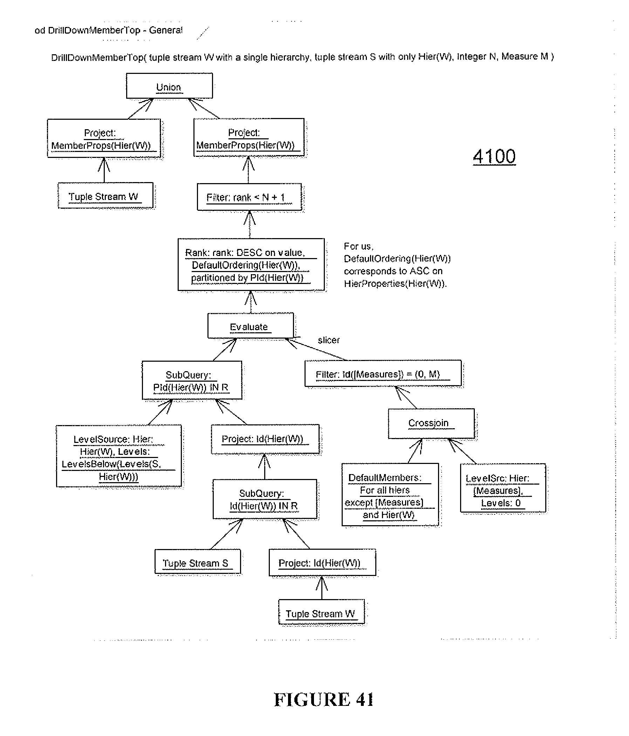

Figure 39 illustrates an execution plan **3900** for a DrillDownLevelTop( <set>, <empty>, <integer>, <measure>). An execution plan for a DrillDownLevelBottom( <set>, <empty>, <integer>, <measure>) (not illustrated) and the execution plan **3900** are similar. The plan builder **1130** and/or plan optimizer **1140** may be configured to translate DrillDownLevelTop/Bottom( <set>, <empty>, <integer>, <measure>) into DrillDownLevelTop( <set>, <level>, <integer>, <measure>). This translation may be performed early by the plan builder **1130.** An execution plan **4000** for DrillDownLevelTop( <set>, <level>, <integer>, <measure>) is illustrated in Figure 40. An execution plan **4100** for a general DrillDownMemberTop is illustrated in Figure 41.

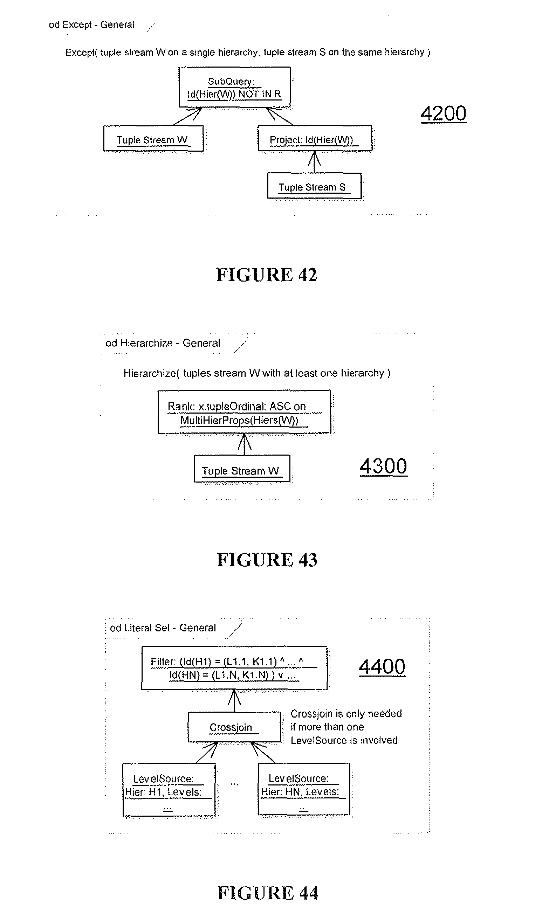

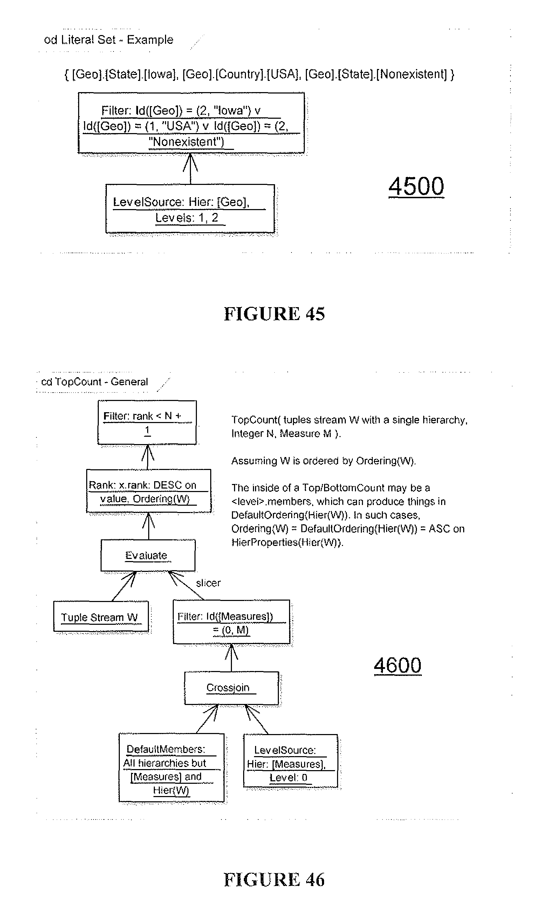

Figure 42 illustrates an execution plan **4200** for Except General. Figure 43 illustrates an execution plan **4300** for general Hierarchize. Figure 44 illustrates an execution plan **4400** for a general Literal Set. An execution plan **4500** for an example Literal Set is illustrated in Figure 45. Figure 46 illustrates an execution plan **4600** for a general TopCount. A corresponding execution plan for BottomCount (not illustrated) is similar.

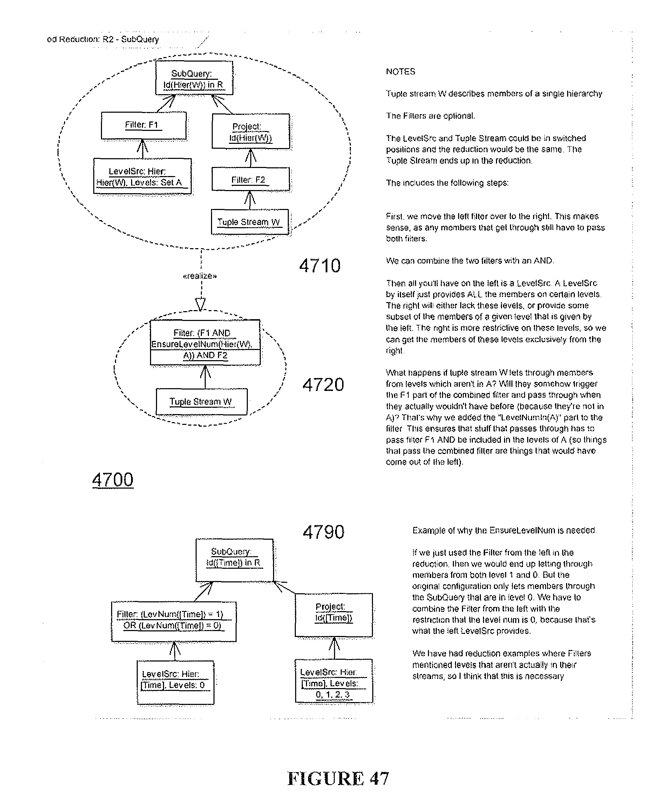

Figure 47 to 62 illustrate a number of reductions of initial execution plans to reduced or optimized execution plans that may be applied by the plan optimizer **1140.** According to some embodiments some of the reductions or some aspects of a reduction may be performed by the plan optimizer and the realizer.

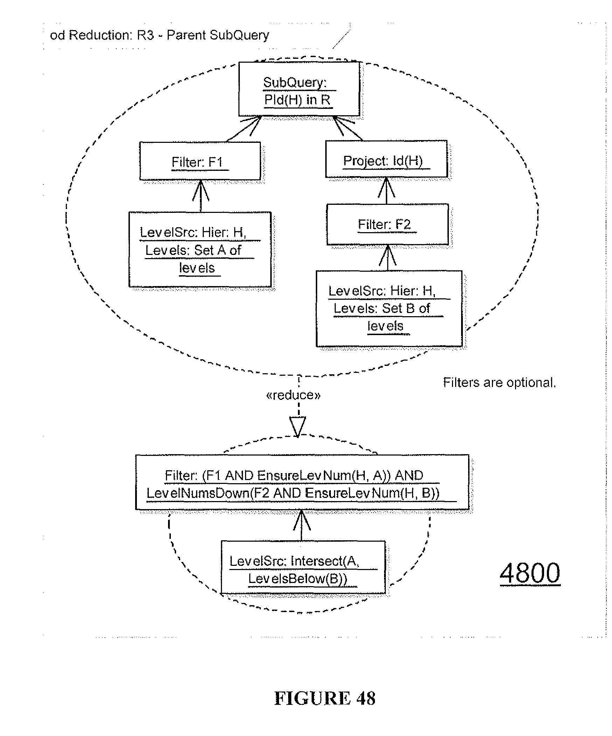

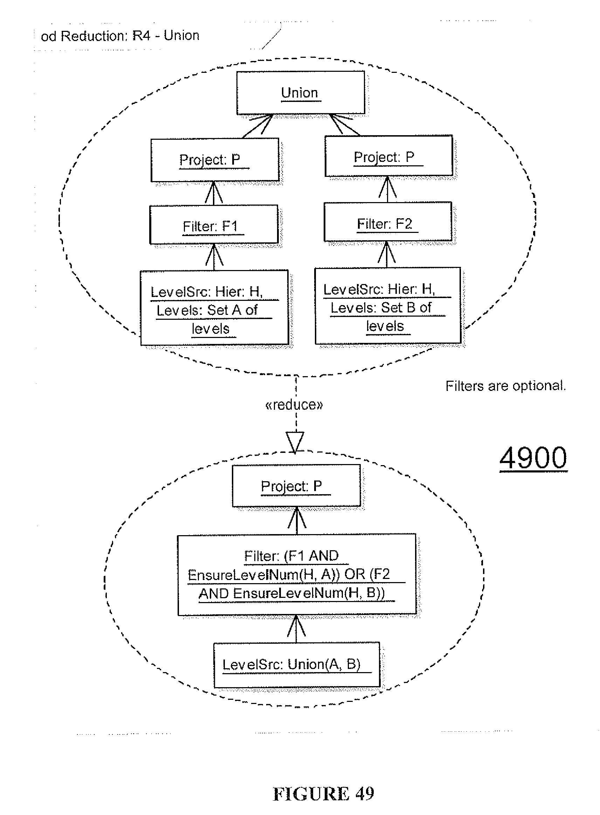

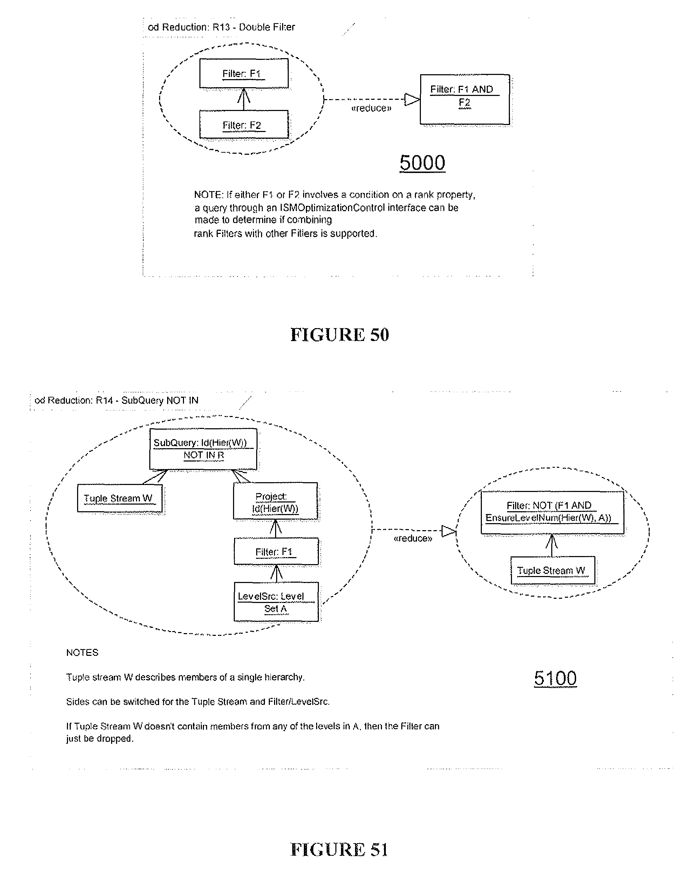

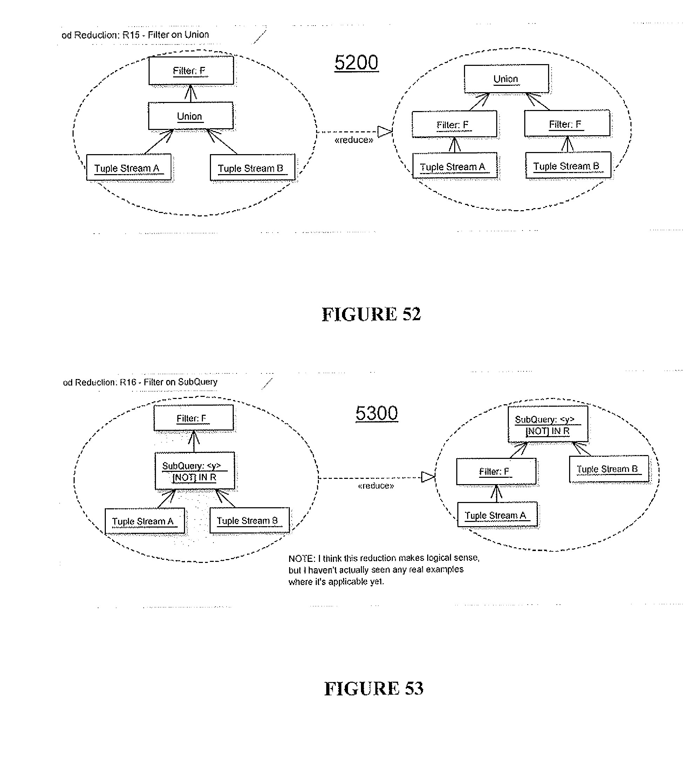

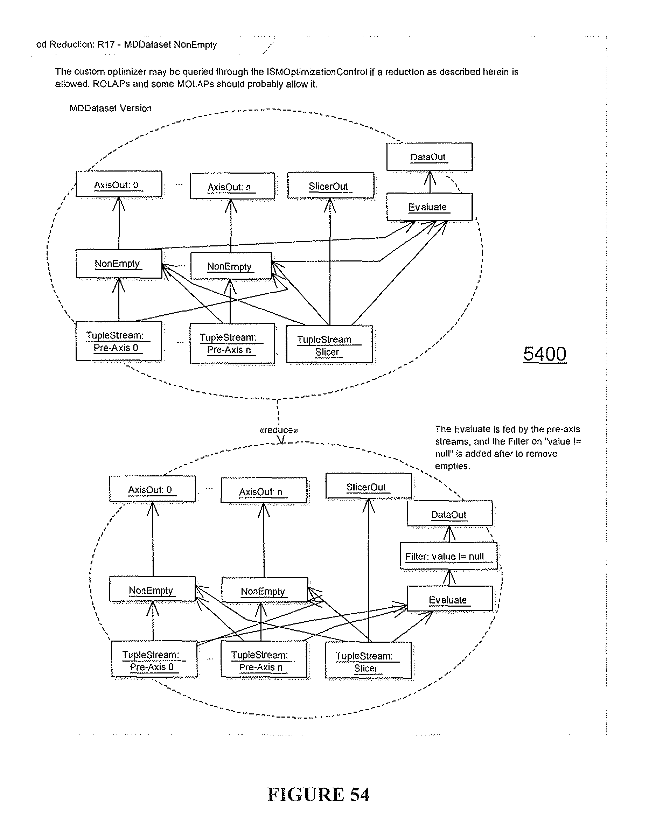

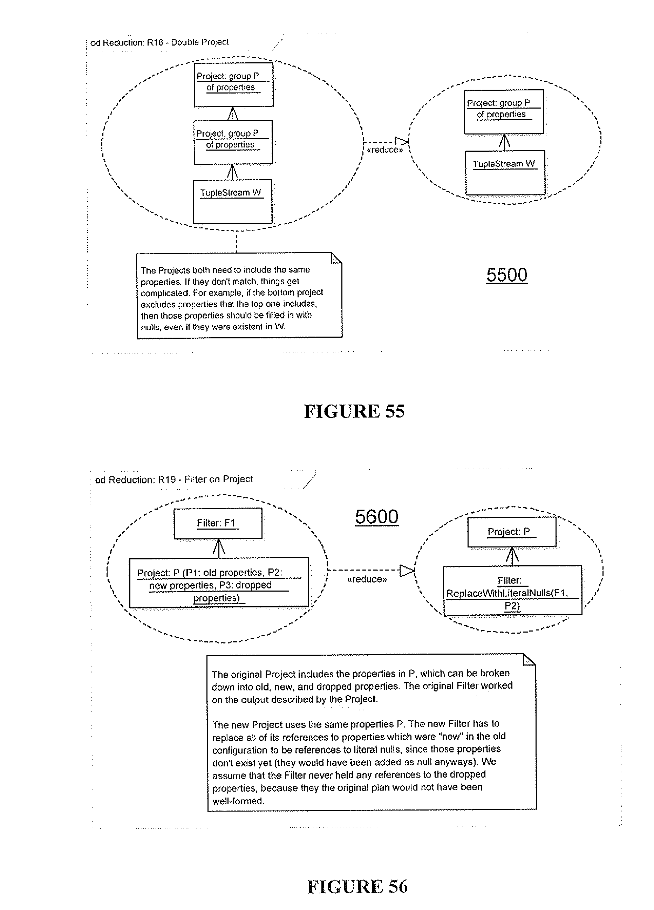

Figure 47 illustrates a reduction **4700** for a SubQuery on Id(x), which replaces the execution plan **4710** with execution plan **4720.** A specific example of an execution plan **4710** is referred to by reference numeral **4790.** Figure 48 illustrates a reduction **4800** for a Parent SubQuery. Figure 49 illustrates a reduction **4900** for a Union. Figure 50 illustrates a reduction **5000** for a Double Filter. Figure 51 illustrates a reduction **5100** for a SubQuery NOT IN. Figure 52 illustrates a reduction **5200** for a Filter on Union. Figure 53 illustrates a reduction **5300** for a Filter on SubQuery. Figure 54 illustrates a reduction **5400** for a MDDataset NonEmpty. Figure 55 illustrates a reduction **5500** for a Double Project. Figure 56 illustrates a reduction **5600** for a Filter on Project.

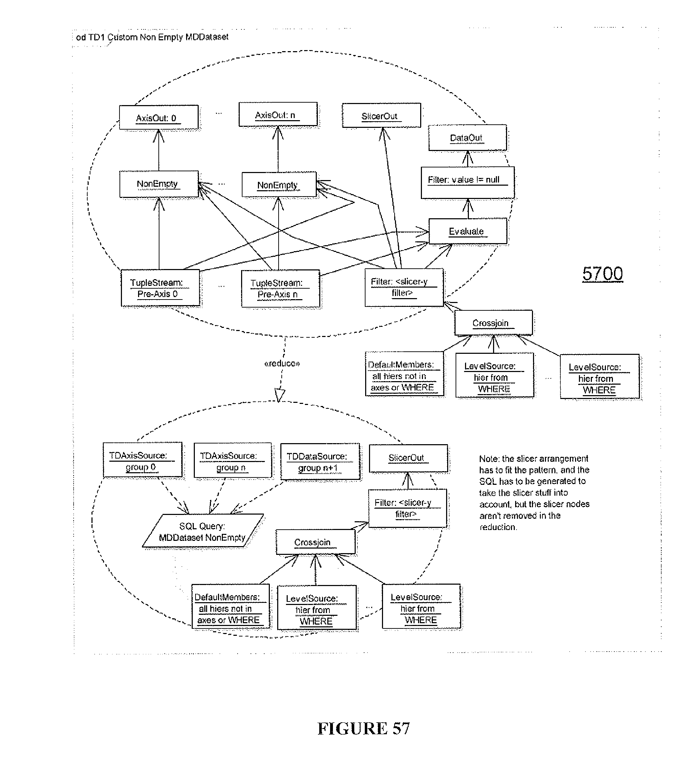

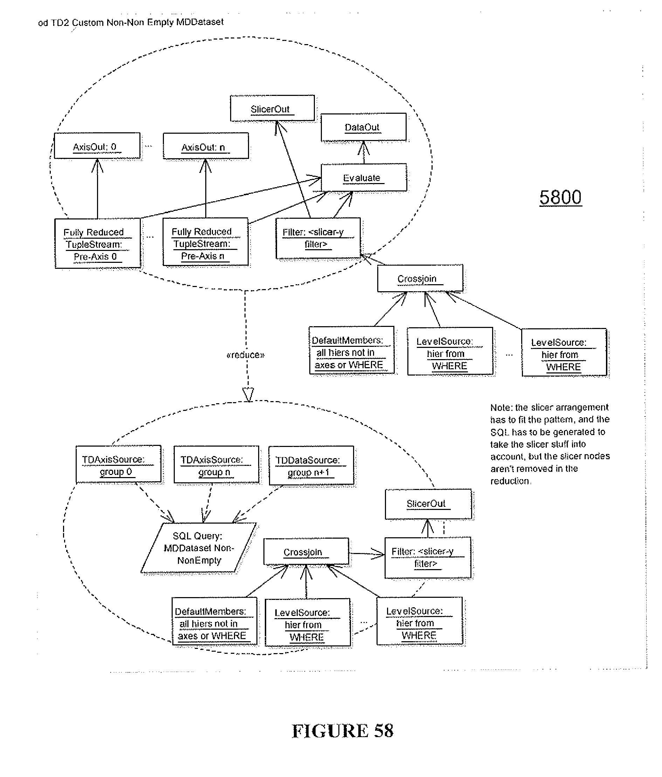

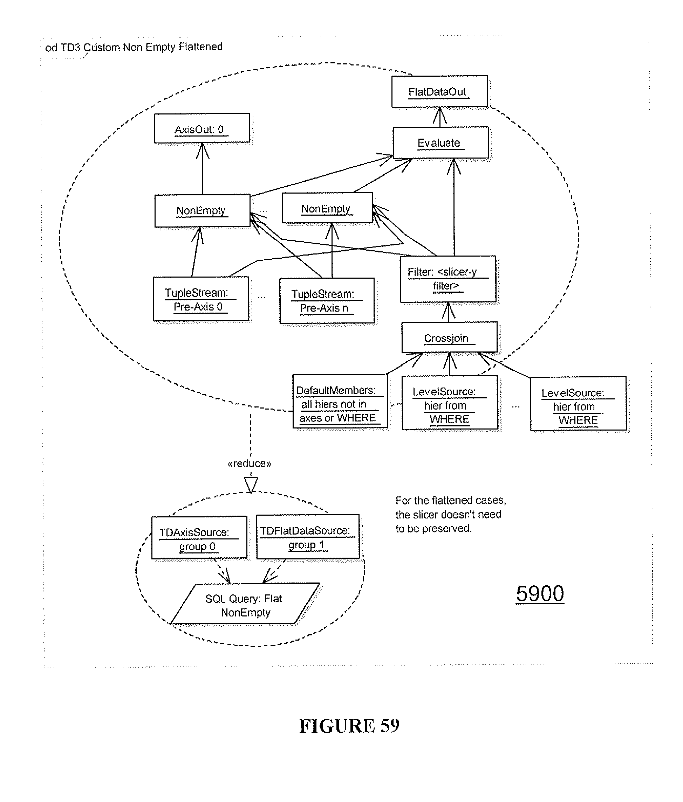

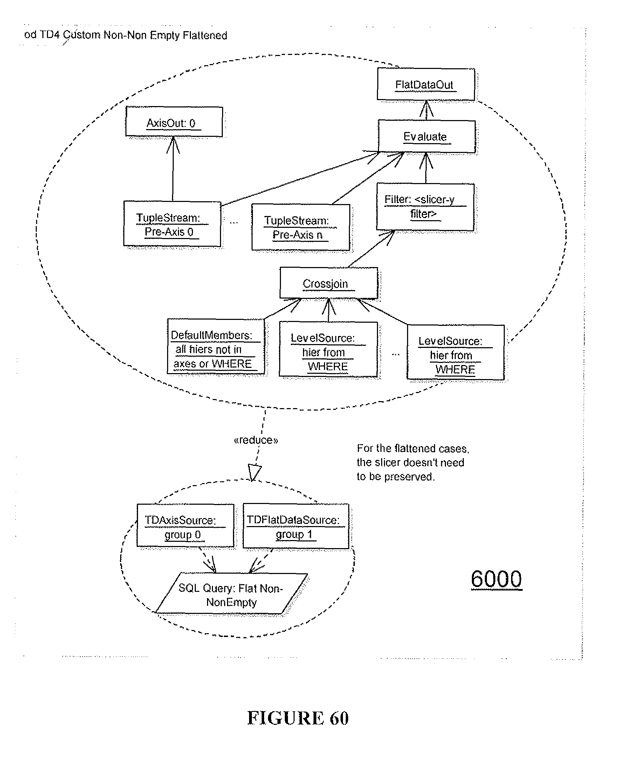

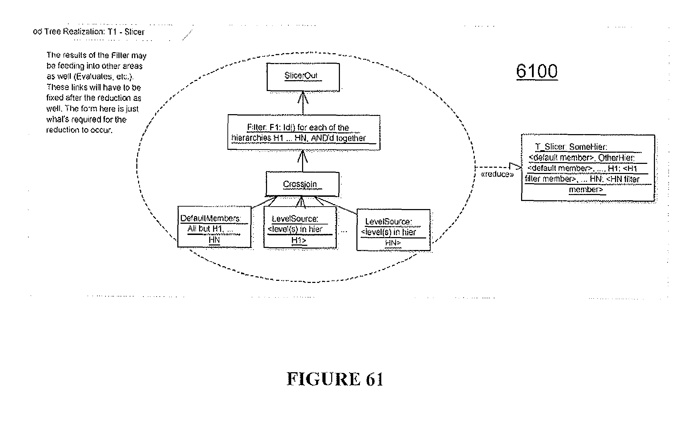

Figure 57 illustrates a custom reduction **5700** for a Non Empty MDDataset. Figure 58 illustrates a custom reduction **5800** for a Non-Non Empty MDDataset. Figure 59 illustrates a custom reduction **5900** for Non Empty Flattened. Figure 60 illustrates a custom reduction **6000** for Non-Non Empty Flattened. Figure 61 illustrates a custom reduction **6100** for a Slicer.

### Realizer

The realizer **1150** transforms the optimized execution plan into one or more SQL queries. The SQL queries may include commands that may not be strict queries. With respect to MDX as the input language there exist one or more basic structures in SQL that can be used to implement an MDX query. The realizer **1150** can be configured to employ special aspects of different SQL dialects.

The realizer **1150** uses four basic SQL structures including combinations of non-empty/non non-empty and MDDataset/flattened MDX queries. Elements of a particular optimized execution plan, may correspond with one or more of the four basic structures.

The four basic SQL structures share a number of common aspects. They all start with a WITH clause defining a SELECT called "EvaluatedData". EvaluatedData contains a star join between the pre-axes and the fact table. This is used in later parts of the query to extract the NON EMPTY axes, and/or when fetching data.

The realizer **1150** may employ a number of or all general aspects according to different embodiments of a code generation system as described herein. Further to these aspects, the realizer **1150** is configured to account for a number of aspects that are special to SQL as described in the following.

### Further conversion aspects regarding SQL

Measures may be treated just like another hierarchy in MDX. With respect to ROLAP, measures may be described by a fact table, as opposed to regular hierarchies, which may be described in dimension tables. According to an embodiment of the present invention measures hierarchies may be treated differently from hierarchies in SQL. For example, two different approaches may be employed for modeling multiple measures in ROLAP. A "wide" approach involving providing each measure in its own column or combination of columns in a fact table, or a "skinny" approach involving using two columns in a fact table: one for the measure values, and a "discriminator" column that identifies the measure that the value is actually for.

Wide measures may be processes similar to hierarchies in SQL in form of an additional "measures" table may be used that can provide certain functions of a dimension table including holding measure names and ids but does not join to the fact table. Modifications to the usual SQL generation scheme that are needed for handling a wide measure hierarchy may include pre-axis SQL / Filter + LevelSource for measures hierarchy by performing a SELECT the measure_name and measure_id columns out of the measures table, and a WHERE to get the specific measures required.

For the EvaluatedData definition the following applies: No key for the measures hierarchy is chosen in the inner data section; there is no ON condition for joining the measures hierarchy pre-axis to the inner data section. if the measures hierarchy is the only one in the axis, a CROSS JOIN may be used to encapsulate the assumption that if a row is present in the fact table, it should have values for ALL of the measures, in the wide measures case.

Furthermore all of the data columns that are covered by the required measures should be included by the "inner data section"; when SELECTing columns from the star join to create EvaluatedData, use a CASE WHEN on the measure_id column (from the axis with measures in it) to choose the right measure formula to populate the measure_value column.

For the Data mdxGroup when joining to EvaluatedData with an axis containing measures, measure_id may be used for the join condition. For extracting axis for data mdxGroup or axis mdxGroup measure_name may be used for ordering the measures hierarchy in the axis ordinal, which encapsulates the assumption that measures should be ordered alphabetically, and not by id. MSOLAP actually does the opposite (it puts Unit Sales before Store Sales). Furthermore both measure_id and measure_name out are needed, they may be included in the GROUP BY. Use of measure_id for JOINs and measure_name for ordering may be employed.

For skinny measures, it may not be assumed that all measure values are available for any combination of other dimensions in the fact table anymore, because these measure values are in separate rows. The discriminator column may include member name strings or, alternatively, measure_ids instead.

Pre-axis SQL / Filter + LevelSrc for measures hierarchy: Unless there is a measure that is not included in the fact table, in which case an extra table may be needed like in the wide case in order to know what the other measures are, SELECT DISTINCT out may be used with respect to the discriminator column to get the measures "members" directly out of the fact table. A WHERE clause may be used to pick out the literal set of measures that are desired. This may be employed to implement "missing members" mode for measures.

When a star join between the "pre-axis" and the inner data section is performed to get EvaluatedData, the join condition for the measures hierarchy should be equality between the discriminator column from the fact table and the measure_name from the pre-axis SQL.

### Execution Plan to SQL Conversion Methods

The code conversion system may be conceptualized hierarchically into high level and low level methods.

### High Level Methods

The high level methods may include the following:

A GenerateSql( execution plan root nodes ) method, which may either examine the nodes or check some metadata to classify the execution plan in terms of flattened/multidimensional and non empty/non-non empty; examine each of the non-slicer inputs for the top-level Evaluate. if the input is a NonEmpty, drop below it. drop below the Rank node used to implement Hierarchize, and save the node you find as the top nodes of the axis branches. also save the top slicer node. Furthermore, it may check the metadata decorating each of the axis branch nodes and the slicer node; save the location of the measures hierarchy for later; make a new query; call GenerateWith( query, axis roots ) to make the WITH that encloses the query; call GenerateEvaluatedData( WITH reference, axis roots, slicer root, measures hierarchy location) and retrieve the references to each of the incomplete pre-axis SELECTs. It may, moreover, for each of the axis roots: make a new Context holding the pre-axis SELECT for that axis; make an AxisNodeVisitor called axisNodeVisitor, call axisNodeVisitor.visit( context, axis root node ); call one of GenerateMDNonEmptySql / GenerateMDNonNonEmptySql / GenerateFlatNonEmptySql /GenerateFlatNonNonEmptySql(query, pre-axis SELECT references, axis roots, slicer root, measures hierarchy location) -add ORDER BY 1, <axis ordinal columns> to the query; and return the query.

A GenerateWith( query, axis roots ) method, which may add a new WITH clause to the query; set the name of the WITH clause to "EvaluatedData"; for each of the axes, add columns for all of the key properties that are required; add the "measure_value" column; and return the WITH clause.

A GenerateEvaluatedData( WITH reference, axis roots, slicer root, measures hierarchy location ) method, which may call GeneratelnnerDataSelect( axis roots, slicer root, measures hierarchy location ) to get the inner data SELECT; make a new SELECT for each pre-axis; JOIN together the inner data SELECT and all of the pre-axis SELECTs; make the SELECT clause that goes in the WITH to flesh out EvaluatedData; make the JOIN chain the FROM for the EvaluatedData SELECT; define the EvaluatedData SELECT's columns; and return references to each of the incomplete pre-axis SELECTs.

The EvaluatedData SELECT's columns may be characterized as follows: the SELECT columns should somehow be linked to the column names in the definition of EvaluatedData, which may require some sort of way of telling QueryBuilder about the linkage; add member-related columns needed for the WITH.keys can come from the inner data SELECT.other description columns (if required) can come from the pre-axis SELECTs; if the measures hierarchy comes from the slicer, then add the measure_value column, sourced from the inner data SELECT; otherwise, add a measure_value column which has a CASE /WHEN based on sourcing from different data columns from the inner data SELECT based on the measure_id.

A GeneratelnnerDataSelect( axis roots, slicer root, measures hierarchy location ) method, which may include make a new SELECT; add columns for the keys needed for each of the levels coming from each of the hierarchies of each of the axis nodes; only include columns shared among multiple keys once (ie, a column could be used for both a key for one level and a compound key for another level in the same hierarchy); use a CASE WHEN on GROUPING to return ∼ (or whatever the appropriate placeholder is) in the formula for columns that are involved in any non-top level key, for example: if the level 1 key is a compound key which includes the single column for the level 0 key, then the column formula for the shared column needs this CASE WHEN because it will get grouped up for some rows; add the FROM. The FROM may join each of the required dimension tables for the levels included from the axis hierarchies to the fact table, so no table needs to be joined for the measures hierarchy; and/or also join in dimension tables required to filter based on the slicer and again, no table needs to be joined for the measures hierarchy.

A GeneratelnnerDataSelect( axis roots, slicer root, measures hierarchy location ) method may further comprise add measure(s) columns: if the measures hierarchy is on one of the non-slicer axes, include the aggregated measure formulas (sourced from the fact table in the FROM) for each of the required measures, with the columns named by the measure names; or otherwise, include a "measure_value" column with the aggregated measure formula for the measure indicated by the slicer node's subtree (sourced from the fact table in the FROM).

A GeneratelnnerDataSelect( axis roots, slicer root, measures hierarchy location ) method may further comprise add a WHERE clause that checks the conditions extracted from the slicer subtree; add the GROUP BY clause: for each non-measures axis hierarchy include a GROUPING SETS that has a set for each of the required levels, including all ancestor keys. an "all" level corresponds to the "()" grouping set.

A GeneratelnnerDataSelect( axis roots, slicer root, measures hierarchy location ) method may further comprise add the HAVING clause. The HAVING doesn't need to restrict the levels, because we now use GROUPING SETs exclusively instead of ROLLUP, which can include extra levels; or include optimizations based on the axes in the HAVING clause, such as basically copying the HAVING for a DrillDownMember and so forth. A GeneratelnnerDataSelect( axis roots, slicer root, measures hierarchy location ) method may further comprise return the SELECT.

A GenerateMDNonEmptySql(query, pre-axis SELECT references, axis roots, slicer root, measures hierarchy location) method may comprise call GenerateMDNonEmptyData( query, axis roots ); add a UNION ALL to the query; AND for each of the axis roots: call GenerateNonEmptyAxis( query, axis root ) and/or add a UNION ALL to the query if there's another axis left.

A GenerateMDNonNonEmptySql(query, pre-axis SELECT references, axis roots, slicer root, measures hierarchy location) method may comprise call GenerateMDNonNonEmptyData( query, axis roots ); add a UNION ALL to the query; and for each of the axis roots: call GenerateNonNonEmptyAxis( query, axis root ) and/or add a UNION ALL to the query if there's another axis left.

A GenerateFlatNonEmptySql(query, pre-axis SELECT references, axis roots, slicer root, measures hierarchy location) may comprise call GenerateFlatNonEmptyData( query, axis roots ); add a UNION ALL to the query; call GenerateNonEmptyAxis( query, axis 0 root ).

A GenerateFlatNonNonEmptySql(query, pre-axis SELECT references, axis roots, slicer root, measures hierarchy location) may comprise call GenerateFlatNonNonEmptyData( query, axis roots ); add a UNION ALL to the query; call GenerateNonNonEmptyAxis( query, axis 0 root ).

A GenerateNonEmptyAxis( query, axis root ) medhod may comprise add a new SELECT to the query; add EvaluatedData as the FROM clause; add the first column to the SELECT: "<axis index> AS mdxGroup"; add the columns which are to be included for each of the higher axes as NULL cast to appropriate types; add the columns which are required for this axis (keys and any other description for cell/dimension properties), sourced from EvaluatedData; add the columns which are to be included for each of the lower axes as NULL Cast to appropriate types -add measure_value cast to NULL for the appropriate type; add ordinal columns for higher axes cast to NULL for the appropriate type; add the RANK() OVER ordinal column for this axis. The RANK() OVER may be characterized as follows: the formula should be ORDER BY <NULLIF(<col>, '∼') for each key column in hierarchy-in-axis and level-in-hierarchy order >; "<col>" can be used instead of "NULLIF(<col>, '∼')" for columns found exclusively in the level 0 key, which includes measure_name when dealing with the measures hierarchy.

The GenerateNonEmptyAxis( query, axis root ) medhod may further be characterized as follows: the measure_name column should be used for ordering the measures hierarchy; add ordinal columns for lower axes cast to NULL for the appropriate type; add GROUP BY on each of the non-rank columns returned by this SELECT in hierarchy-in-axis and level-in-hierarchy order.

A GenerateNonNonEmptyAxis( query, axis root ) method may comprise add the pre-axis SQL munged as described by the skeletons above which may use a new AxisNodeVisitor, or munge the SQL generated earlier for inside EvaluatedData.

A GenerateMDNonEmptyData( query, axis roots ) may comprise add a new SELECT to the query (the "data SELECT"); and for each axis: make a SELECT that extracts the key columns for that axis's hierarchies FROM EvaluatedData; include the axis ordinal as a RANK() OVER( <NULLIF(<col>, '∼') for each key column> ); "<col>" can be used instead of "NULLIF(<col>, '∼')" for columns which are used exclusively in a top level's key; GROUP BY on each of the key columns being SELECTed out, in hierarchy-in-axis and level-in-hierarchy order; JOIN this SELECT to either EvaluatedData (for the first axis) or the pre-exsting JOIN clump (for the rest) using an ON that checks for equality in all the key columns for this axis's hierarchies; set the data SELECT's FROM clause to be the star JOIN chain we just created; setup the data SELECT's columns: add the column: "<axis root count> AS mdxGroup"; add the columns which are to be included for each of the higher axes as NULL cast to appropriate types; add the columns which are required for this axis (keys and any other description for cell/dimension properties), sourced from EvaluatedData; add the columns which are to be included for each of the lower axes as NULL Cast to appropriate types; add measure_value sourced from EvaluatedData; and add the ordinal columns for each axis sourced from the appropriate axis SELECTs.

A GenerateMDNonNonEmptyData( query, axis roots ) method may add the MD non-non empty data section as described by the skeleton above, which may use new AxisNodeVisitors, or munge the SQL generated earlier for the pre-axes inside EvaluatedData.

A GenerateFlatNonEmptyData( query, axis roots ) method may add the flat non-empty data section as described by the skeleton above.

A GenerateFlatNonNonEmptyData( query, axis roots ) may add the flat non-non empty data section as described by the skeleton above, which may use new AxisNodeVisitors, or munge the SQL generated earlier for the pre-axes inside EvaluatedData.

An AxisNodeVisitor.visit( context, axis node ) may switch on the node type. nodes not listed here only show up in the top-level structure, or are dealt with as they occur underneath the nodes listed here and skipped over for recursion (like a Project coming into the right side of a SubQuery); in case Filter: if the filter condition is on a rank, translate the condition into a QUALIFY clause in the current SELECT from the context or otherwise, translate the filter condition into a HAVING clause in the current SELECT from the context, or recurse on the input node.

An AxisNodeVisitor.visit( context, axis node ) may, in case LevelSource: add a FROM clause to the context's current SELECT that fetches all of the appropriate dimension tables to get keys for the appropriate levels of the given hierarchy; we need keys for all of the levels down to the lowest we're getting from this hierarchy, because we need a full set of ancestor keys; map the (already existent) columns in the SELECT to the appropriate dimension table sources; add a GROUP BY clause that does a GROUPING SETS with a set for each required level. The set for a level may include the key columns for all of the higher levels, followed by the key columns for the desired level. If multiple keys share the same columns, they may not be repeated, for example if a compound key for level n+1 refers to the key column for level n, don't repeat it.

An AxisNodeVisitor.visit( context, axis node ) may further, in case SubQuery: if the operator is IN: make a SELECT for each side coming into the SubQuery; JOIN the SELECTs together on the columns indicated by the properties included from the left and the properties in the Project on the right; assign the JOIN to the FROM clause for the context's current SELECT; make a new context for each side, using the SELECTs that were JOINed together as the new current SELECTs; recurse on the left input and the node under the right input Project, using the new contexts. If the operator is NOT IN then this case may correspond to an Except(), and the second parameter to Except() is always a literal set, so this can be translated to a "WHERE <comparison column> NOT IN <literal set>" or a WHERE clause involving ANDs, ORs, and <>s if more than one column is involved; make a SELECT for the left side; add a WHERE clause to the current SELECT from the context which compares columns from the left SELECT to literal values. the column matching used for this comparison are indicated by the properties included in the SubQuery (for the left) and the properties included in the right Project (for the right); recurse on the left side, with the left SELECT used as the current SELECT in a new context.

The AxisNodeVisitor.visit( context, axis node ) may further, in case Crossjoin: make a new CROSS JOIN chain with new SELECTs for each of the input nodes; add the CROSS JOIN chain as the FROM clause for the current SELECT and makes sure the current SELECT sources its columns from the CROSS JOINed SELECTs; for each of the SELECTs for the inputs, make a new context with that as the current SELECT and recurse. In case Project: if the Project adds key columns for levels below those levels included in the input tuple stream: add the missing columns NULLed out appropriately to the current SELECT; if the Project drops some of the properties present in the input tuple stream below: make a new SELECT that will include all of the properties from below; add the new SELECT as the current SELECT's FROM clause; recurse, using the new SELECT as the current SELECT; else: recurse, using the current SELECT.

The AxisNodeVisitor.visit( context, axis node ) may further, in case Union: make a new UNION ALL chain of new SELECTs for each of the input nodes if any of the input nodes doesn't drop down to the lowest level of all the input nodes, it should have those extra key columns filled in with NULLs to make the UNION possible; add the UNION ALL chain as the FROM clause for the current SELECT and make sure the current SELECT sources its columns from the UNION ALLed SELECTs; for each of the new input SELECTs, make a new context with that as the current SELECT and recurse.

The AxisNodeVisitor.visit( context, axis node ) may further, in case Rank: add the "measure_value" column to the current SELECT (without a formula); add the rank column to the current SELECT and set its ORDER BY formula use a PARTITION BY if indicated by the Rank node, but ignore any partitioning on an "all" level; and recurse on the input node, using the same context.

The AxisNodeVisitor.visit( context, axis node ) may further, in case Evaluate: assuming that this Evaluate only has 2 input streams: a slicer and a stream including descriptions of members from a single hierarchy; make a new SELECT (the "left" SELECT) which will be filled in by recursion on the non-slicer input branch; make a new SELECT: FROM: the fact table JOINed with the dimension tables necessary to get keys for the levels provided in the non-slicer input branch; also JOINed with dimension tables necessary to get keys for the levels included in the slicer; WHERE: the translated slicer conditions. The AxisNodeVisitor.visit( context, axis node ) may further, LEFT JOIN the two SELECTs together on the level keys for the levels provided by the non-slicer input branch; set the LEFT JOIN to be the FROM for the current SELECT from the context; and recurse on non-slicer input branch using the left SELECT.

### Low Level Methods

This section includes portions of lower-level code fragments that may be used by the code generation system. The code includes methods for the translation to the second database query language. It describes how nodes may be processed, for example, how metadata decorations can be fetched and how contexts may be employed.

Node accessors for metadata decorations may include:

```
 node.getHiers() := the hierarchies for which the tuple stream hasmember
 descriptionsnode.getLevels() := the levels (associated with hierarchies) for which the tuple
 stream has member descriptions, in precedence ordernode.getLevels(H) := the levels for a
 given hierarchy H for which the tuple stream has member descriptions
 node.getAxis() := the axis that the node's tuple stream takes part in the construction of.
 special values are "slicer" for the slicer axis and "none" for top-level nodes.
 Tree-related: node.getInputNode() := the single node providing the input tuple stream
 to the node node.getInputNodes() := gets all of the input
 nodesnode.getInputNode(positionName) := the input node in the named position
 (like "left")
```

A higher-level method of the code generation system may include:

```
 GenerateSql(Node[] roots, Int axisCount):// Deciding on the type of dataif one of the roots is
 a DataOut: dataType = MDelse if one of the roots is a FlatDataOut: dataType = FLATeIse:
 ERROR
 dataNode := DataOut/FlatDataOut node
 // Deciding on the NON EMPTY status// ASSUMPTION: that if there's a
 NonEmptyEvaluate, then every axis has NON// EMPTYevalNode :=
 dataNode.getInputNode()if evalNode.type = NonEmptyEvaluate
 nonEmpty = Telse if evalNode.type = EvaluatenonEmpty = Felse: ERROR
 xjoin := evalNode.getInputNode()assert( xjoin.type = Crossjoin )
 xjoinInputs := xjoin.getInputNodes()
 for i = 0, xjoinInputs.length - lcurrInput := xjoinInputs[i]axis := currInput.getAxis()assert(
 axis != "none" )if (axis.type = "Slicer")
 slicer := currlnput else preAxis[axis] := currlnputend end
 // Build the outer structure// This includes dealing with the slicerif dataType = MD
 if nonEmpty GenerateMDNonEmptySql(preAxes, slicer) else
 GenerateMDEmptySql(preAxes, slicer) else if nonEmpty
 GenerateFlatNonEmptySql(preAxes, slicer) else GenerateFlatEmptySql(preAxes, slicer)
 CheckAndDropRanks( Node[] preAxes ):// Check for the relics of a "Hierarchize()" at the
top of each axis and// strip out the corresponding Rank.// It's a precondition of a plan getting
here that there was a// Hierachize() on the outside of each axis to start with,so just a rough//
 check is ok.
 for i = 0, preAxes.length -1
 currNode := preAxes[i] assert( currNode.type = "Rank" )assert(
 currNode.getParameter("property") = "TupleOrdinal" )
 // Drop the Rank. preAxes[i] = preAxes[i].getInputNode() end
 GenerateWithClause( Query q, Node[] preAxes, Node slicer):// Set-up the WITH clause
 skeleton.withClause := q.addWith()withClause.setName( "EvaluatedData" )for i =
 preAxis.length - 1, 0
 levs := preAxis[i].getLevels()
 for j = 0, levs.length - 1 withClause.addColumns(
 PropToColumnNames(levs[j].getKeyProperty) )
 end
 withClause.addColumn( "measure_value" )end
 return withClause
 GenerateMDNonEmptySql(Node[] preAxes, Node slicer):CheckAndDropRanks( preAxes )
 query := new QUERY
 // Get the WITH skeleton.withClause := GenerateWithClause( query, preAxes, slicer )
 // Make the data SELECT within EvaluatedData and link the// columns selected for
 EvaluatedData to it.withSelect := withClause.addSelect()dataSelect := new SELECT
 for i = preAxes.length - 1, 0axisHiers := preAxes[i].getHiers()for j = 0, axisHiers.length - 1
 currHier := axisHiers[j] hierLevs :=preAxes[i].getLevels(currHier) hierProps :=
 currHier.getMemberProps(hierLevs) hierCols := PropsToColumnNames( hierProps )
 dataSelect.addColumns( hierCols )
 withSelect.addColumns( dataSelect.getColumns() ) end
 end
 withSelect.addColumn(dataSelect.addColumn( "measure_value" ))
 // Make the JOIN chain for the EvaluatedData SELECT, including// starting on each of the
 axisSelects.join :=new JOINjoin.addInput( dataSelect )
 for i = 0, preAxes.length - 1 currNode := preAxes[i] currHiers := currNode.getHiers()
 currAxisSelect := new SELECT
 onColumns := []
 // Use a CASE/WHEN formula on GROUPING for the columns in// currAxisSelect, and get
 them from the appropriate SELECT.for j = 0, currHiers.length - 1
  currHier := currHiers[j]
 // Level-independent member description columns.
  memProps :=
 currHier.getNonKeyMemberProps(currNode.getLevels(currHier))memCols :=
 PropsToColumnNames( memProps ) currAxisSelect.addColumns( memCols )
 onColumns.pushBack( memCols )
 // Level columns.
 // Set the formulas.for k = 0, memCols.length - 1 end
 end
 join.addlnput( currAxisSelect ) join.add0n( EQUAL, hierCols ) axisSelects[i] :=
 currAxisSelect
 end
 fromClause :=withSelect.addFrom(join)
 // Fill in the dataSelectConstructMDNonEmptyDataSelect( dataSelect, preAxes, slicer)
 // Fill in the axisSelects
 for i = 0, preAxes.length - 1currAxisSelect := axisSelects[i]initialContext := new Context
 initialContext.setAxisReferenceNode( preAxes[i] )initialContext.setSelect( axisSelects[i]
 )initialContext.setSlicer( slicer )
 axisVisitor := new AxisVisitor axisVisitor.visit( initialContext, preAxes[i] )end
 ConstructMDNonEmptyDataSelect( Select dataSelect, Node[] preAxes, Nodeslicer ):// Add
 formulas for the columns
```

Processsing of the execution plan may be performed as follows. For example, an AxisVisitor can be used to visit each branch in the execution plan under the hierarchize-"Rank" node, to get the "pre-axis" SQL chunk for each axis. The current SELECT that's being worked on can be accessed from the Context that's passed into the visit()method.

```
 Context accessors: context.getAxisHiers() := the hierarchies in the current
 axiscontext.getAxisLevels() := the levels in the current axiscontext.getAxisLevels(h) := the
 levels from hierarchy h in the current
 axis context.getSelect() := get the current SELECTcontext.setSelect() := set the current
 SELECT
```

Hierarchies and levels may be obtained in the current branch by interrogating a Node as follows:

```
 AxisVisitor.visit(Context context, Node node): switch (node.type):
 case Project: // Projects are only found under Unions and SubQueries. The// logic for these
 nodes deal with processing the Projects and// recurse down to the node below the Project, so
 this Visitor should// never directly visit a Project node.ERROR
 case DefaultMembers: // DefaultMembers nodes are only found under the Crossjoin under//
 an Evaluate. The logic for processing Evaluate deals with them,// so this Visitor should never
 directly visit a DefaultMembers node.ERROR
 case Filter: if filtering on a rank:context.getSelect().addQualify()
 else: // If the SELECT already has a HAVING clause, addHaving()// automatically ANDs the
 new one incontext.getSelect().addHaving()
 visit( context, node.getInputNode() )
 case LevelSrc: // Assuming that the LevelSrc will be used to fill the current SELECT// I
 can't think of an allowable case where a LevelSrc prompts the// creation of a new SELECT.
 New SELECTs should only be created at// the end of an action that "finishes" a SELECT.
 // The SELECT should already have its columns specified from// above.nodeLevs =
 node.getParameter( "Levels" )
 context.getSelect().addFrom()
 // No recursion, as there's nothing below a LevelSrc
 case SubQuery: // Parameters leftCompareProps := node.getParameter( "LeftCompare"
 )leftCompareColumns := PropsToColumns( leftCompareProps )operator :=
 node.getParameter( "Operator" )
 // NodesleftNode := node.getInputNode( "LEFT" )projectNode := node.getInputNode(
 "RIGHT" ) assert (projectNode.type == Project) projectProps := projectNode.getParameter(
 "Properties" )projectColumns := PropsToColumns( projectProps ) rightNode :=
 projectNode.getInputNode()
  if operator = IN // We use a JOIN instead of a WHERE for SubQueries with IN because//
 the right side of one of these SubQueries can be arbitrary// complex, and WHERE IN SQL
 subqueries can't involve ordered// analytics. Also, WHERE IN can't use more than 1
 column. You have// to AND multiple WHERE INs together, which wouldn't work for us.
 // Make the FROM clause for the current SELECT
 // Initialize the SELECTs for the JOIN leftSelect := new SELECT leftSelect.addColumns(
 <columns to give full member descriptions of
 node.getHier() including keys for all the levels in
 node.getLevels(node.getHier())> ) rightSelect := new SELECT rightSelect.addColumns(
 projectColumns )
  // Make the JOIN join :=new JOIN join.setInputl( leftSelect ) join.setInput2(
 rightSelect ) join.setOn( EQUAL, leftCompareColumns, projectColumns )
 // Assign the JOIN to the FROMnode.addFrom( joinClause )
 // Make contexts for childrenleftContext := context.clone()leftContext.setSelect( leftSelect
 )rightContext := context.clone()rightContext.setSelect( rightSelect )
 // Recursevisit( leftContext, leftNode )visit( rightContext, rightNode )
 else
 // A SubQuery with a NOT IN is currently only generated for// Except(). In Excel, an
 Except() will always have literal sets// for the second parameter, with all members found on
 the same// level. Because of this, we can always translate a SubQuery/NOT// IN into a
 WHERE (either "WHERE ... NOT IN ..." or some series of// "<>"s and ANDs and ORs).
 This is sort of an optimization,// because it doesn't match our treatment of literal sets in//
 general.
 assert( rightNode.type = Filter )levelNode := rightNode.getInputNode()assert(
 levelNode.type = LevelSource )assert( levelNode.getParameter( "Levels" ).length = 1 )
 // Initialize the left SELECT.leftSelect := new SELECT leftSelect.addColumns( <columns to
 give full member descriptions of
 node.getHier() including keys for all the levels innode.getLevels(node.getHier())>
 )context.getSelect.addFrom( leftSelect )
 // If there is already a WHERE clause (maybe from a Filter// somehow?) then addWhere()
 should AND the new one onto the old.context.getSelect.addWhere()
 // Only recurse on the left.leftContext := context.clone()leftContext.setSelect( leftSelect
 )visit( leftContext, leftNode )
 end
 case Crossjoin: inputs :=node.getInputNodes()
 // this Visitor is supposed to be top-down, so I guess I can't visit// all the children and get
 their SELECTS and then cross join them// together. I have to cross join the SELECTs
 together first.
 // Note: The SELECT outside the Crossjoin should add any NULL'd out// columns that are
 needed.
 // Finish up the current SELECT.chain := a new CROSS JOIN chain made up of
 inputs.length new SELECTs context.getSelect().addFrom( chain )
 // Fill in the new SELECT for each input node.
 for i = 0, inputs.length - 1 childSelect := chain.getSelect(i) childNode := inputs[i]
 childHiers := childNode.getHiers() childSelect.addColumns()
 childContext := context.clone()childContext.setSelect( childSelect )visit( childContext,
 childNode )
 case Union: inputs := node.getInputNodes()
 // Finish up the current SELECT.chain := a new UNION ALL chain made up of inputs.length
 new SELECTs context.getSelect().addFrom( chain)
 // Fill in the new SELECT for each input node.
 for i = 0, inputs.length - 1 childSelect := chain.getSelect(i) childNode := inputs[i]
 childHiers := currNode.getHiers() for h in childHiers:
   parentLevs := node.getLevs(h)
   childLevs := childNode.getLevs(h)
 childSelect.addColumns( <columns for fully describing membersfrom h, including keys for
 each of the childLevs, and NULL keysfor each of the levels which are in parentLevs but not
 in
 childLevs > )
 childContext := context.clone() childContext.setSelect( childSelect ) visit( childContext,
 childNode )
 case Rank:
 // For now, we assume that the Rank is named in the SELECT but that// it doesn't have a
 formula yet.
 // Add a column for the value (no formula yet).valueCol := context.getSelect.addColumn(
 "measure_value" )
 // Get Rank parameters.rankProp := node.getParameter( "RankProperty" )rankCol :=
 PropToCol( rankProp )orderProps := node.getParameter( "OrderingProperties" )orderCols :=
 PropsToCols( orderProps )orderFlags := node.getParameter( "Flags" ) // ASC and DESCs
 and where
 // they fall in terms of the orderPropspartitionProps := node.getParameter(
 "PartitionProperties" )partitionCols := PropsToCols( partitionProps )
 // Construct the rank formula.rankColumn := context.getSelect.getColumn( rankCol
 )rankColumn.setFormula()
 // Recurse.visit( context, node.getInputNode() )
 case Evaluate:
 otherwise: // No other node types should be visited on the axis branches! ERROR
```

It is obvious that the foregoing embodiments of the invention are examples and can be varied in many ways. Such present or future variations are not to be regarded as a departure from the spirit and scope of the invention, and all such modifications as would be obvious to one skilled in the art are intended to be included within the scope of the following claims.

## Claims

1. A system for determining, based on a first query formed in accordance with a first database query language, one or more second queries formed in accordance with a second database query language, the system comprising:
a. a decoder for determining if the first query conforms with the first database query language and for providing a first representation of the first query if the first query conforms with the first database query language;
b. an expression optimizer operatively connected to the decoder for optimizing the first representation;
c. a plan builder operatively connected to the expression optimizer for converting the first representation into a second representation;
d. a plan optimizer operatively connected to the plan builder for optimizing the second representation; and
e. a code generation system operatively connected to the plan optimizer for generating the one or more second queries based on the second representation.

2. The system according to claim 1, wherein the first query language is formed for querying a multidimensional database.

3. The system according to claim 1, wherein the expression optimizer optimizes the first representation in accordance with one or more expression optimization rules.

4. The system according to claim 1, wherein the expression optimizer employs one or more state machines for optimizing the first representation.

5. The system according to claim 1, wherein the expression optimizer employs one or more explicit pattern matchers for optimizing the first representation.

6. The system according to claim 1, wherein the first representation is **characterized by** a performance metric and the expression optimizer changes the performance metric by optimizing the first representation.

7. The system according to claim 1, wherein the plan optimizer optimizes the second representation in accordance with one or more reductions.

8. A method for determining, based on a first query formed in accordance with a first database query language, one or more second queries formed in accordance with a second database query language, the method comprising:
a. determining if the first query conforms with the first database query language and for providing a first representation of the first query if the first query conforms with the first database query language;
b. optimizing the first representation;
c. converting the first representation into a second representation;
d. optimizing the second representation; and
e. generating the one or more second queries based on the second representation.

9. The method according to claim 8, wherein the first query language is formed for querying a multidimensional database.

10. The method according to claim 8, wherein optimizing the first representation is performed in accordance with one or more expression optimization rules.

11. The method according to claim 8, wherein optimizing the first representation comprises processing the first representation with one or more state machines.

12. The method according to claim 8, wherein optimizing the first representation comprises processing the first representation with one or more explicit pattern matchers.

13. The method according to claim 8, wherein the first representation is **characterized by** a performance metric and optimizing the first representation changes the performance metric.

14. The method according to claim 8, wherein optimizing the second representation is performed in accordance with one or more reductions.

15. A computer program product comprising a memory having embodied thereon statements and instructions for execution by a computer, thereby causing the computer to perform a method for forwarding data packets between a first network and a second network, the method comprising the steps of:
a. determining if the first query conforms with the first database query language and for providing a first representation of the first query if the first query conforms with the first database query language;
b. optimizing the first representation;
c. converting the first representation into a second representation;
d. optimizing the second representation; and
e. generating the one or more second queries based on the second representation.
